# EUROPEAN PATENT APPLICATION

(11) **EP 4 552 872 A1**
(43) Date of publication of application: **14.05.2025**
(21) Application number: 23848895.1
(22) Date of filing: 31.03.2023
(51) Int. Cl.: B60H 1/00, H01M 10/615, H01M 10/613, B60L 58/26, B60L 58/27

(54) **THERMAL MANAGEMENT ASSEMBLY, THERMAL MANAGEMENT SYSTEM, AND VEHICLE**

(30) Priority: 01.08.2022 CN 202210918704
(71) Applicant: Shenzhen Yinwang Intelligent Technologies Co., Ltd., Shenzhen, Guangdong 518129 (CN)
(72) Inventor: WU, Zhi, Shenzhen, Guangdong 518129 (CN); HU, Haomang, Shenzhen, Guangdong 518129 (CN)
(74) Representative: Pfenning, Meinig & Partner mbB
(86) International application number: PCT/CN2023/085669
(87) International publication number: WO 2024/027183

(57) **Abstract**

This application relates to the field of thermal management technologies, and discloses a thermal management assembly, a thermal management system, and a vehicle, to improve heat exchange efficiency of the thermal management system. The thermal management assembly includes a first valve body and a second valve body. The first valve body includes a first port, a second port, and a third port. The second valve body includes a first port, a second port, a third port, and a fourth port. The first port of the first valve body and the third port of the first valve body are separately connected to a heat exchange path of a battery. The second port of the first valve body is connected to the first port of the second valve body. The second port of the second valve body and the third port of the second valve body are separately connected to a first path of a cooler. The fourth port of the second valve body is connected to the third port of the first valve body.

## Description

### CROSS-REFERENCE TO RELATED APPLICATIONS

This application claims priority to Chinese Patent Application No. 202210918704.1, filed with the China National Intellectual Property Administration on August 1, 2022 and entitled "THERMAL MANAGEMENT ASSEMBLY, THERMAL MANAGEMENT SYSTEM, CONTROL METHOD, AND VEHICLE", which is incorporated herein by reference in its entirety.

### TECHNICAL FIELD

This application relates to the field of thermal management technologies, and in particular, to a thermal management assembly, a thermal management system, and a vehicle.

### BACKGROUND

In recent years, environmental pollution and energy shortage have accelerated development and utilization of green renewable energy. New energy vehicles have become a research focus in the automobile industry because of advantages such as low pollution, low noise, and high energy efficiency. A thermal management system of a new energy vehicle can be generally used to realize a cooling/heating function of a passenger compartment of an electric vehicle, and heat dissipation and waste heat recovery functions of a battery and a power system. The thermal management system of the vehicle has low heat exchange efficiency due to a scattered layout of a structure. Therefore, how to improve heat exchange efficiency of the thermal management system is an urgent technical problem to be resolved.

### SUMMARY

This application provides a thermal management assembly, a thermal management system, and a vehicle, to improve heat exchange efficiency of the thermal management system.

According to a first aspect, this application provides a thermal management assembly, and the thermal management assembly may include a first valve body and a second valve body. The first valve body includes a first port, a second port, and a third port. A valve core is disposed in the first valve body, and the valve core may be configured to: connect the first port of the first valve body to the second port of the first valve body and/or connect the first port of the first valve body to the third port of the first valve body. The second valve body includes a first port, a second port, a third port, and a fourth port. A first connecting member is disposed between the first port of the second valve body and the second port of the second valve body, and the first connecting member may be configured to connect the first port of the second valve body to the second port of the second valve body or disconnect the first port of the second valve body from the second port of the second valve body. A second connecting member is disposed between the third port of the second valve body and the fourth port of the second valve body, and the second connecting member may be configured to connect the third port of the second valve body to the fourth port of the second valve body or disconnect the third port of the second valve body from the fourth port of the second valve body. The first port of the first valve body and the third port of the first valve body are separately connected to a heat exchange path of a battery. The second port of the first valve body is connected to the first port of the second valve body. The second port of the second valve body and the third port of the second valve body are separately connected to a first path of a cooler. The fourth port of the second valve body is connected to the third port of the first valve body.

In this application, the first valve body and the second valve body are designed in an integrated manner, and a connection relationship between ports of the first valve body and the second valve body is properly arranged, to effectively resolve problems that mounting positions of components of the thermal management system that uses the thermal management assembly are scattered and a connection pipe is excessively long. This can further reduce a pressure loss of a heat exchange medium in a circulation flow process, and improve heat exchange efficiency of the thermal management system.

In some possible implementation solutions, the second valve body further includes a fifth port and a sixth port. A third connecting member is disposed between the fifth port of the second valve body and the third port of the second valve body, and the third connecting member is configured to connect the fifth port of the second valve body to the third port of the second valve body or disconnect the fifth port of the second valve body from the third port of the second valve body. A fourth connecting member is disposed between the sixth port of the second valve body and the second port of the second valve body, and the fourth connecting member is configured to connect the sixth port of the second valve body to the second port of the second valve body or disconnect the sixth port of the second valve body from the second port of the second valve body. The fifth port of the second valve body and the sixth port of the second valve body are separately connected to a first path assembly formed by connecting a heat exchange path of a radiator and a heat exchange path of an electric drive. Corresponding ports of the second valve body are connected, so that the first path of the cooler, the radiator, and the heat exchange path of the electric drive may be connected in a same loop, to dissipate heat of the electric drive by using the cooler and/or the radiator.

In some possible implementation solutions, a fifth connecting member is disposed between the fifth port of the second valve body and the sixth port of the second valve body, and the fifth connecting member is configured to connect the fifth port of the second valve body to the sixth port of the second valve body or disconnect the fifth port of the second valve body from the sixth port of the second valve body. Corresponding ports of the second valve body are connected, so that the radiator and the heat exchange path of the electric drive may be connected in a same loop, to dissipate the heat of the electric drive by using the radiator.

In some possible implementation solutions, the second valve body further includes a seventh port. A sixth connecting member is disposed between the seventh port of the second valve body and the third port of the second valve body, and the sixth connecting member is configured to connect the seventh port of the second valve body to the third port of the second valve body or disconnect the seventh port of the second valve body from the third port of the second valve body. The sixth port of the second valve body and the seventh port of the second valve body are separately connected to the heat exchange path of the electric drive. Corresponding ports of the second valve body are connected, so that the first path of the cooler and the heat exchange path of the electric drive may be connected in a same loop, to dissipate the heat of the electric drive by using the cooler.

In some possible implementation solutions, a seventh connecting member is disposed between the fourth port of the second valve body and the sixth port of the second valve body, and the seventh connecting member is configured to connect the fourth port of the second valve body to the sixth port of the second valve body or disconnect the fourth port of the second valve body from the sixth port of the second valve body. The sixth port of the second valve body and the fourth port of the second valve body are configured to connect the heat exchange path of the electric drive to the third port of the first valve body. Corresponding ports of the second valve body and the first valve body are connected, so that the radiator, the heat exchange path of the electric drive, and the heat exchange path of the battery may be connected in a same loop, to dissipate heat of the electric drive and the battery by using the radiator.

In some possible implementation solutions, the second valve body further includes an eighth port and a ninth port. An eighth connecting member is disposed between the eighth port of the second valve body and the fourth port of the second valve body, and the eighth connecting member is configured to connect the eighth port of the second valve body to the fourth port of the second valve body or disconnect the eighth port of the second valve body from the fourth port of the second valve body. A ninth connecting member is disposed between the ninth port of the second valve body and the first port of the second valve body, and the ninth connecting member is configured to connect the ninth port of the second valve body to the first port of the second valve body or disconnect the ninth port of the second valve body from the first port of the second valve body. The eighth port of the second valve body and the ninth port of the second valve body are separately connected to a first path of a first condenser. Corresponding ports of the second valve body and the first valve body are connected, so that the first path of the first condenser and the heat exchange path of the battery may be connected in a same loop, to heat the battery by using the first condenser.

In some possible implementation solutions, the first valve body may be disposed between an outlet of the heat exchange path of the battery and the first port of the second valve body. In this case, the first port of the first valve body is connected to the outlet of the heat exchange path of the battery, the second port of the first valve body is connected to the first port of the second valve body, and the third port of the first valve body is connected to an inlet of the heat exchange path of the battery.

Alternatively, in some other possible implementation solutions, the first valve body may be further disposed between an inlet of the heat exchange path of the battery and the fourth port of the second valve body. In this case, the first port of the first valve body is connected to the inlet of the heat exchange path of the battery, the second port of the first valve body is connected to the fourth port of the second valve body, and the third port of the first valve body is connected to an outlet of the heat exchange path of the battery.

In some possible implementation solutions, the first connecting member and the second connecting member are an integrated structure. This helps simplify an overall structure of the second valve body.

In some other possible implementation solutions, the first connecting member and the second connecting member may be independent of each other in structure. This helps simplify design difficulty of the second valve body.

In some possible implementation solutions, the first valve body may be an electric three-way valve, to control a connection relationship and a flow rate of ports of the first valve body.

Similarly, the second valve body may be an electric nine-way valve, to control a connection relationship between ports of the second valve body.

According to a second aspect, this application further provides a thermal management system. The thermal management system may include a compressor, a first condenser, a first expansion valve, a second expansion valve, a cooler, a first pump, a second pump, a third pump, and the thermal management assembly according to any one of the possible implementation solutions of the first aspect. The first condenser has a first path and a second path that are separated from each other. The cooler has a first path and a second path that are separated from each other. An inlet of the first path of the first condenser is connected to an outlet of a heat exchange path of a heater core, and an outlet of the first path of the first condenser is connected to an inlet of the heat exchange path of the heater core. An inlet of the second path of the first condenser is connected to an outlet of the compressor, and an outlet of the second path of the first condenser is separately connected to an inlet of the first expansion valve and an inlet of the second expansion valve. An outlet of the first expansion valve is connected to an inlet of the compressor through an evaporator, and an outlet of the second expansion valve is connected to the inlet of the compressor through the second path of the cooler. An inlet of the second path of the cooler is connected to a second port of a second valve body, and an outlet of the second path of the cooler is connected to a third port of the second valve body. The first pump is connected to the heat exchange path of the heater core. The second pump is connected to a heat exchange path of a battery. The third pump is connected to a heat exchange path of an electric drive.

According to the thermal management system provided in this application, the compressor, the first condenser, the cooler, various valves, and the like are highly integrated, to resolve problems that mounting positions of components in the thermal management system are scattered and a connection pipeline is excessively long. This can further reduce a pressure loss of a heat exchange medium in a circulation flow process, and improve heat exchange efficiency of the thermal management system.

According to a third aspect, this application further provides a thermal management system. The thermal management system may include a first condenser, a first expansion valve, a second expansion valve, a cooler, a first pump, a second pump, a third pump, and the thermal management assembly according to any one of the possible implementation solutions of the first aspect. The first condenser has a first path and a second path that are separated from each other. The cooler has a first path and a second path that are separated from each other. An outlet of the first path of the first cooler is connected to an inlet of a heat exchange path of a heater core, and an inlet of the first path of the first cooler is connected to an outlet of the heat exchange path of the heater core. An inlet of the second path of the first condenser is connected to an outlet of a compressor, and an outlet of the second path of the first condenser is separately connected to an inlet of the first expansion valve and an inlet of the second expansion valve. An outlet of the first expansion valve is connected to an inlet of the compressor through an evaporator, and an outlet of the second expansion valve is connected to the inlet of the compressor through the second path of the cooler. The first pump is connected to the heat exchange path of the heater core. The second pump is connected to a heat exchange path of a battery. The third pump is connected to a heat exchange path of an electric drive.

According to the thermal management system provided in this application, the first condenser, the cooler, various valves, and the like are highly integrated, to resolve problems that mounting positions of components in the thermal management system are scattered and a connection pipeline is excessively long. This can further reduce a pressure loss of a heat exchange medium in a circulation flow process, and improve heat exchange efficiency of the thermal management system. In addition, decoupling of the compressor from the foregoing components of the thermal management system is beneficial to reducing arrangement difficulty of the thermal management system and the compressor in the vehicle.

In some possible implementation solutions, the thermal management system may further include a heater. An inlet of the heater is connected to the outlet of the first path of the first condenser, and an outlet of the heater is connected to the inlet of the heat exchange path of the heater core. The heater may be configured to heat a heat exchange medium in a corresponding circulation loop, to realize a heating function of a passenger compartment.

In some possible implementation solutions, when the second valve body further includes an eighth port and a ninth port, the outlet of the heater is further connected to the eighth port of the second valve body, and the inlet of the first path of the first condenser is further connected to the ninth port of the second valve body. In this way, corresponding ports of the second valve body and a first valve body are connected, so that the heater and the heat exchange path of the battery may be connected in a same loop, to heat the battery by using the heater.

In some possible implementation solutions, the first pump may be disposed between the outlet of the heater and the inlet of the heat exchange path of the heater core, to drive a heat exchange medium to circulate through a loop in which the heater and the heater core are located. This improves heat exchange efficiency.

In some possible implementation solutions, the thermal management system further includes a first check valve. An inlet of the first check valve is connected to the outlet of the heat exchange path of the heater core, and an outlet of the first check valve is connected to the inlet of the first path of the first condenser, so that the outlet of the heat exchange path of the heater core and the inlet of the first path of the first condenser are unidirectionally connected.

In some possible implementation solutions, the second pump may be disposed between a third port of a first valve body and an inlet of the heat exchange path of the battery, to drive a heat exchange medium to circulate through each loop in which the heat exchange path of the battery is located. This improves heat exchange efficiency.

Alternatively, in some other possible implementation solutions, the second pump may be further disposed between an outlet of the heat exchange path of the battery and a first port of a first valve body, so that a heat exchange medium can be driven to circulate through each loop in which the heat exchange path of the battery is located.

In some possible implementation solutions, the thermal management system further includes a first switch valve, a second switch valve, a second check valve, and a third check valve. The first switch valve is disposed between the outlet of the compressor and the inlet of the second path of the first condenser. The second switch valve is disposed between the outlet of the compressor and an inlet of a heat exchange path of a second condenser. An inlet of the second check valve is connected to the outlet of the second path of the first condenser, and an outlet of the second check valve is separately connected to the inlet of the first expansion valve and the inlet of the second expansion valve. An inlet of the third check valve is connected to an outlet of the heat exchange path of the second condenser, and an outlet of the second check valve is separately connected to the inlet of the first expansion valve and the inlet of the second expansion valve. In this solution, the second condenser may be configured to heat the passenger compartment, so that thermal efficiency of heating the passenger compartment can be effectively improved, and the passenger compartment can be quickly heated, to further help improve ride experience of a user.

In some possible implementation solutions, the thermal management system further includes a first reservoir, and the first reservoir is disposed at the outlet of the second path of the first condenser. The first reservoir may be configured to store a redundant refrigerant in a second circulation loop or a third circulation loop, to meet requirements of the thermal management system for refrigerants in different operating modes, and improve operation reliability and stability of the thermal management system.

In other possible implementation solutions, the thermal management system further includes an accumulator, and the accumulator is disposed at the inlet of the compressor. The accumulator may be configured to separate a liquid refrigerant at the inlet of the compressor, to reduce content of a liquid refrigerant entering the compressor, and can also store an excess refrigerant to meet requirements of the thermal management system for refrigerants in different operating modes, so as to improve operation reliability and stability of the thermal management system.

According to a fourth aspect, this application further provides a thermal management assembly, and the thermal management assembly may include a first valve body and a second valve body. The first valve body includes a first port, a second port, and a third port. A valve core is disposed in the first valve body, and the valve core may be configured to: connect the first port of the first valve body to the second port of the first valve body and/or connect the first port of the first valve body to the third port of the first valve body. The second valve body includes a first port, a second port, a third port, and a fourth port. A first connecting member is disposed between the first port of the second valve body and the second port of the second valve body, and the first connecting member may be configured to connect the first port of the second valve body to the second port of the second valve body or disconnect the first port of the second valve body from the second port of the second valve body. A second connecting member is disposed between the third port of the second valve body and the fourth port of the second valve body, and the second connecting member may be configured to connect the third port of the second valve body to the fourth port of the second valve body or disconnect the third port of the second valve body from the fourth port of the second valve body. The first port of the first valve body is connected to an outlet of a heat exchange path of a heater core, the second port of the first valve body is connected to an inlet of a first path of a condenser, and the third port of the first valve body is connected to an inlet of a heat exchange path of a battery. The first port of the second valve body is connected to an inlet of the heat exchange path of the heater core, the second port of the second valve body is connected to an outlet of the first path of the condenser, the third port of the second valve body is connected to an outlet of the heat exchange path of the battery, and the fourth port of the second valve body is separately connected to the second port of the first valve body and the third port of the first valve body.

In this application, the first valve body and the second valve body are designed in an integrated manner, and a connection relationship between ports of the first valve body and the second valve body is properly arranged, to effectively resolve problems that mounting positions of components of the thermal management system that uses the thermal management assembly are scattered and a connection pipe is excessively long. This can further reduce a pressure loss of a heat exchange medium in a circulation flow process, and improve heat exchange efficiency of the thermal management system.

In some possible implementation solutions, the second valve body further includes a fifth port and a sixth port. A third connecting member is disposed between the fifth port of the second valve body and the third port of the second valve body, and the third connecting member is configured to connect the fifth port of the second valve body to the third port of the second valve body or disconnect the fifth port of the second valve body from the third port of the second valve body. A fourth connecting member is disposed between the sixth port of the second valve body and the fourth port of the second valve body, and the fourth connecting member is configured to connect the sixth port of the second valve body to the fourth port of the second valve body or disconnect the sixth port of the second valve body from the fourth port of the second valve body. The fifth port of the second valve body and the sixth port of the second valve body are separately connected to a first path of a cooler.

Corresponding ports of the second valve body are connected, so that the first path of the cooler and the heat exchange path of the battery may be connected in a same loop, to dissipate the heat of the battery by using the cooler.

In some possible implementation solutions, the second valve body further includes a seventh port and an eighth port. A fifth connecting member is disposed between the seventh port of the second valve body and the sixth port of the second valve body, and the fifth connecting member is configured to connect the seventh port of the second valve body to the sixth port of the second valve body or disconnect the seventh port of the second valve body from the sixth port of the second valve body. A sixth connecting member is disposed between the eighth port of the second valve body and the fifth port of the second valve body, and the sixth connecting member is configured to connect the eighth port of the second valve body to the fifth port of the second valve body or disconnect the eighth port of the second valve body from the fifth port of the second valve body. The seventh port of the second valve body and the eighth port of the second valve body are separately connected to a first path assembly formed by connecting a heat exchange path of a radiator and a heat exchange path of an electric drive.

Corresponding ports of the second valve body are connected, so that the first path of the cooler, the radiator, and the heat exchange path of the electric drive may be connected in a same loop, to dissipate heat of the electric drive by using the cooler and/or the radiator.

In some possible implementation solutions, a seventh connecting member is disposed between the seventh port of the second valve body and the eighth port of the second valve body, and the seventh connecting member is configured to connect the seventh port of the second valve body to the eighth port of the second valve body or disconnect the seventh port of the second valve body from the eighth port of the second valve body. Corresponding ports of the second valve body are connected, so that the radiator and the heat exchange path of the electric drive may be connected in a same loop, to dissipate the heat of the electric drive by using the radiator.

In some possible implementation solutions, a seventh connecting member is disposed between the fourth port of the second valve body and the eighth port of the second valve body, and the seventh connecting member is configured to connect the fourth port of the second valve body to the eighth port of the second valve body or disconnect the fourth port of the second valve body from the eighth port of the second valve body. The fourth port of the second valve body and the eighth port of the second valve body are configured to connect the heat exchange path of the electric drive to the heat exchange path of the battery. Corresponding ports of the second valve body are connected, so that the radiator, the heat exchange path of the electric drive, and the heat exchange path of the battery may be connected in a same loop, to dissipate heat of the electric drive and the battery by using the radiator.

In some possible implementation solutions, the second valve body further includes a ninth port. An eighth connecting member is disposed between the ninth port of the second valve body and the sixth port of the second valve body, and the eighth connecting member is configured to connect the ninth port of the second valve body to the sixth port of the second valve body or disconnect the ninth port of the second valve body from the sixth port of the second valve body. The ninth port of the second valve body and the eighth port of the second valve body are separately connected to the heat exchange path of the electric drive. Corresponding ports of the second valve body are connected, so that the first path of the cooler and the heat exchange path of the electric drive may be connected in a same loop, to dissipate the heat of the electric drive by using the cooler.

In some possible implementation solutions, the first connecting member and the second connecting member are an integrated structure. This helps simplify an overall structure of the second valve body.

In some other possible implementation solutions, the first connecting member and the second connecting member may be independent of each other in structure. This helps simplify design difficulty of the second valve body.

In some possible implementation solutions, the first valve body may be an electric three-way valve, to control a connection relationship and a flow rate of ports of the first valve body.

Similarly, the second valve body may be an electric nine-way valve, to control a connection relationship between ports of the second valve body.

According to a fifth aspect, this application further provides a thermal management system. The thermal management system may include a compressor, a condenser, a first expansion valve, a second expansion valve, a cooler, a first pump, a second pump, a third pump, and the thermal management assembly according to any one of the possible implementation solutions of the fourth aspect. The condenser has a first path and a second path that are separated from each other. The cooler has a first path and a second path that are separated from each other. An inlet of the first path of the condenser is connected to a second port of a first valve body, and an outlet of the first path of the condenser is connected to a second port of a second valve body. An inlet of the second path of the condenser is connected to an outlet of the compressor, and an outlet of the second path of the condenser is separately connected to an inlet of the first expansion valve and an inlet of the second expansion valve. An outlet of the first expansion valve is connected to an inlet of the compressor through an evaporator, and an outlet of the second expansion valve is connected to the inlet of the compressor through the second path of the cooler. The first pump is connected to a heat exchange path of a heater core. The second pump is connected to a heat exchange path of a battery. The third pump is connected to a heat exchange path of an electric drive.

According to the thermal management system provided in this application, the compressor, the condenser, the cooler, various valves, and the like are highly integrated, to resolve problems that mounting positions of components in the thermal management system are scattered and a connection pipeline is excessively long. This can further reduce a pressure loss of a heat exchange medium in a circulation flow process, and improve heat exchange efficiency of the thermal management system.

According to a sixth aspect, this application further provides a thermal management system. The thermal management system may include a condenser, a first expansion valve, a second expansion valve, a cooler, a first pump, a second pump, a third pump, and the thermal management assembly according to any one of the possible implementation solutions of the fourth aspect. The condenser has a first path and a second path that are separated from each other. The cooler has a first path and a second path that are separated from each other. An inlet of the first path of the condenser is connected to a second port of a first valve body, and an outlet of the first path of the condenser is connected to a second port of a second valve body. An inlet of the second path of the condenser is connected to an outlet of a compressor, and an outlet of the second path of the condenser is separately connected to an inlet of the first expansion valve and an inlet of the second expansion valve. An outlet of the first expansion valve is connected to an inlet of the compressor through an evaporator, and an outlet of the second expansion valve is connected to the inlet of the compressor through the second path of the cooler. The first pump is connected to a heat exchange path of a heater core. The second pump is connected to a heat exchange path of a battery. The third pump is connected to a heat exchange path of an electric drive.

According to the thermal management system provided in this application, the first condenser, the cooler, various valves, and the like are highly integrated, to resolve problems that mounting positions of components in the thermal management system are scattered and a connection pipeline is excessively long. This can further reduce a pressure loss of a heat exchange medium in a circulation flow process, and improve heat exchange efficiency of the thermal management system. In addition, decoupling of the compressor from the foregoing components of the thermal management system is beneficial to reducing arrangement difficulty of the thermal management system and the compressor in the vehicle.

In some possible implementation solutions, the thermal management system further includes a heater, an inlet of the heater is connected to a first port of the second valve body, and an outlet of the heater is connected to an inlet of the heat exchange path of the heater core. The heater may be configured to heat a heat exchange medium in a corresponding circulation loop, to realize a heating function of a passenger compartment.

In some possible implementation solutions, the thermal management system further includes a check valve. An inlet of the check valve is connected to a fourth port of the second valve body, and an outlet of the check valve is connected to the second port of the first valve body, so that the fourth port of the second valve body and the second port of the first valve body are unidirectionally connected.

In some possible implementation solutions, the first pump may be disposed between the first port of the second valve body and the inlet of the heat exchange path of the heater core, to drive a heat exchange medium to circulate through a loop in which the heater core is located. This improves heat exchange efficiency.

In some other possible implementation solutions, the first pump may be further disposed between the second port of the first valve body and the inlet of the first path of the condenser, so that a heat exchange medium can be driven to circulate through a loop in which the heater core is located.

In some possible implementation solutions, the second pump may be disposed between the fourth port of the second valve body and an inlet of the heat exchange path of the battery, to drive a heat exchange medium to circulate through each loop in which the heat exchange path of the battery is located. This improves heat exchange efficiency.

In other possible implementation solutions, the second pump may be further disposed between an outlet of the heat exchange path of the battery and a third port of the second valve body, so that a heat exchange medium can be driven to circulate through each loop in which the heat exchange path of the battery is located.

In some possible implementation solutions, when the second valve body includes a seventh port and an eighth port, the seventh port of the second valve body is connected to an inlet of a radiator, an inlet of the third pump is connected to an outlet of the radiator, an outlet of the third pump is connected to an inlet of the heat exchange path of the electric drive, and the eighth port of the second valve body is connected to an outlet of the heat exchange path of the electric drive. The third pump drives a heat exchange medium to circulate through a loop in which the heat exchange path of the electric drive is located. This improves heat exchange efficiency.

In some possible implementation solutions, when the second valve body includes a ninth port, the ninth port of the second valve body is connected to the inlet of the third pump. In this design, the third pump can exist in a loop formed by connecting the first path of the cooler, the radiator, and the heat exchange path of the electric drive, in a loop formed by connecting the first path of the cooler and the heat exchange path of the electric drive, and in a loop formed by connecting the radiator and the heat exchange path of the electric drive, so that the third pump can play a role in each loop, to improve utilization of the third pump.

In some possible implementation solutions, the thermal management system further includes a first reservoir, and the first reservoir is disposed at the outlet of the second path of the condenser. The first reservoir may be configured to store a redundant refrigerant in a second circulation loop or a third circulation loop, to meet requirements of the thermal management system for refrigerants in different operating modes, and improve operation reliability and stability of the thermal management system.

In other possible implementation solutions, the thermal management system further includes an accumulator, and the accumulator is disposed at the inlet of the compressor. The accumulator may be configured to separate a liquid refrigerant at the inlet of the compressor, to reduce content of a liquid refrigerant entering the compressor, and may also store an excess refrigerant to meet requirements of the thermal management system for refrigerants in different operating modes, so as to improve operation reliability and stability of the thermal management system.

According to a seventh aspect, this application further provides a vehicle. The vehicle may include a passenger compartment, a battery, an electric drive, and the thermal management system according to any one of the possible implementation solutions in the second aspect, the third aspect, the fifth aspect, and the sixth aspect. The thermal management system can be used to perform thermal management on the passenger compartment, the battery, and the electric drive, so that temperatures of controlled objects such as the passenger compartment, the battery, and the electric drive are within a target range, to improve ride comfort of a passenger and operation safety of the vehicle.

### BRIEF DESCRIPTION OF DRAWINGS

FIG. 1 is a diagram of a structure of a vehicle according to an embodiment of this application;
FIG. 2 is a diagram of a connection manner of a thermal management system in a vehicle according to an embodiment of this application;
FIG. 3 is a diagram of a structure of the thermal management system shown in FIG. 2;
FIG. 4 is a diagram of a structure of the thermal management system shown in FIG. 2;
FIG. 5 is a diagram in which the thermal management system shown in FIG. 2 operates in a simultaneous passenger compartment and battery cooling mode;
FIG. 6 is a diagram in which the thermal management system shown in FIG. 2 operates in a passenger compartment-only cooling mode;
FIG. 7 is a diagram in which the thermal management system shown in FIG. 2 operates in a battery-only cooling mode;
FIG. 8 is a diagram in which the thermal management system shown in FIG. 2 operates in a battery free cooling mode;
FIG. 9 is a diagram in which the thermal management system shown in FIG. 2 operates in an electric drive free cooling mode;
FIG. 10 is a diagram in which the thermal management system shown in FIG. 2 operates in a simultaneous passenger compartment and battery heating mode;
FIG. 11 is another diagram in which the thermal management system shown in FIG. 2 operates in a simultaneous passenger compartment and battery heating mode;
FIG. 12 is a diagram in which the thermal management system shown in FIG. 2 operates in a passenger compartment-only heating mode;
FIG. 13 is a diagram in which the thermal management system shown in FIG. 2 operates in a battery-only heating mode;
FIG. 14 is a diagram in which the thermal management system shown in FIG. 2 operates in a heating and dehumidification mode;
FIG. 15 is another diagram in which the thermal management system shown in FIG. 2 operates in a heating and dehumidification mode;
FIG. 16 is a diagram of a connection manner of another thermal management system in a vehicle according to an embodiment of this application;
FIG. 17 is a diagram of a structure of the thermal management system shown in FIG. 16;
FIG. 18 is a diagram of another structure of the thermal management system shown in FIG. 16;
FIG. 19 is a diagram of a connection manner of another thermal management system in a vehicle according to an embodiment of this application;
FIG. 20 is a diagram of a structure of the thermal management system shown in FIG. 19;
FIG. 21 is a diagram of another structure of the thermal management system shown in FIG. 19;
FIG. 22 is a diagram of a connection manner of another thermal management system in a vehicle according to an embodiment of this application;
FIG. 23 is a diagram of a structure of the thermal management system shown in FIG. 22;
FIG. 24 is a diagram of a structure of the thermal management system shown in FIG. 22;
FIG. 25 is a diagram in which the thermal management system shown in FIG. 22 operates in a simultaneous passenger compartment and battery cooling mode;
FIG. 26 is a diagram in which the thermal management system shown in FIG. 22 operates in a passenger compartment-only cooling mode;
FIG. 27 is a diagram in which the thermal management system shown in FIG. 22 operates in a battery-only cooling mode;
FIG. 28 is a diagram in which the thermal management system shown in FIG. 22 operates in a battery free cooling mode;
FIG. 29 is a diagram in which the thermal management system shown in FIG. 22 operates in an electric drive free cooling mode;
FIG. 30 is a diagram in which the thermal management system shown in FIG. 22 operates in a simultaneous passenger compartment and battery heating mode;
FIG. 31 is another diagram in which the thermal management system shown in FIG. 22 operates in a simultaneous passenger compartment and battery heating mode;
FIG. 32 is another diagram in which the thermal management system shown in FIG. 22 operates in a simultaneous passenger compartment and battery heating mode;
FIG. 33 is a diagram in which the thermal management system shown in FIG. 22 operates in a passenger compartment-only heating mode;
FIG. 34 is another diagram in which the thermal management system shown in FIG. 22 operates in a passenger compartment-only heating mode;
FIG. 35 is a diagram in which the thermal management system shown in FIG. 22 operates in a battery-only heating mode;
FIG. 36 is a diagram in which the thermal management system shown in FIG. 22 operates in a heating and dehumidification mode;
FIG. 37 is another diagram in which the thermal management system shown in FIG. 22 operates in a heating and dehumidification mode;
FIG. 38 is another diagram in which the thermal management system shown in FIG. 22 operates in a heating and dehumidification mode;
FIG. 39 is a diagram of a connection manner of another thermal management system in a vehicle according to an embodiment of this application;
FIG. 40 is a diagram of a structure of the thermal management system shown in FIG. 39;
FIG. 41 is a diagram of a structure of the thermal management system shown in FIG. 39;
FIG. 42 is a diagram in which the thermal management system shown in FIG. 39 operates in a simultaneous passenger compartment and battery cooling mode;
FIG. 43 is a diagram in which the thermal management system shown in FIG. 39 operates in a passenger compartment-only cooling mode;
FIG. 44 is a diagram in which the thermal management system shown in FIG. 39 operates in a battery-only cooling mode;
FIG. 45 is a diagram in which the thermal management system shown in FIG. 39 operates in a battery free cooling mode;
FIG. 46 is a diagram in which the thermal management system shown in FIG. 39 operates in an electric drive free cooling mode;
FIG. 47 is a diagram in which the thermal management system shown in FIG. 39 operates in a simultaneous passenger compartment and battery heating mode;
FIG. 48 is another diagram in which the thermal management system shown in FIG. 39 operates in a simultaneous passenger compartment and battery heating mode;
FIG. 49 is a diagram in which the thermal management system shown in FIG. 39 operates in a passenger compartment-only heating mode;
FIG. 50 is a diagram in which the thermal management system shown in FIG. 39 operates in a battery-only heating mode;
FIG. 51 is a diagram in which the thermal management system shown in FIG. 39 operates in a heating and dehumidification mode;
FIG. 52 is another diagram in which the thermal management system shown in FIG. 39 operates in a heating and dehumidification mode;
FIG. 53 is a diagram of a connection manner of another thermal management system in a vehicle according to an embodiment of this application;
FIG. 54 is a diagram of a structure of the thermal management system shown in FIG. 53; and
FIG. 55 is a diagram of another structure of the thermal management system shown in FIG. 53.

### DESCRIPTION OF EMBODIMENTS

To make the objectives, technical solutions, and advantages of this application clearer, the following further describes this application in detail with reference to the accompanying drawings. However, example embodiments can be implemented in a plurality of forms and should not be construed as being limited to embodiments described herein. Identical reference numerals in the accompanying drawings denote identical or similar structures. Therefore, repeated descriptions thereof are omitted. Expressions of locations and directions in embodiments of this application are described by using the accompanying drawings as an example. However, changes may also be made as required, and all the changes fall within the protection scope of this application. The accompanying drawings in embodiments of this application are merely used to illustrate relative position relationships and do not represent an actual scale.

It should be noted that specific details are set forth in the following descriptions for ease of understanding this application. However, this application can be implemented in a plurality of manners different from those described herein, and a person skilled in the art can perform similar promotion without departing from the connotation of this application. Therefore, this application is not limited to the following disclosed specific implementations.

In recent years, environmental pollution and energy shortage have accelerated development and utilization of green renewable energy. Development of new energy vehicles represented by electric vehicles and hybrid electric vehicles is an important measure for energy saving, emission reduction, and pollution prevention. In an electric vehicle, a fuel engine is replaced by a motor, so that zero emissions, low noise, zero pollution can be achieved, and a lot of increasingly depleted oil energy is saved. A hybrid electric vehicle is driven by a motor and a fuel engine, so that advantages of long range and good power of the fuel engine, and advantages of low noise and zero pollution of the motor can be played. With increasing maturity and development of a power battery technology, electric vehicles and hybrid electric vehicles will become a main trend of development of the automobile industry in the future.

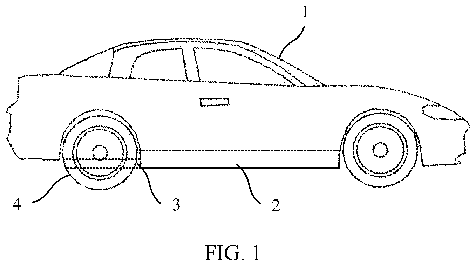

FIG. 1 is a diagram of a structure of a vehicle according to an embodiment of this application. Refer to FIG. 1. The vehicle includes but is not limited to an electric vehicle or a hybrid electric vehicle. The vehicle may include a passenger compartment 1, a battery 2, an electric drive 3, and a driving wheel 4. The battery 2 may be used as a power source of the vehicle to provide electric energy for the electric drive 3. The electric drive 3 is connected to the driving wheel 4, to convert the electric energy of the battery 2 into a driving force and transmit the driving force to the driving wheel 4, so as to drive the vehicle to travel.

In embodiments of this application, a thermal management system may be further provided in the vehicle. The thermal management system may be used to adjust temperatures of the passenger compartment 1, the battery 2, the electric drive 3, and the like of the vehicle, so that temperatures of controlled objects such as the passenger compartment 1, the battery 2, and the electric drive 3 are within a target range, to improve ride comfort of a passenger and operation safety of the vehicle.

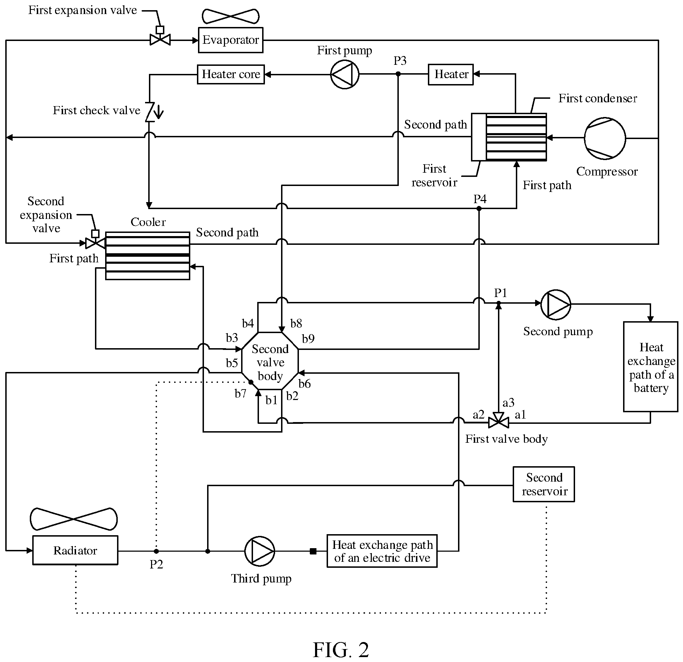

FIG. 2 is a diagram of a connection manner of a thermal management system 5 in a vehicle according to an embodiment of this application. Refer to FIG. 2. In embodiments of this application, an air supply duct may be disposed in a passenger compartment. An air inlet side of the air supply duct may be connected to an air inlet of the passenger compartment, and an air outlet side may be connected to an air outlet of the passenger compartment. An evaporator and a heater core may be arranged in the air supply duct. The evaporator and the heater core each have a heat exchange path. The thermal management system can cool, through the heat exchange path of the evaporator, air flowing over a surface of the evaporator, to implement cooling of the passenger compartment; and the thermal management system can heat, through the heat exchange path of the heater core, air flowing over a surface of the heater core, to heat the passenger compartment. In a specific implementation, the evaporator may be located upstream of the heater core. It may be understood that the evaporator is located on a side that is of the heater core and that is away from the air outlet of the passenger compartment.

In a possible implementation, the air inlet side of the air supply duct may be further connected to outside of the passenger compartment through an external air inlet, so that external fresh air can be supplied to the air supply duct. In a specific design, a first damper may be disposed at the external air inlet, a second damper may be disposed at the air inlet of the passenger compartment, and a third damper may be disposed at the air outlet of the passenger compartment. When the first damper and the third damper are opened and the second damper is closed, external fresh air can be supplied to the passenger compartment to realize a fresh air function. When the first damper is closed and the second damper and the third damper are opened, air circulation inside the passenger compartment can be achieved.

In addition, a flow-steering member may be disposed in the air supply duct, and the flow-steering member has at least a first flow-steering state and a second flow-steering state. When the flow-steering member is in the first flow-steering state, the flow-steering member can guide air flows at the air inlet side of the air supply duct to the air outlet of the passenger compartment by bypassing the heater core. When the flow-steering member is in the second flow-steering state, the flow-steering member can guide air flows in the air supply duct to sequentially pass through the evaporator, the heater core, and the air outlet of the passenger compartment. For example, the flow-steering member includes but is not limited to a structure like a bypass valve, a baffle plate, or an air deflector. Structures of the flow-steering member and the dampers are well-known and commonly used technologies in the art. Therefore, a specific arrangement form thereof is not described again.

Optionally, a fan may be disposed in the air supply duct, and the fan may be disposed on the air inlet side of the air supply duct, or may be disposed on the air outlet side of the air supply duct, to supply air in the air supply duct to the air outlet of the passenger compartment, so as to improve cooling or heating efficiency of the passenger compartment.

In a possible implementation, a battery and an electric drive each have a heat exchange path, and the thermal management system 5 can heat or dissipate heat of the battery through the heat exchange path of the battery, and can dissipate heat of the electric drive through the heat exchange path of the electric drive. In addition, the vehicle may be provided with a radiator. The radiator also has a heat exchange path, and the heat exchange path of the radiator is connected to the heat exchange path of the electric drive. The radiator may separately dissipate heat of the electric drive, or may operate with the thermal management system 5 to jointly dissipate heat of the electric drive. For example, the radiator may be an air-cooled radiator.

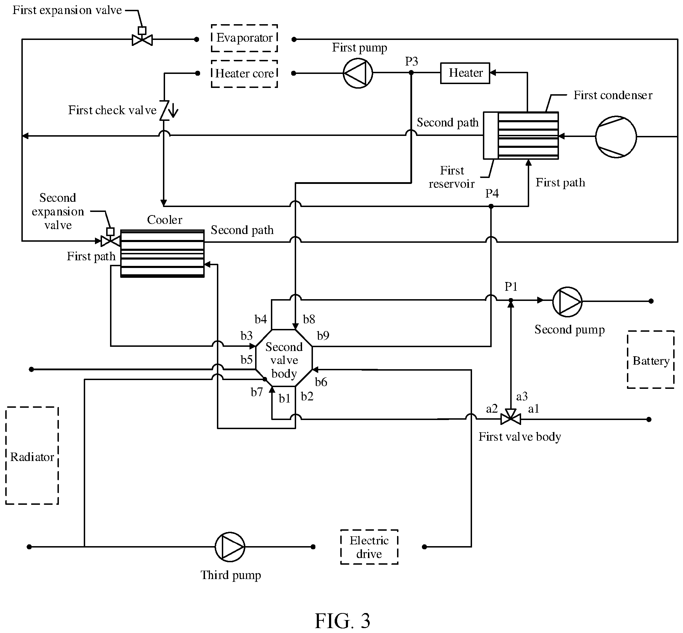

FIG. 3 is a diagram of a structure of the thermal management system 5 shown in FIG. 2. Refer to FIG. 2 and FIG. 3 together. In embodiments of this application, the thermal management system may include a thermal management assembly, a compressor, a first condenser, a first expansion valve, a second expansion valve, a cooler, a first pump, a second pump, and a third pump. The first condenser and the cooler each may be a dual-flow channel heat exchanger, for example, a plate heat exchanger. The first condenser may include a first path and a second path, and the first path of the first condenser and the second path of the first condenser are isolated from each other and can perform heat exchange. The cooler may also include a first path and a second path, and the first path of the cooler and the second path of the cooler are isolated from each other and can perform heat exchange. The thermal management assembly can be configured to connect components of the thermal management system, the evaporator, the heater core, the heat exchange path of the electric drive, the heat exchange path of the battery, the radiator, and the like in the vehicle, so that the thermal management system achieves a plurality of operating modes, and meets cooling or heating requirements of the passenger compartment, the battery, and the electric drive.

In some possible implementations, an outlet of the first path of the first condenser may be connected to an inlet of the heat exchange path of the heater core, and an outlet of the heat exchange path of the heater core is connected to the outlet of the first path of the first condenser. In this case, the first path of the first condenser and the heater core can be connected to form a first circulation loop. The first pump may be disposed in the first circulation loop, for example, may be disposed between the outlet of the first path of the first condenser and the inlet of the heat exchange path of the heater core, to drive a heat exchange medium to circulate through the first circulation loop. For example, the heat exchange medium in the first circulation loop may be a coolant, for example, a glycol aqueous solution.

An outlet of the compressor may be connected to an inlet of the second path of the first condenser, an outlet of the second path of the first condenser is connected to an inlet of the heat exchange path of the evaporator of the vehicle through the first expansion valve, and an outlet of the evaporator is connected to an inlet of the compressor. In this case, the compressor, the second path of the first condenser, the first expansion valve, and the evaporator may be sequentially connected to form a second circulation loop. In addition, the outlet of the second path of the first condenser may be connected to an inlet of the second path of the cooler through the second expansion valve, so that an outlet of the second path of the cooler may be connected to the inlet of the compressor. In this case, the compressor, the second path of the first condenser, the second expansion valve, and the second path of the cooler may be sequentially connected to form a third circulation loop. For example, a heat exchange medium in each of the second circulation loop and the third circulation loop may be a refrigerant, for example, R134a, R1234yf, or R744.

In some embodiments, the thermal management system may further include a first reservoir, and the first reservoir may be disposed at the outlet of the second path of the first condenser, and may be assembled with the first condenser into an integrated structure. The first reservoir may be configured to store a redundant refrigerant in the second circulation loop or the third circulation loop, to meet requirements of the thermal management system for refrigerants in different operating modes, so as to keep refrigerants/a refrigerant in the second circulation loop and/or the third circulation loop always at a better flow rate, and improve operation reliability and stability of the thermal management system.

Continue to refer to FIG. 2 and FIG. 3. The thermal management assembly may include a first valve body and a second valve body. The first valve body may include a first port a1, a second port a2, and a third port a3, and a valve core is disposed in the first valve body. The valve core may be configured to connect the first port a1 of the first valve body to the second port a2 of the first valve body, or connect the first port a1 of the first valve body to the third port a3 of the first valve body, or simultaneously connect the first port a1 of the first valve body, the second port a2 of the first valve body, and the third port a3 of the first valve body. The second valve body may include a first port b1, a second port b2, a third port b3, and a fourth port b4. A first connecting member is disposed between the first port b1 of the second valve body and the second port b2 of the second valve body, and the first connecting member may be configured to connect the first port b1 of the second valve body to the second port b2 of the second valve body or disconnect the first port b1 of the second valve body from the second port b2 of the second valve body. A second connecting member is disposed between the third port b3 of the second valve body and the fourth port b4 of the second valve body, and the second connecting member may be configured to connect the third port b3 of the second valve body to the fourth port b4 of the second valve body or disconnect the third port b3 of the second valve body from the fourth port b4 of the second valve body.

In embodiments of this application, the first port a1 of the first valve body and the third port a3 of the first valve body may be separately connected to the heat exchange path of the battery. The second port a2 of the first valve body may be connected to the first port b1 of the second valve body. The second port b2 of the second valve body and the third port b3 of the second valve body may be separately connected to the first path of the cooler. The fourth port b4 of the second valve body may be connected to the third port a3 of the first valve body.

For example, in some possible implementation solutions, the first valve body may be disposed between an outlet of the heat exchange path of the battery and the first port b1 of the second valve body. In this case, the first port a1 of the first valve body is connected to the outlet of the heat exchange path of the battery, the second port a2 of the first valve body is connected to the first port b1 of the second valve body, and the third port a3 of the first valve body is connected to an inlet of the heat exchange path of the battery. In this way, when the first port a1 of the first valve body is connected to the third port a3 of the first valve body, the inlet and the outlet of the heat exchange path of the battery may be connected through the first port a1 of the first valve body and the third port a3 of the first valve body to form a fourth circulation loop. The second pump may be disposed in the fourth circulation loop, for example, may be disposed between the third port a3 of the first valve body and the inlet of the heat exchange path of the battery, or may be disposed between the first port a1 of the first valve body and the outlet of the heat exchange path of the battery, to drive a heat exchange medium to circulate through the fourth circulation loop. For example, the heat exchange medium in the fourth circulation loop may be a coolant, for example, a glycol aqueous solution.

In addition, because the fourth port b4 of the second valve body can be connected to the third port a3 of the first valve body, the fourth port b4 of the second valve body and the inlet of the heat exchange path of the battery are also connected to each other. For example, the third port a3 of the first valve body and the fourth port b4 of the second valve body may meet at a node P1 through a pipeline, and the node P1 is connected to the inlet of the heat exchange path of the battery. The second port b2 of the second valve body may be connected to an inlet of the first path of the cooler, and the third port b3 of the second valve body may be connected to an outlet of the first path of the cooler.

When the first connecting member connects the first port b1 of the second valve body to the second port b2 of the second valve body, the second connecting member connects the third port b3 of the second valve body to the fourth port b4 of the second valve body, and the first port a1 of the first valve body is connected to the second port a2 of the first valve body, the first path of the cooler, the second pump, and the heat exchange path of the battery may be connected to form a fifth circulation loop. The second pump may drive a heat exchange medium to circulate through the fifth circulation loop. For example, the heat exchange medium in the fifth circulation loop may be a coolant, for example, a glycol aqueous solution.

Continue to refer to FIG. 2 and FIG. 3. The second valve body may further include a fifth port b5 and a sixth port b6. A third connecting member is disposed between the fifth port b5 of the second valve body and the third port b3 of the second valve body, and the third connecting member may be configured to connect the fifth port b5 of the second valve body to the third port b3 of the second valve body or disconnect the fifth port b5 of the second valve body from the third port b3 of the second valve body. A fourth connecting member may be disposed between the sixth port b6 of the second valve body and the second port b2 of the second valve body, and the fourth connecting member may be configured to connect the sixth port b6 of the second valve body to the second port b2 of the second valve body or disconnect the sixth port b6 of the second valve body from the second port b2 of the second valve body. In a specific implementation, the fifth port b5 of the second valve body and the sixth port b6 of the second valve body may be separately connected to a first path assembly. Herein, the first path assembly may include a heat exchange path of a radiator, a heat exchange path of an electric drive, and a pipeline connected between an outlet of the heat exchange path of the radiator and an inlet of the heat exchange path of the electric drive. For example, the fifth port b5 of the second valve body may be connected to an inlet of the heat exchange path of the radiator, and the sixth port b6 of the second valve body may be connected to an outlet of the heat exchange path of the electric drive.

When the third connecting member connects the fifth port b5 of the second valve body to the third port b3 of the second valve body, and the fourth connecting member connects the sixth port b6 of the second valve body to the second port b2 of the second valve body, the fifth port b5 of the second valve body may be connected to the outlet of the first path of the cooler through the third port b3 of the second valve body, and the sixth port b6 of the second valve body may be connected to the inlet of the first path of the cooler through the second port b2 of the second valve body. In this case, the first path of the cooler, the radiator, and the heat exchange path of the electric drive can be connected through corresponding ports of the second valve body to form a sixth circulation loop. The third pump may be disposed in the sixth circulation loop. For example, the third pump may be connected between the outlet of the heat exchange path of the radiator and the inlet of the heat exchange path of the electric drive, to drive a heat exchange medium to circulate through the sixth circulation loop. For example, the heat exchange medium in the sixth circulation loop may be a coolant, for example, a glycol aqueous solution.

In some possible embodiments, a fifth connecting member may be further disposed between the fifth port b5 of the second valve body and the sixth port b6 of the second valve body, and the fifth connecting member may be configured to connect the fifth port b5 of the second valve body to the sixth port b6 of the second valve body or disconnect the fifth port b5 of the second valve body from the sixth port b6 of the second valve body. It is easily understood that, when the fifth connecting member connects the fifth port b5 of the second valve body to the sixth port b6 of the second valve body, the inlet of the heat exchange path of the radiator may be directly connected to the outlet of the heat exchange path of the electric drive. In this case, the radiator, the third pump, and the heat exchange path of the electric drive can be connected through corresponding ports of the second valve body to form a seventh circulation loop, and the third pump may drive a heat exchange medium to circulate through the seventh circulation loop. For example, the heat exchange medium in the seventh circulation loop may be a coolant, for example, a glycol aqueous solution.

Continue to refer to FIG. 2 and FIG. 3. The second valve body may further include a seventh port b7. A sixth connecting member may be disposed between the seventh port b7 of the second valve body and the third port b3 of the second valve body, and the sixth connecting member may be configured to connect the seventh port b7 of the second valve body to the third port b3 of the second valve body or disconnect the seventh port b7 of the second valve body from the third port b3 of the second valve body. The sixth port b6 of the second valve body and the seventh port b7 of the second valve body may be separately connected to the heat exchange path of the electric drive. As described above, the sixth port b6 of the second valve body may be connected to the outlet of the heat exchange path of the electric drive, so that the seventh port b7 of the second valve body can be connected to the inlet of the heat exchange path of the electric drive.

When the sixth connecting member connects the third port b3 of the second valve body to the seventh port b7 of the second valve body, and the fourth connecting member connects the sixth port b6 of the second valve body to the second port b2 of the second valve body, the seventh port b7 of the second valve body may be connected to the outlet of the first path of the cooler through the third port b3 of the second valve body, and the sixth port b6 of the second valve body may be connected to the inlet of the first path of the cooler through the second port b2 of the second valve body. In this case, the first path of the cooler and the heat exchange path of the electric drive may be connected to form an eighth circulation loop. For example, a heat exchange medium in the eighth circulation loop may be a coolant, for example, a glycol aqueous solution.

In some possible implementation solutions, an inlet of the third pump may be connected to the outlet of the heat exchange path of the radiator and the seventh port b7 of the second valve body. In other words, the third pump may also be located in the eighth circulation loop, to drive the heat exchange medium to circulate through the eighth circulation loop. For example, the seventh port b7 of the second valve body and the outlet of the heat exchange path of the radiator may meet at a node P2 through a pipeline, the node P2 is connected to the inlet of the heat exchange path of the electric drive, and the third pump is disposed between the node P2 and the heat exchange path of the electric drive.

In some possible embodiments, a seventh connecting member may be further disposed between the fourth port b4 of the second valve body and the sixth port b6 of the second valve body, and the seventh connecting member may be configured to connect the fourth port b4 of the second valve body to the sixth port b6 of the second valve body or disconnect the fourth port b4 of the second valve body from the sixth port b6 of the second valve body. Based on a connection relationship between the sixth port b6 of the second valve body and the heat exchange path of the electric drive, and a connection relationship between the fourth port b4 of the second valve body and the third port b3 of the first valve body, when the seventh connecting member connects the sixth port b6 of the second valve body to the fourth port b4 of the second valve body, the heat exchange path of the electric drive may be connected to the third port a3 of the first valve body through the sixth port b6 of the second valve body and the fourth port b4 of the second valve body, and further the heat exchange path of the electric drive may be connected to the heat exchange path of the battery.

On the premise that the seventh connecting member connects the sixth port b6 of the second valve body to the fourth port b4 of the second valve body, when the first connecting member connects the first port b1 of the second valve body to the second port b2 of the second valve body, and the third connecting member connects the fifth port b5 of the second valve body to the third port b3 of the second valve body, the heat exchange path of the radiator, the heat exchange path of the electric drive, the heat exchange path of the battery, and the first path of the cooler can be connected through corresponding ports of the second valve body to form a ninth circulation loop. It can be seen that both the second pump and the third pump are located in the ninth circulation loop. When the ninth circulation loop operates, both the second pump and the third pump may be in an on state. The second pump and the third pump jointly drive a heat exchange medium to circulate through the ninth circulation loop, or one of the second pump and the third pump may be turned on to drive a heat exchange medium to circulate through the ninth circulation loop. Specific settings may be made based on a heat dissipation requirement of the electric drive and the battery.

Continue to refer to FIG. 2 and FIG. 3. The second valve body may further include an eighth port b8 and a ninth port b9. An eighth connecting member is disposed between the eighth port b8 of the second valve body and the fourth port b4 of the second valve body, and the eighth connecting member may be configured to connect the eighth port b8 of the second valve body to the fourth port b4 of the second valve body or disconnect the eighth port b8 of the second valve body from the fourth port b4 of the second valve body. A ninth connecting member is disposed between the ninth port b9 of the second valve body and the first port b1 of the second valve body, and the ninth connecting member may be configured to connect the ninth port b9 of the second valve body to the first port b1 of the second valve body or disconnect the ninth port b9 of the second valve body from the first port b1 of the second valve body. In a specific implementation, the eighth port b8 of the second valve body and the ninth port b9 of the second valve body may be separately connected to the first path of the first condenser. For example, the eighth port b8 of the second valve body may be connected to the outlet of the first path of the first condenser, and the ninth port b9 of the second valve body may be connected to an inlet of the first path of the first condenser.

In addition, as described above, the outlet of the first path of the first condenser and the inlet of the heat exchange path of the heater core are also connected to each other. In a specific design, the inlet of the heater core and the eighth port b8 of the second valve body may meet at a node P3 through a pipeline. The node P3 is connected to an outlet of the first path of the first condenser. For example, the node P3 may be located between the outlet of the first path of the first condenser and an inlet of the first pump. Similarly, because the inlet of the first path of the first condenser and the outlet of the heater core are also connected to each other, in a specific design, the outlet of the heater core and the ninth port b9 of the second valve body may meet at a node P4 through a pipeline, and the node P4 is connected to the inlet of the first path of the first condenser.

When the eighth connecting member connects the eighth port b8 of the second valve body to the fourth port b4 of the second valve body, and the ninth connecting member connects the ninth port b9 of the second valve body to the first port b1 of the second valve body, based on a connection relationship between the fourth port b4 of the second valve body and the third port a3 of the first valve body, and a connection relationship between the first port b1 of the second valve body and the second port a2 of the first valve body, the outlet of the first path of the first condenser may be connected to the third port a3 of the first valve body, and the inlet of the first condenser may be connected to the second port a2 of the first valve body. Further, when the first port a1 of the first valve body is connected to the second port a2 of the first valve body, the outlet of the first path of the first condenser may be connected to the inlet of the heat exchange path of the battery through the node P1, and the inlet of the first path of the first condenser may be connected to the outlet of the heat exchange path of the battery. In this case, the first path of the first condenser, the second pump, and the heat exchange path of the battery may be connected to form a tenth circulation loop, and the second pump may drive a heat exchange medium to circulate through the tenth circulation loop. For example, the heat exchange medium in the tenth circulation loop may be a coolant, for example, a glycol aqueous solution.

In order to prevent the coolant in the tenth circulation loop from flowing reversely to the heater core at the node P4, a first check valve may be further disposed between the outlet of the heat exchange path of the heater core and the node P4, an inlet of the first check valve is connected to the outlet of the heat exchange path of the heater core, and an outlet of the first check valve is connected to the node P4. It may be understood that the outlet of the first check valve is connected to the inlet of the first path of the first condenser, to unidirectionally connect the outlet of the heat exchange path of the heater core to the inlet of the first path of the first condenser.

In addition, in some possible implementation solutions, the thermal management system may further include a heater. The heater may be connected between the outlet of the first path of the first condenser and the node P3. In this case, an inlet of the heater may be connected to the outlet of the first path of the first condenser, and an outlet of the heater may be separately connected to the inlet of the heater core and the eighth port of the second valve body. It is easily understood that the heater exists in both the first circulation loop and the tenth circulation loop.

Continue to refer to FIG. 2 and FIG. 3. In some possible implementation solutions, a tenth connecting member is disposed between the fifth port b5 of the second valve body and the eighth port b8 of the second valve body, and the tenth connecting member may be configured to connect the fifth port b5 of the second valve body to the eighth port b8 of the second valve body or disconnect the fifth port b5 of the second valve body from the eighth port b8 of the second valve body. An eleventh connecting member is disposed between the sixth port b6 of the second valve body and the ninth port b9 of the second valve body, and the eleventh connecting member may be configured to connect the sixth port b6 of the second valve body to the ninth port b9 of the second valve body or disconnect the sixth port b6 of the second valve body from the ninth port b9 of the second valve body. A twelfth connecting member is disposed between the seventh port b7 of the second valve body and the eighth port b8 of the second valve body, and the twelfth connecting member may be configured to connect the seventh port b7 of the second valve body to the eighth port b8 of the second valve body or disconnect the seventh port b7 of the second valve body from the eighth port b8 of the second valve body.

When the tenth connecting member connects the fifth port b5 of the second valve body to the eighth port b8 of the second valve body, and the eleventh connecting member connects the sixth port b6 of the second valve body to the ninth port b9 of the second valve body, the node P3 is connected to the inlet of the heat exchange path of the radiator through the eighth port b8 of the second valve body and the fifth port b5 of the second valve body, and the node P4 is connected to the outlet of the heat exchange path of the electric drive through the ninth port b9 of the second valve body and the sixth port b6 of the second valve body. In this case, the first path of the first condenser, the heater, the radiator, the third pump, and the heat exchange path of the electric drive can be connected through corresponding ports of the second valve body to form an eleventh circulation loop, and the third pump may drive a heat exchange medium to circulate through the eleventh circulation loop. For example, the heat exchange medium in the eleventh circulation loop may be a coolant, for example, a glycol aqueous solution.

In some possible implementation solutions, a second reservoir may be further disposed in the vehicle, and the second reservoir may be connected to any one of the first circulation loop, the fourth circulation loop, the fifth circulation loop, the sixth circulation loop, the seventh circulation loop, the eighth circulation loop, the ninth circulation loop, the tenth circulation loop, and the eleventh circulation loop through a pipeline, to store excess a coolant in each loop or supplement a coolant for each loop, so as to meet requirements of the thermal management system for coolants in different operating modes, keep the coolant in each loop always at a better flow rate, and improve operation reliability and stability of the thermal management system.

For example, as shown in FIG. 2, a liquid outlet of the second reservoir may be connected to a pipeline between the heat exchange path of the radiator and the inlet of the third pump, or may be directly connected to the heat exchange path of the radiator.

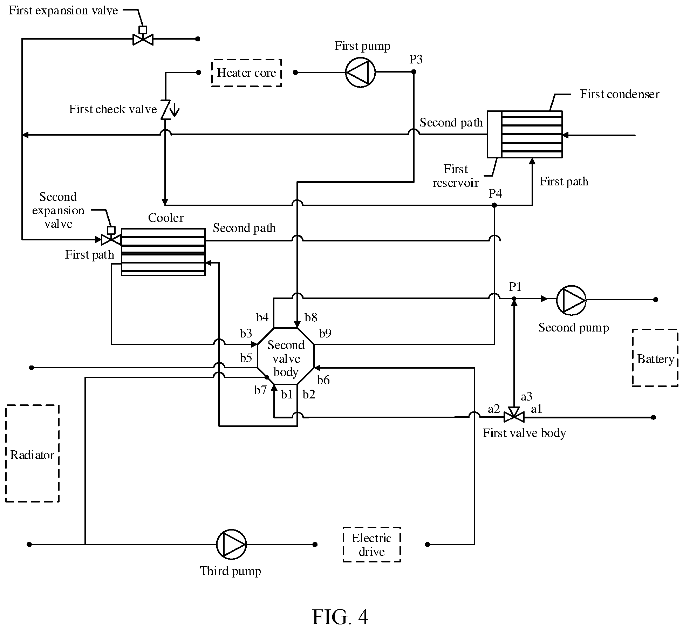

FIG. 4 is a diagram of a structure of the thermal management system 5 shown in FIG. 2. Refer to FIG. 4. In this embodiment, the thermal management system may include a thermal management assembly, a first condenser, a first expansion valve, a second expansion valve, a cooler, a first pump, a second pump, and a third pump. Structures and arrangement manners of the foregoing components are roughly the same as those in the foregoing embodiments. Connection states of ports of the first valve body and the second valve body may also be set with reference to the foregoing embodiment. Details of these components are not described herein again. Different from the foregoing embodiment, in this embodiment of this application, the thermal management system does not include a compressor, that is, the compressor may be disposed independently of the foregoing components. Decoupling of the compressor from the foregoing components of the thermal management system is beneficial to reducing arrangement difficulty of the thermal management system and the compressor in the vehicle.

The embodiments shown in FIG. 2 to FIG. 4 describe a connection relationship between ports of the first valve body and the second valve body in the thermal management system. According to a quantity of ports of the first valve body and the second valve body, in a specific implementation, the first valve body may be a three-way valve, and the second valve body may be a nine-way valve. Further, the first valve body may be an electric three-way valve, to control a connection relationship and a flow rate of the ports of the first valve body. Similarly, the second valve body may be an electric nine-way valve, to control a connection relationship between the ports of the second valve body. In addition, in some possible implementation solutions, connecting members of the second valve body may be an integrated structure or may be independent of each other in structure; or a plurality of connecting members may be divided into several groups, and one or more connecting members in each group are an integrated structure.

In embodiments of this application, connection states of the ports of the first valve body and the second valve body are adjusted, so that one or more circulation loops of the thermal management system can be connected and the thermal management system can achieve a plurality of operating modes. For example, these operating modes include, but are not limited to, a simultaneous passenger compartment and battery cooling mode, a passenger compartment-only cooling mode, a battery-only cooling mode, a battery free cooling mode, an electric drive free cooling mode, a simultaneous passenger compartment and battery heating mode, a passenger compartment-only heating mode, a battery-only heating mode, and a heating and dehumidification mode. The following describes an operating process of each of the operating modes in detail.

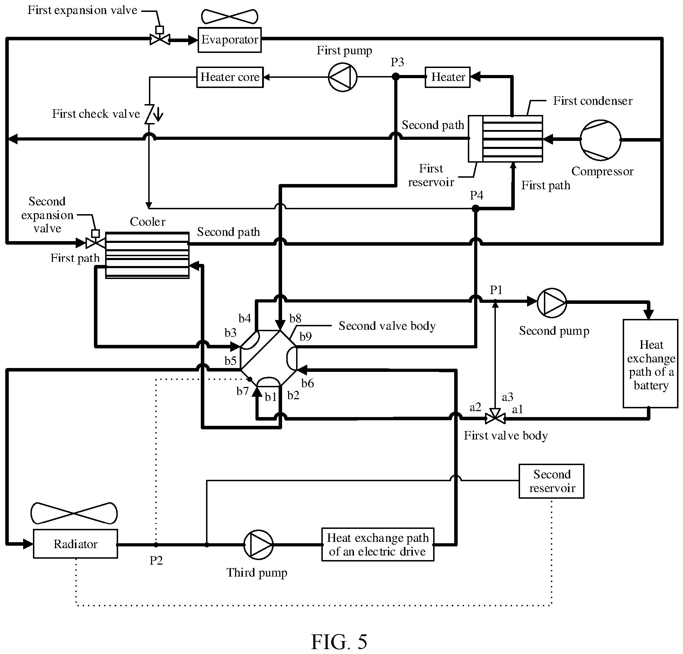

FIG. 5 is a diagram in which the thermal management system 5 shown in FIG. 2 operates in the simultaneous passenger compartment and battery cooling mode. Refer to FIG. 5. The simultaneous passenger compartment and battery cooling mode is applicable to a scenario in which the passenger compartment and the battery need to be cooled simultaneously under a high temperature condition in summer. In this mode, the compressor, the first expansion valve, the second expansion valve, the second pump, and the third pump are turned on; and the first pump and the heater are turned off. When the first port a1 of the first valve body is connected to the second port a2 of the first valve body, the first connecting member of the second valve body connects the first port b1 of the second valve body to the second port b2 of the second valve body, the second connecting member connects the third port b3 of the second valve body to the fourth port b4 of the second valve body, the tenth connecting member connects the fifth port b5 of the second valve body to the eighth port b8 of the second valve body, and the eleventh connecting member connects the sixth port b6 of the second valve body to the ninth port b9 of the second valve body, the second circulation loop (a loop formed by connecting the compressor, the second path of the first condenser, the first expansion valve, and the evaporator), the third circulation loop (a loop formed by connecting the compressor, the second path of the first condenser, the second expansion valve, and the second path of the cooler), the fifth circulation loop (a loop formed by connecting the first path of the cooler, the second pump, and the heat exchange path of the battery), and the eleventh circulation loop (a loop formed by connecting the first path of the first condenser, the heater, the radiator, the third pump, and the heat exchange path of the electric drive) operate simultaneously.

In the second circulation loop, a high-temperature and high-pressure gaseous refrigerant output by the compressor enters the second path of the first condenser, and condenses and exchanges heat with a coolant in the first path of the first condenser to become a low-temperature and high-pressure liquid refrigerant. The low-temperature and high-pressure liquid refrigerant is throttled and expanded by the first expansion valve, and then is rapidly cooled to become a low-temperature and low-pressure liquid refrigerant. The low-temperature and low-pressure liquid refrigerant enters the heat exchange path of the evaporator for evaporation and heat exchange with air in an air supply duct of the passenger compartment, and then becomes a high-temperature and low-pressure gaseous refrigerant. The high-temperature and low-pressure gaseous refrigerant returns to the compressor. In this way, a cycle is completed. In addition, after the air in the air supply duct cools down by exchanging heat with a low-temperature refrigerant in the heat exchange path of the evaporator, the air is supplied to the passenger compartment through the air outlet of the passenger compartment to achieve a cooling effect of the passenger compartment.

In the third circulation loop, a high-temperature and high-pressure gaseous refrigerant output by the compressor enters the second path of the first condenser, and condenses and exchanges heat with a coolant in the first path of the first condenser to become a low-temperature and high-pressure liquid refrigerant. The low-temperature and high-pressure liquid refrigerant is throttled and expanded by the second expansion valve, and then is rapidly cooled to become a low-temperature and low-pressure liquid refrigerant. The low-temperature and low-pressure liquid refrigerant enters the second path of the cooler for evaporation and heat exchange with a coolant in the first path of the cooler, and then becomes a high-temperature and low-pressure gaseous refrigerant. The high-temperature and low-pressure gaseous refrigerant returns to the compressor. In this way, a cycle is completed.

The fifth circulation loop also operates synchronously when the third circulation loop operates. In the fifth circulation loop, after a coolant in the first path of the cooler cools down by exchanging heat with a low-temperature refrigerant in the second path of the cooler, the coolant enters the heat exchange path of the battery under driving of the second pump, exchanges heat with the battery, and then returns to the first path of the cooler. The battery is cooled by transferring heat to the coolant.

In the eleventh circulation loop, a temperature of a coolant in the first path of the first condenser increases after the coolant exchanges heat with a refrigerant in the second path of the first condenser. Then the coolant flows to the inlet of the heat exchange path of the radiator through the heater, the eighth port b8 of the second valve body, and the fifth port b5 of the second valve body, cools down by exchanging heat with air flowing over a surface of the radiator in the heat exchange path of the radiator, enters the heat exchange path of the electric drive under driving of the third pump, performs preliminary heat exchange with the electric drive, returns to the first path of the first condenser through the sixth port b6 of the second valve body and the ninth port b9 of the second valve body, and further exchanges heat with a high-temperature refrigerant in the second path of the first condenser. In this way, a cycle is completed. In this process, the electric drive can implement heat dissipation and cooling by transferring heat to the coolant, and the coolant is still in a low temperature range although the temperature of the coolant increases by exchanging heat with the electric drive. Therefore, a cooling capacity can be further transferred to refrigerants/a refrigerant in the second circulation loop and/or the third circulation loop through the first condenser.

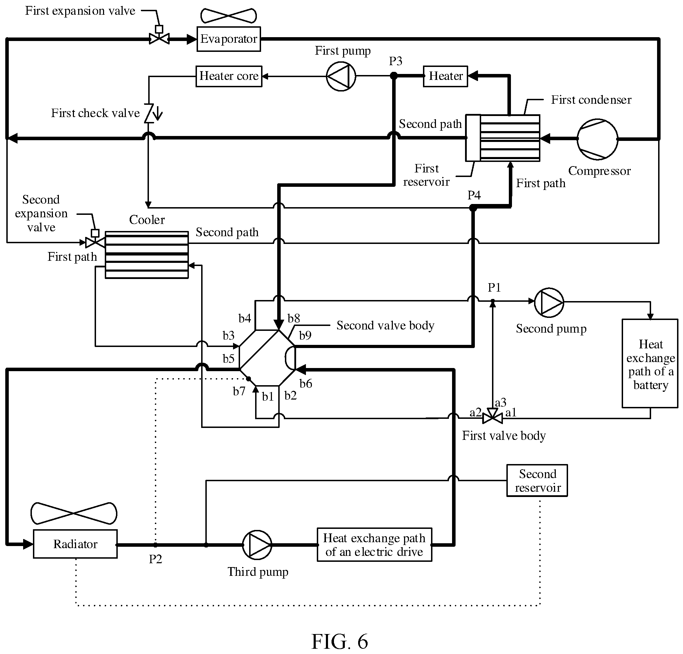

FIG. 6 is a diagram in which the thermal management system 5 shown in FIG. 2 operates in the passenger compartment-only cooling mode. Refer to FIG. 6. The passenger compartment-only cooling mode is applicable to a scenario in which the battery has no cooling requirement but the passenger compartment has a cooling requirement. In this mode, the compressor, the first expansion valve, and the third pump are turned on; and the second expansion valve, the first pump, the second pump, and the heater are turned off. When the tenth connecting member connects the fifth port b5 of the second valve body to the eighth port b8 of the second valve body, and the eleventh connecting member connects the sixth port b6 of the second valve body to the ninth port b9 of the second valve body, the second circulation loop (a loop formed by connecting the compressor, the second path of the first condenser, the first expansion valve, and the evaporator) and the eleventh circulation loop (a loop formed by connecting the first path of the first condenser, the heater, the radiator, the third pump, and the heat exchange path of the electric drive) operate simultaneously. For operating processes of the second circulation loop and the eleventh circulation loop, reference may be made to the related descriptions in the simultaneous passenger compartment and battery cooling mode. Details are not described herein again.

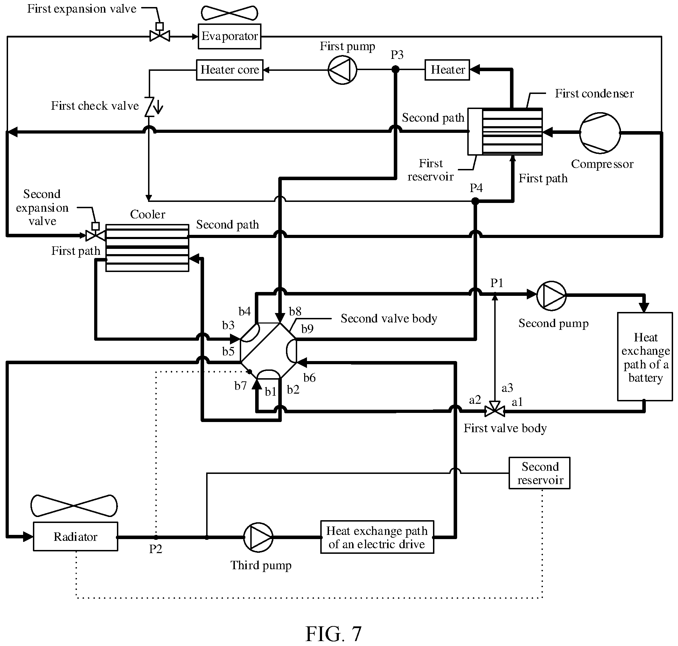

FIG. 7 is a diagram in which the thermal management system 5 shown in FIG. 2 operates in the battery-only cooling mode. Refer to FIG. 7. The battery-only cooling mode is applicable to a scenario in which the passenger compartment has no cooling requirement but the battery has a cooling requirement, for example, in a case of fast charging of the battery. In this mode, the compressor, the second expansion valve, the second pump, and the third pump are turned on; and the first expansion valve, the first pump, and the heater are turned off. When the first port a1 of the first valve body is connected to the third port a3 of the first valve body, the first connecting member of the second valve body connects the first port b1 of the second valve body to the second port b2 of the second valve body, the second connecting member connects the third port b3 of the second valve body to the fourth port b4 of the second valve body, the tenth connecting member connects the fifth port b5 of the second valve body to the eighth port b8 of the second valve body, and the eleventh connecting member connects the sixth port b6 of the second valve body to the ninth port b9 of the second valve body, the third circulation loop (a loop formed by connecting the compressor, the second path of the first condenser, the second expansion valve, and the second path of the cooler), the fifth circulation loop (a loop formed by connecting the first path of the cooler, the second pump, and the heat exchange path of the battery), and the eleventh circulation loop (a loop formed by connecting the first path of the first condenser, the heater, the radiator, the third pump, and the heat exchange path of the electric drive) operate simultaneously. For operating processes of the third circulation loop, the fifth circulation loop, and the eleventh circulation loop, reference may be made to the related descriptions in the simultaneous passenger compartment and battery cooling mode. Details are not described herein again.

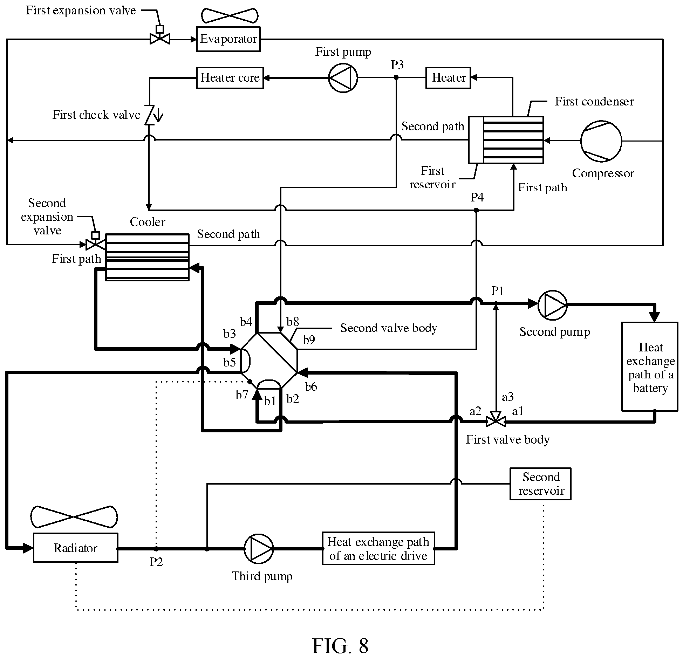

FIG. 8 is a diagram in which the thermal management system 5 shown in FIG. 2 operates in the battery free cooling mode. Refer to FIG. 8. The battery free cooling mode is applicable to a scenario in which the passenger compartment has no cooling or heating requirement, the battery has a cooling requirement, and the electric drive has a heat dissipation requirement. In this mode, the compressor, the first expansion valve, the second expansion valve, and the heater are turned off; and the second pump and/or the third pump are turned on. When the first port a1 of the first valve body is connected to the second port a2 of the first valve body, the first connecting member of the second valve body connects the first port b1 of the second valve body to the second port b2 of the second valve body, the third connecting member connects the fifth port b5 of the second valve body to the third port b3 of the second valve body, and the seventh connecting member connects the sixth port b6 of the second valve body to the fourth port b4 of the second valve body, the ninth circulation loop (a loop formed by connecting the radiator, the third pump, the heat exchange path of the electric drive, the first pump, the heat exchange path of the battery, and the first path of the cooler) operates.

In the ninth circulation loop, at least one of the second pump and the third pump is turned on to drive a coolant to circulate through the ninth circulation loop. A low-temperature coolant output through the heat exchange path of the radiator enters the heat exchange path of electric drive, exchanges heat with the electric drive, and takes away the heat generated by the electric drive. Then the coolant enters the heat exchange path of the battery through the sixth port b6 of the second valve body and the fourth port b4 of the second valve body, further exchanges heat with the battery, and takes away the heat generated by the battery. The coolant undergoing heat exchange and temperature rise enters the first path of the cooler through the first port b1 of the second valve body and the second port b2 of the second valve body, finally returns to the heat exchange path of the radiator through the first path of the cooler, and the third port b3 and the fifth port b5 of the second valve body, cools down by exchanging heat with air flowing over a surface of the radiator, and then enters the heat exchange path of the electric drive again. In this process, the electric drive and the battery implement heat dissipation and cooling by transferring heat to the coolant. In addition, the first path of the cooler may be considered as a flow duct in this loop and does not perform a heat exchange function.

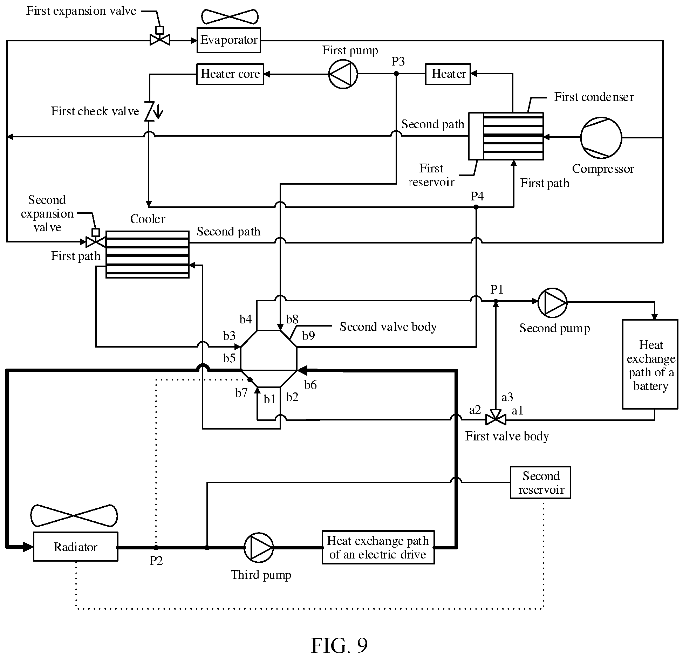

FIG. 9 is a diagram in which the thermal management system 5 shown in FIG. 2 operates in the electric drive free cooling mode. Refer to FIG. 9. The electric drive free cooling mode is applicable to a scenario in which neither the passenger compartment nor the battery has a cooling or heating requirement, and the electric drive has a heat dissipation requirement. In this mode, the compressor, the first expansion valve, the second expansion valve, the first pump, the second pump, and the heater are turned off; and the third pump is turned on. When the second connecting member of the second valve body connects the fifth port of the second valve body to the sixth port of the second valve body, the seventh circulation loop (a loop formed by connecting the radiator, the third pump, and the heat exchange path of the electric drive) operates.

In the seventh circulation loop, a high-temperature coolant enters the heat exchange path of the radiator, cools down by exchanging heat with air flowing over a surface of the radiator, enters the heat exchange path of the electric drive under driving of the third pump, exchanges heat with the electric drive, and returns to the heat exchange path of the radiator through the eighth port of the second valve body and the seventh port of the second valve body. In this way, a cycle is completed. In this process, the electric drive can implement heat dissipation and cooling by transferring heat to the coolant.

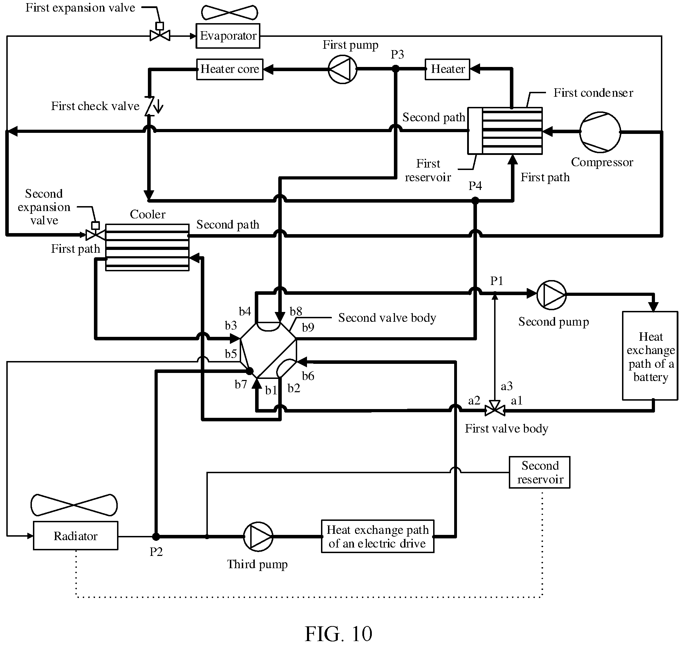

FIG. 10 is a diagram in which the thermal management system 5 shown in FIG. 2 operates in the simultaneous passenger compartment and battery heating mode. Refer to FIG. 10. The simultaneous passenger compartment and battery heating mode is applicable to a scenario in which both the passenger compartment and the battery have heating requirements and the electric drive has a heat dissipation requirement. In this mode, the compressor, the second expansion valve, the first pump, the second pump, and the third pump are turned on; and the first expansion valve is turned off. When the first valve port a1 of the first valve body is connected to the second port a2 of the first valve body, the fourth connecting member of the second valve body connects the sixth port b6 of the second valve body to the second port b2 of the second valve body, the sixth connecting member connects the third port b3 of the second valve body to the seventh port b7 of the second valve body, the eighth connecting member connects the eighth port b8 of the second valve body to the fourth port b4 of the second valve body, and the ninth connecting member connects the ninth port b9 of the second valve body to the first port b1 of the second valve body, the first circulation loop (a loop formed by connecting the first path of the first condenser, the heater, the first pump, and the heater core), the third circulation loop (a loop formed by connecting the compressor, the second path of the first condenser, the second expansion valve, and the second path of the cooler), the eighth circulation loop (a loop formed by connecting the first path of the cooler, the third pump, and the heat exchange path of the electric drive), and the tenth circulation loop (a loop formed by connecting the second path of the first condenser, the heater, the second pump, and the heat exchange path of the battery) operate simultaneously. For an operating process of the third circulation loop, reference may be made to the related descriptions in the simultaneous passenger compartment and battery cooling mode. Details are not described herein again.

In the first circulation loop, a temperature of a coolant in the first path of the first condenser increases after the coolant exchanges heat with a refrigerant in the second path of the first condenser. Then the coolant enters the heat exchange path of the heater core through the heater under driving of the first pump, cools down by exchanging heat with air in the air supply duct of the passenger compartment in the heat exchange path of the heater core, and returns to the first path of the first condenser. In this way, a cycle is completed. In addition, after a temperature of the air in the air supply duct increases by exchanging heat with a high-temperature coolant in the heat exchange path of the heater core, the air is supplied to the passenger compartment through the air outlet of the passenger compartment to achieve a heating effect of the passenger compartment.

In the eighth circulation loop, a temperature of a coolant in the first path of the cooler decreases after the coolant exchanges heat with a refrigerant in the second path of the cooler. Then the coolant flows to the node P2 through the third port b3 of the second valve body and the seventh port b7 of the second valve body, enters the heat exchange path of the electric drive under driving of the third pump, exchanges heat with the electric drive and takes away heat generated by the electric drive, and then returns to the first path of the cooler through the sixth port b6 of the second valve body and the second port b2 of the second valve body. In this process, the electric drive implements heat dissipation and cooling by transferring heat to the coolant.

In the tenth circulation loop, a temperature of a coolant in the first path of the first condenser increases after the coolant exchanges heat with a refrigerant in the second path of the first condenser. Then the coolant flows to the node P1 through the eighth port b8 of the second valve body and the fourth port b4 of the second valve body, enters the heat exchange path of the battery under driving of the second pump, exchanges heat with the battery in the heat exchange path of the battery, transfers heat to the battery, and finally returns to the first path of the first condenser through the first port b1 of the second valve body and the ninth port b9 of the second valve body. In this way, a cycle is completed. In this process, the battery is heated by absorbing heat from the coolant.

In some possible implementation solutions, in the simultaneous passenger compartment and battery heating mode, the heater may be turned on or off, which may be specifically determined based on heating requirements of the passenger compartment and the battery. For example, when the heating requirements of the passenger compartment and the battery are low, the heater may be in an off state. In this case, all the heat required by the passenger compartment and battery is provided by the first condenser. The temperature of the coolant in the first path of the first condenser increases after the coolant exchanges the heat with the refrigerant in the second path of the first condenser. The coolant reaches the node P4 through the heater, and then flows in a direction of the heater core and a direction of the eighth port b8 of the second valve body through the node P4. The heater is equivalent to a flow pipe and does not perform a heating function. When the heating requirements of the passenger compartment and the battery are high, the heater may be in an on state. The temperature of the coolant in the first path of the first condenser increases after the coolant exchanges the heat with the refrigerant in the second path of the first condenser. Then the coolant is further heated in the heater and flows in a direction of the heater core and a direction of the eighth port b8 of the second valve body through the node P4. It is worth mentioning that, when the heater is in an on state, a heating temperature of the heater can be controlled by adjusting a power of the heater, so that temperatures of the passenger compartment and the battery can be more accurately regulated.

In addition, heating temperatures of the passenger compartment and the battery can be regulated by using the heater, and flow rates of coolants in the first circulation loop and the second circulation loop can be controlled by adjusting powers of the first pump and the second pump. In this way, temperatures of the coolants in the first circulation loop and the second circulation loop can be regulated, to further control the heating temperatures of the passenger compartment and the battery.

Optionally, in the simultaneous passenger compartment and battery heating mode, the first port a1 of the first valve body and the third port a3 of the first valve body may also be connected. In this case, the fourth circulation loop also enters an operating state. A part of low-temperature coolant flowing out of the outlet of the heat exchange path of the battery may flow to the first port a1 of the second valve body through the second port a2 of the first valve body, and then return to the first path of the first condenser through the ninth port b9 of the second valve body. The other part may flow to the node P1 through the third port a3 of the first valve body, mix with a high-temperature coolant flowing to the node P1 in the first path of the first condenser, and enter the heat exchange path of the battery under driving of the second pump. In this way, a temperature of a coolant at the inlet of the heat exchange path of the battery can be adjusted, to control a heating temperature of the battery. Flow distribution between the first port a1 of the first valve body and the second port a2 of the first valve body, and between the first port a1 of the first valve body and the third port a3 of the first valve body may be determined based on a heating requirement of the battery. Details are not described herein.

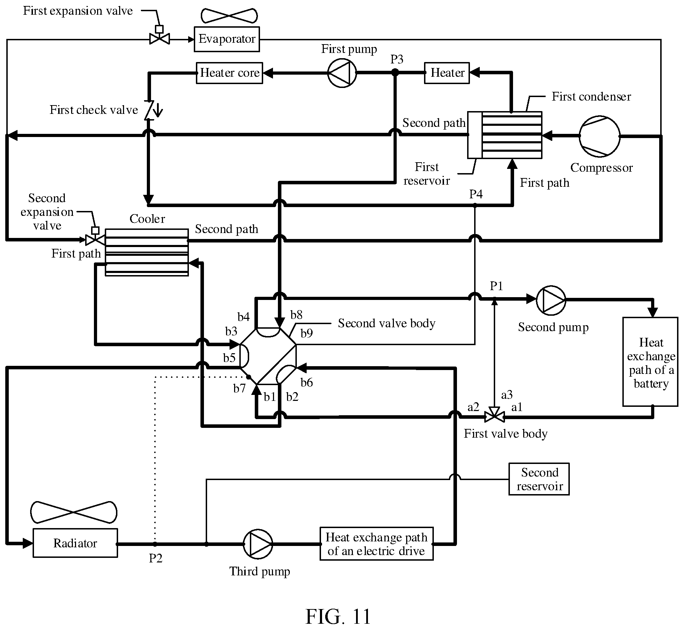

FIG. 11 is another diagram in which the thermal management system 5 shown in FIG. 2 operates in the simultaneous passenger compartment and battery heating mode. Refer to FIG. 11. In this embodiment, the compressor, the second expansion valve, the first pump, the second pump, and the third pump are turned on; and the first expansion valve is turned off. When the first port a1 of the first valve body is connected to the third port a3 of the first valve body, the third connecting member of the second valve body connects the fifth port b5 of the second valve body to the third port b3 of the second valve body, the fourth connecting member connects the sixth port b6 of the second valve body to the second port b2 of the second valve body, the eighth connecting member connects the eighth port b8 of the second valve body to the fourth port b4 of the second valve body, and the ninth connecting member connects the ninth port b9 of the second valve body to the first port b1 of the second valve body, the first circulation loop (a loop formed by connecting the first path of the first condenser, the heater, the first pump, and the heater core), the third circulation loop (a loop formed by connecting the compressor, the second path of the condenser, the second expansion valve, and the second path of the cooler), the sixth circulation loop (a loop formed by connecting the first path of the cooler, the heat exchange path of the radiator, the third pump, and the heat exchange path of the electric drive), and the tenth circulation loop (a loop formed by connecting the second path of the first condenser, the heater, the second pump, and the heat exchange path of the battery) operate simultaneously. For operating processes of the first circulation loop, the third circulation loop, and the tenth circulation loop, reference may be made to the related descriptions in the simultaneous passenger compartment and battery heating mode. Details are not described herein again.

In the sixth circulation loop, a temperature of a coolant in the first path of the cooler decreases after the coolant exchanges heat with a refrigerant in the second path of the cooler. Then the coolant enters the heat exchange path of the radiator through the third port b3 of the second valve body and the fifth port b5 of the second valve body, further cools down by exchanging heat with air flowing over a surface of the radiator in the heat exchange path of the radiator, enters the heat exchange path of the electric drive under driving of the third pump, exchanges heat with the electric drive and takes away heat generated by the electric drive, and then returns to the first path of the cooler through the sixth port b6 of the second valve body and the second port b2 of the second valve body. In this process, the electric drive implements heat dissipation and cooling by transferring heat to the coolant.

It can be seen that, compared with the solution shown in FIG. 10, in this solution, a heating loop of the passenger compartment and the battery is not changed. A difference is that the eighth circulation loop is used to dissipate heat of the electric drive in the solution shown in FIG. 10, while the sixth circulation loop is used to dissipate heat of the electric drive in this solution. The radiator is introduced, so that a temperature of a coolant at the inlet of the heat exchange path of the electric drive can be further reduced, to achieve a better heat dissipation effect. In an actual application, the solution provided in FIG. 10 or FIG. 11 may be selected based on a heat dissipation requirement of the electric drive. Details are not described herein again.

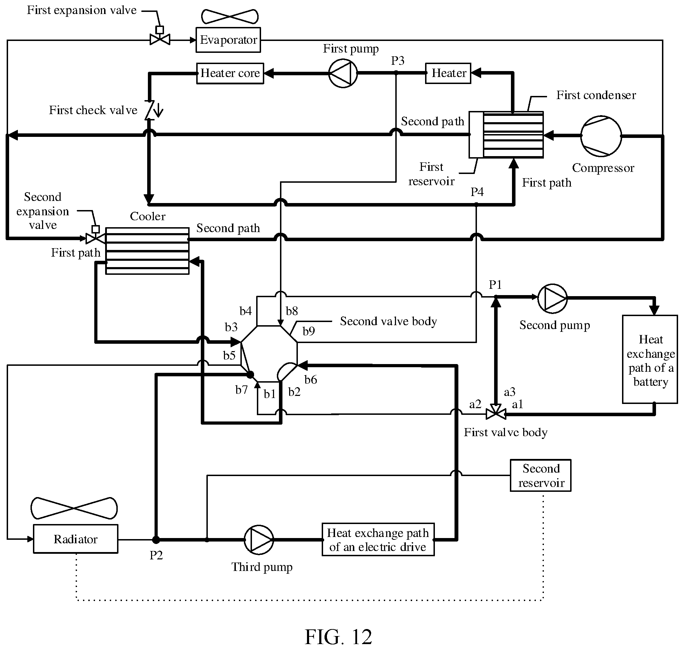

FIG. 12 is a diagram in which the thermal management system 5 shown in FIG. 2 operates in the passenger compartment-only heating mode. Refer to FIG. 12. The passenger compartment-only heating mode is applicable to a scenario in which the passenger compartment has a heating requirement and the electric drive has a heat dissipation requirement. In this mode, the compressor, the second expansion valve, the first pump, and the third pump are turned on; and the first expansion valve is turned off. When the fourth connecting member of the second valve body connects the sixth port b6 of the second valve body to the second port b2 of the second valve body, and the sixth connecting member connects the third port b3 of the second valve body to the seventh port b7 of the second valve body, the first circulation loop (a loop formed by connecting the first path of the first condenser, the heater, the first pump, and the heater core), the third circulation loop (a loop formed by connecting the compressor, the second path of the first condenser, the second expansion valve, and the second path of the cooler), and the eighth circulation loop (a loop formed by connecting the first path of the cooler, the third pump, and the heat exchange path of the electric drive) operate simultaneously. For operating processes of the first circulation loop, the third circulation loop, and the eighth circulation loop, reference may be made to the related descriptions in the simultaneous passenger compartment and battery heating mode. Details are not described herein again.

When the first circulation loop operates, the heater may be turned on or off, which may be specifically determined based on a temperature requirement of the passenger compartment. This is not limited in this application. It is worth mentioning that, when the heater is in an on state, a heating temperature of the heater can be controlled by adjusting a power of the heater, so that a temperature of the passenger compartment can be more accurately regulated.

In some other implementation solutions, based on a heat dissipation requirement of the electric drive, the sixth circulation loop (a loop formed by connecting the first path of the first condenser, the heat exchange path of the radiator, the third pump, and the heat exchange path of the electric drive) may alternatively be used to dissipate heat of the electric drive. In this case, in the passenger compartment-only heating mode, the first circulation loop, the third circulation loop, and the sixth circulation loop operate simultaneously. For an operating process of the sixth circulation loop, reference may also be made to the related descriptions in the simultaneous passenger compartment and battery heating mode. Details are not described herein again.

In addition, in the two passenger compartment-only heating modes, the first port a1 of the first valve body and the third port a3 of the first valve body may be connected, and in this case, the fourth circulation loop (a loop formed by connecting the heat exchange path of the battery and the second pump) enters an operating state, the second pump drives a coolant to circulate through the fourth circulation loop, and the coolant may exchange a small amount of heat with an external environment through a pipeline, to meet a cooling requirement of the battery to a specific extent.

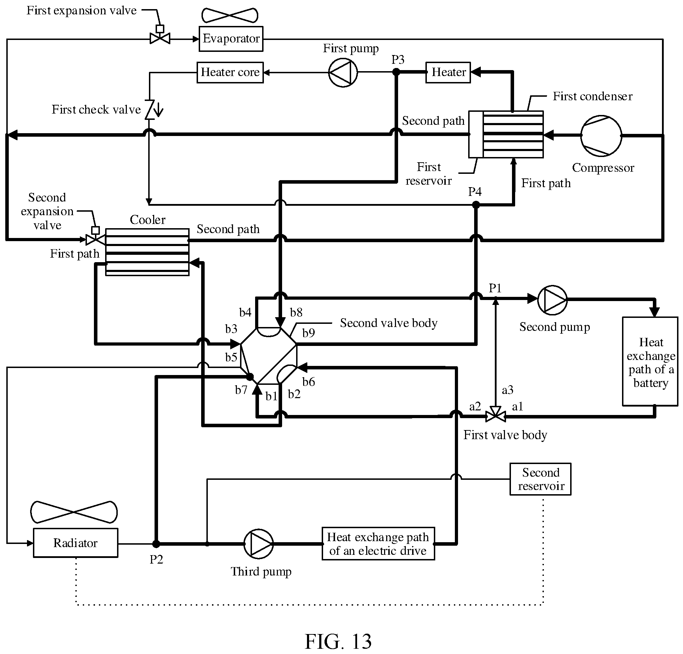

FIG. 13 is a diagram in which the thermal management system 5 shown in FIG. 2 operates in the battery-only heating mode. Refer to FIG. 13. The battery-only heating mode is applicable to a scenario in which the passenger compartment has no cooling or heating requirement, the battery has a heating requirement, and the electric drive has a heat dissipation requirement. In this mode, the compressor, the second expansion valve, the second pump, and the third pump are turned on; and the first expansion valve and the first pump are turned off. When the first valve port a1 of the first valve body is connected to the second port a2 of the first valve body, the fourth connecting member of the second valve body connects the sixth port b6 of the second valve body to the second port b2 of the second valve body, the sixth connecting member connects the third port b3 of the second valve body to the seventh port b7 of the second valve body, the eighth connecting member connects the eighth port b8 of the second valve body to the fourth port b4 of the second valve body, and the ninth connecting member connects the ninth port b9 of the second valve body to the first port b1 of the second valve body, the third circulation loop (a loop formed by connecting the compressor, the second path of the condenser, the second expansion valve, and the second path of the cooler), the eighth circulation loop (a loop formed by connecting the first path of the cooler, the third pump, and the heat exchange path of the electric drive), and the tenth circulation loop (a loop formed by connecting the second path of the first condenser, the heater, the second pump, and the heat exchange path of battery) operate simultaneously. For operating processes of the third circulation loop, the eighth circulation loop, and the tenth circulation loop, reference may be made to the related descriptions in the simultaneous passenger compartment and battery heating mode. Details are not described herein again.

Certainly, in some other implementation solutions, based on a heat dissipation requirement of the electric drive, the sixth circulation loop (a loop formed by connecting the first path of the first condenser, the heat exchange path of the radiator, the third pump, and the heat exchange path of the electric drive) may alternatively be used to dissipate heat of the electric drive. In this case, in the battery-only heating mode, the third circulation loop, the sixth circulation loop, and the tenth circulation loop operate simultaneously. For an operating process of the sixth circulation loop, reference may also be made to the related descriptions in the simultaneous passenger compartment and battery heating mode. Details are not described herein again.

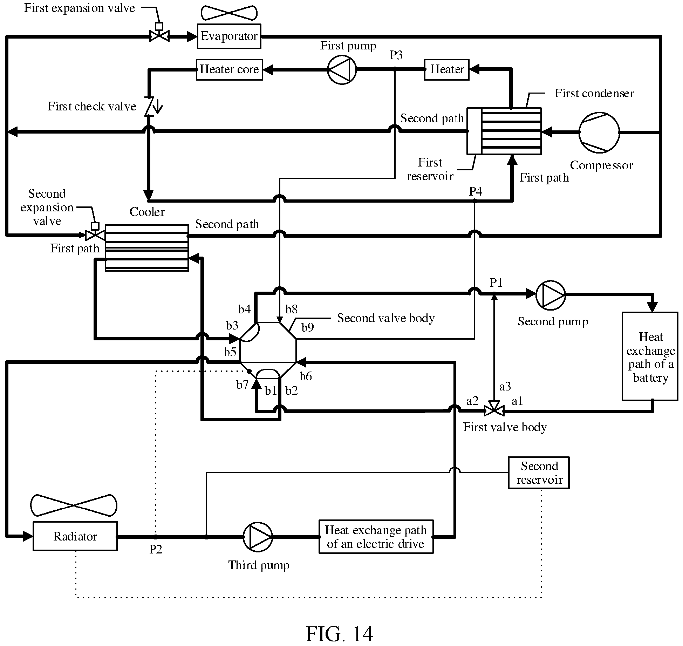

FIG. 14 is a diagram in which the thermal management system 5 shown in FIG. 2 operates in the heating and dehumidification mode. Refer to FIG. 14. The heating and dehumidification mode is applicable to a scenario in which the passenger compartment has heating and dehumidification requirements and the battery has a cooling requirement, for example, in spring and autumn, during long-term driving in winter, and during charging or idling in winter. In this mode, the compressor, the first expansion valve, the second expansion valve, the first pump, and the second pump are turned on. When the first port a1 of the first valve body is connected to the second port a2 of the first valve body, the first connecting member of the second valve body connects the first port b1 of the second valve body to the second port b2 of the second valve body, and the second connecting member connects the third port b3 of the second valve body to the fourth port b4 of the second valve body, the first circulation loop (a loop formed by connecting the first path of the first condenser, the heater, the first pump, and the heater core), the second circulation loop (a loop formed by connecting the compressor, the second path of the first condenser, the first expansion valve, and the evaporator), the third circulation loop (a loop formed by connecting the compressor, the second path of the first condenser, the second expansion valve, and the second path of the cooler), and the fifth circulation loop (a loop formed by connecting the first path of the cooler, the second pump, and the heat exchange path of the battery) operate simultaneously. For operating processes of the first circulation loop, the second circulation loop, the third circulation loop, and the fifth circulation loop, reference may be made to the related descriptions in the simultaneous passenger compartment and battery cooling mode and the simultaneous passenger compartment and battery heating mode. Details are not described herein again.

As mentioned above, in the air supply duct, the evaporator is located upstream of the heater core. When the first circulation loop and the second circulation loop operate, air in the air supply duct first cools down by exchanging heat with a low-temperature refrigerant in the heat exchange path of the evaporator, so that moisture in the air is condensed when cold, and discharged from a condensate pipe of the vehicle. Then the dried air exchanges heat with a high-temperature coolant in the heat exchange path of the heater core downstream for heating, and is finally supplied to the passenger compartment through the air outlet of the passenger compartment. In other words, when the first circulation loop and the second circulation loop operate simultaneously, the air in the air supply duct can be first dehumidified and then heated, and a heating and dehumidification function of the passenger compartment can be finally realized.

In addition, in the heating and dehumidification mode of the passenger compartment, the heater may be turned on or off, which may be specifically determined based on a temperature requirement of the passenger compartment. This is not limited in this application. It is worth mentioning that, when the heater is in an on state, a heating temperature of the heater can be controlled by adjusting a power of the heater, so that a temperature of the passenger compartment can be more accurately regulated.

In some possible implementation solutions, in the heating and dehumidification mode of the passenger compartment, if the electric drive has a heat dissipation requirement, the third pump may be turned on, and the third connecting member of the second valve body connects the fifth port b5 of the second valve body to the sixth port b6 of the second valve body, so that the seventh circulation loop formed by connecting the radiator, the third pump, and the heat exchange path of the electric drive also enters an operating state. For an operating process of the seventh circulation loop, reference may be made to the related descriptions in the simultaneous passenger compartment and battery cooling mode. Details are not described herein again.

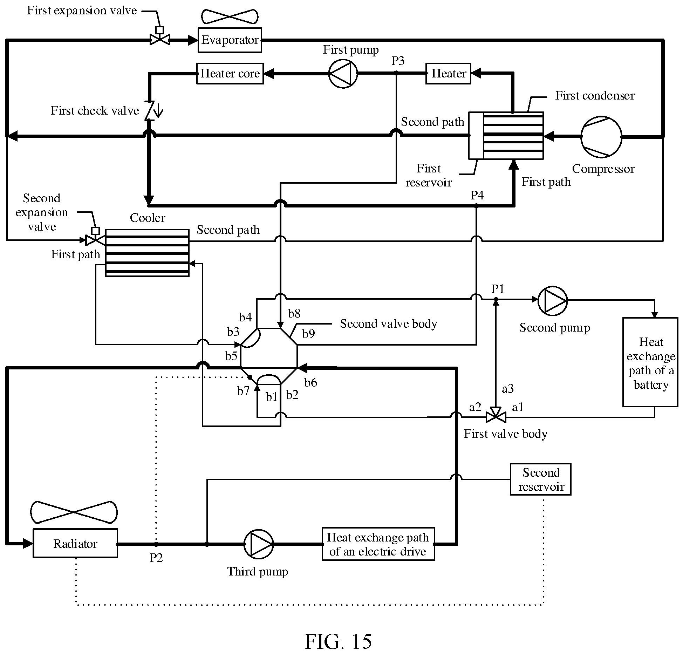

FIG. 15 is another diagram in which the thermal management system 5 shown in FIG. 2 operates in the heating and dehumidification mode. Refer to FIG. 15. This implementation solution is applicable to a scenario in which the passenger compartment has a heating and dehumidification requirement, and the battery has no cooling or heating requirement. In this mode, the compressor, the first expansion valve, and the first pump are turned on; and the second expansion valve and the second pump are turned off. The first circulation loop (a loop formed by connecting the first path of the first condenser, the heater, the first pump, and the heater core) and the second circulation loop (a loop formed by connecting the compressor, the second path of the first condenser, the first expansion valve, and the evaporator) operate simultaneously. For operating processes of the first circulation loop and the second circulation loop, reference may be made to the related descriptions in the simultaneous passenger compartment and battery cooling mode and the simultaneous passenger compartment and battery heating mode. Details are not described herein again.

Similarly, in this solution, the heater may be turned on or off, which may be specifically determined based on a temperature requirement of the passenger compartment. This is not limited in this application. It is worth mentioning that, when the heater is in an on state, a heating temperature of the heater can be controlled by adjusting a power of the heater, so that a temperature of the passenger compartment can be more accurately regulated.

In addition, if the electric drive has a heat dissipation requirement, the third pump may be turned on, and the third connecting member of the second valve body connects the fifth port b5 of the second valve body to the sixth port b6 of the second valve body, so that the seventh circulation loop formed by connecting the radiator, the third pump, and the heat exchange path of the electric drive also enters an operating state. For an operating process of the seventh circulation loop, reference may be made to the related descriptions in the simultaneous passenger compartment and battery cooling mode. Details are not described herein again.

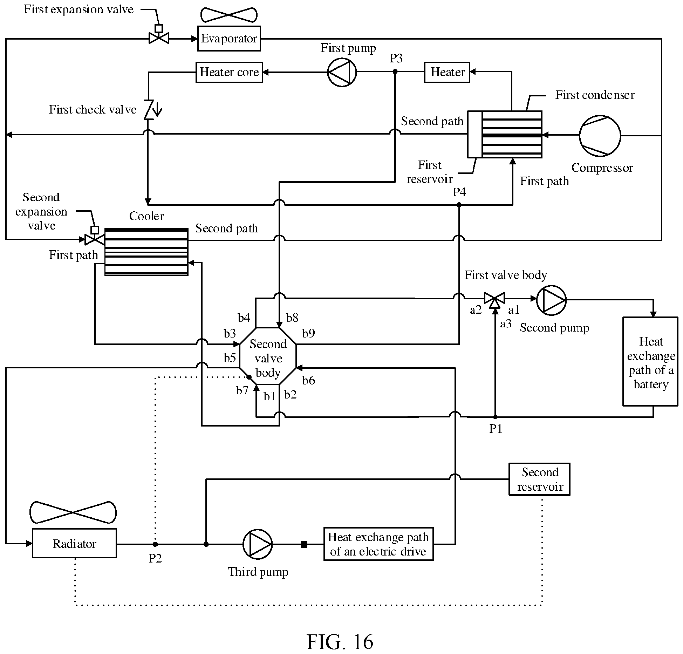

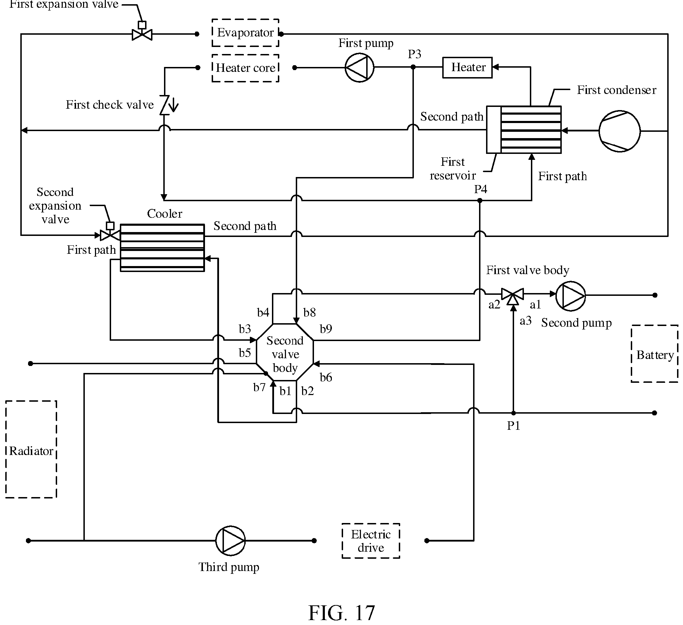

FIG. 16 is a diagram of a connection manner of another thermal management system 5 in a vehicle according to an embodiment of this application. FIG. 17 is a diagram of a structure of the thermal management system 5 shown in FIG. 16. Refer to FIG. 16 and FIG. 17 together. In this embodiment, the thermal management system may include a thermal management assembly, a compressor, a first condenser, a first expansion valve, a second expansion valve, a cooler, a first pump, a second pump, a third pump, and the like. Structures and arrangement manners of the compressor, the first condenser, the first expansion valve, the second expansion valve, the cooler, the first pump, the second pump, and the third pump are basically the same as those in the foregoing embodiments. Details of these components are not described herein again.

Different from the embodiment shown in FIG. 2, in this embodiment of this application, a first valve body of the thermal management assembly is exchanged with a node P1 in position. To be specific, the first valve body is disposed between an inlet of a heat exchange path of a battery and a fourth port b4 of a second valve body, and the node P1 is on a pipeline between an outlet of the heat exchange path of the battery and a first port b1 of the second valve body. In a specific implementation, a first port a1 of the first valve body is connected to the inlet of the heat exchange path of the battery, a second port b2 of the second valve body is connected to a fourth port b4 of the second valve body, a third port a3 of the first valve body and the first port b1 of the second valve body meet at the node P1, and the node P1 is connected to the outlet of the heat exchange path of the battery.

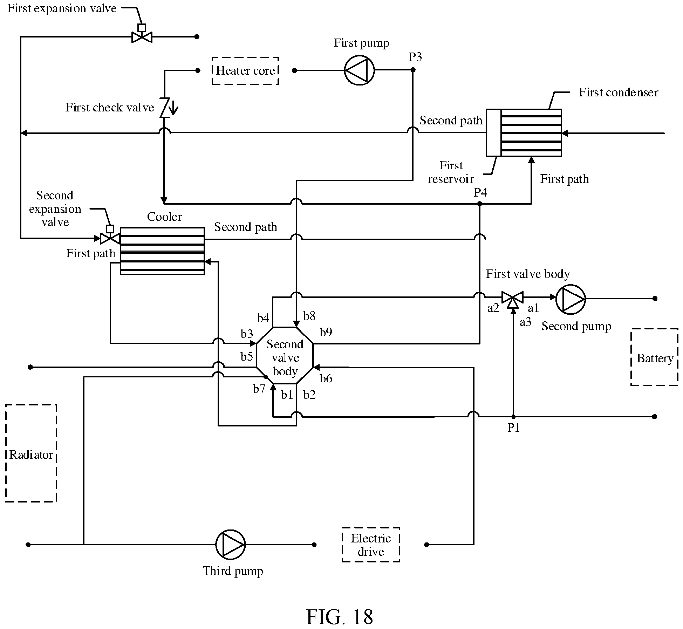

FIG. 18 is a diagram of another structure of the thermal management system 5 shown in FIG. 16. Refer to FIG. 18. In this embodiment, the thermal management system may include a thermal management assembly, a first condenser, a first expansion valve, a second expansion valve, a cooler, a first pump, a second pump, a third pump, and the like. Structures and arrangement manners of the foregoing components are basically the same as those in the embodiment shown in FIG. 17. Details of these components are not described herein again. A difference is that the thermal management system in this embodiment of this application does not include a compressor, that is, the compressor may be disposed independently of the foregoing components. Decoupling of the compressor from the foregoing components of the thermal management system is beneficial to reducing arrangement difficulty of the thermal management system and the compressor in the vehicle.

In the embodiments shown in FIG. 16 to FIG. 18, the thermal management system also has eleven circulation loops in the embodiment shown in FIG. 2, and connection states of ports of the first valve body and the second valve body may also be set with reference to the embodiment shown in FIG. 2, so that the thermal management system achieves a plurality of operating modes such as a simultaneous passenger compartment and battery cooling mode, a passenger compartment-only cooling mode, a battery-only cooling mode, a battery free cooling mode, an electric drive free cooling mode, a simultaneous passenger compartment and battery heating mode, a passenger compartment-only heating mode, a battery-only heating mode, and a heating and dehumidification mode. For a specific operating process of each operating mode, reference may be made to the descriptions in the foregoing embodiments. Details are not described herein again.

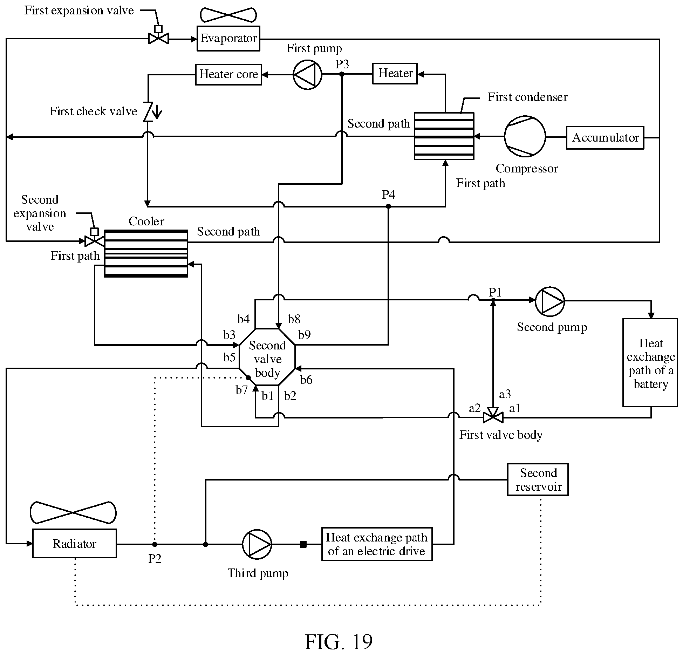

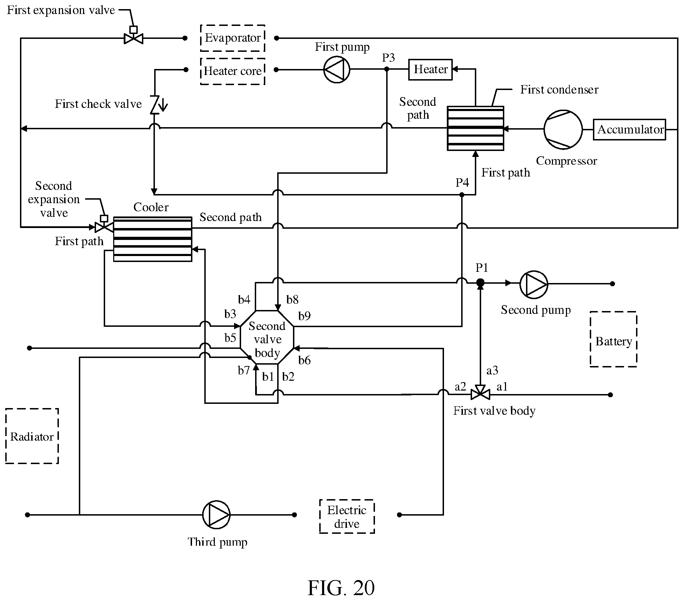

FIG. 19 is a diagram of a connection manner of another thermal management system 5 in a vehicle according to an embodiment of this application. FIG. 20 is a diagram of a structure of the thermal management system 5 shown in FIG. 19. Refer to FIG. 19 and FIG. 20 together. In this embodiment, the thermal management system may include a thermal management assembly, a compressor, a first condenser, a first expansion valve, a second expansion valve, a cooler, a first pump, a second pump, a third pump, and the like. For structures and arrangement manners of the foregoing components, reference may be made to the embodiment shown in FIG. 2. Therefore, details of these components are not described herein again.

Different from the embodiment shown in FIG. 2, in this embodiment of this application, the thermal management system further includes an accumulator. The accumulator can be disposed at an inlet of the compressor to separate a liquid refrigerant at the inlet of the compressor, so as to reduce content of a liquid refrigerant entering the compressor; and can also store an excess refrigerant to meet requirements of the thermal management system for refrigerants in different operating modes, so as to keep refrigerants/a refrigerant in a second circulation loop and/or a third circulation loop always at a better flow rate, and improve operation reliability and stability of the thermal management system.

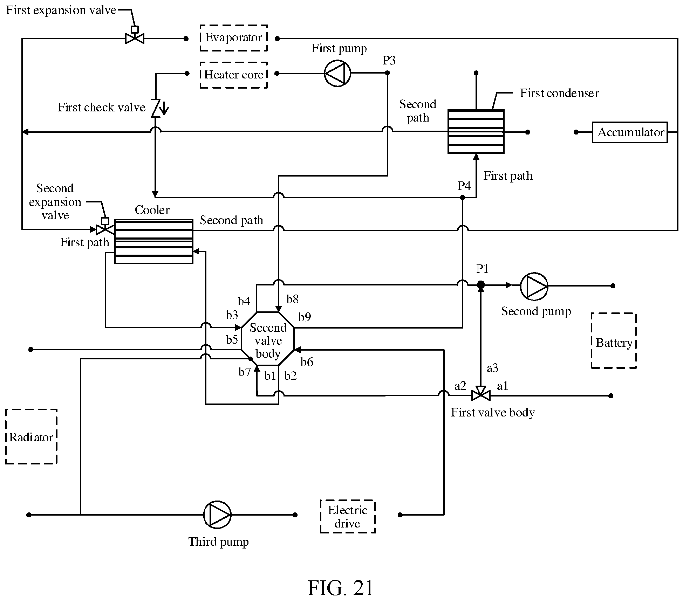

FIG. 21 is a diagram of another structure of the thermal management system 5 shown in FIG. 19. Refer to FIG. 21. In this embodiment, the thermal management system may include a thermal management assembly, a first condenser, a first expansion valve, a second expansion valve, a cooler, a first pump, a second pump, a third pump, and the like. Structures and arrangement manners of the foregoing components are basically the same as those in the embodiment shown in FIG. 20. Details of these components are not described herein again. A difference is that the thermal management system in this embodiment of this application does not include a compressor, that is, the compressor may be disposed independently of the foregoing components. Decoupling of the compressor from the foregoing components of the thermal management system is beneficial to reducing arrangement difficulty of the thermal management system and the compressor in the vehicle.

In the embodiment shown in FIG. 19 to FIG. 21, the thermal management system also has eleven circulation loops in the embodiment shown in FIG. 2, and one or more circulation loops of the thermal management system can be connected by adjusting connection states of ports of the first valve body and the second valve body, so that the thermal management system achieves a plurality of operating modes such as a simultaneous passenger compartment and battery cooling mode, a passenger compartment-only cooling mode, a battery-only cooling mode, a battery free cooling mode, an electric drive free cooling mode, a simultaneous passenger compartment and battery heating mode, a passenger compartment-only heating mode, a battery-only heating mode, and a heating and dehumidification mode. For a specific operating process of each operating mode, reference may be made to the descriptions in the foregoing embodiments. Details are not described herein again.

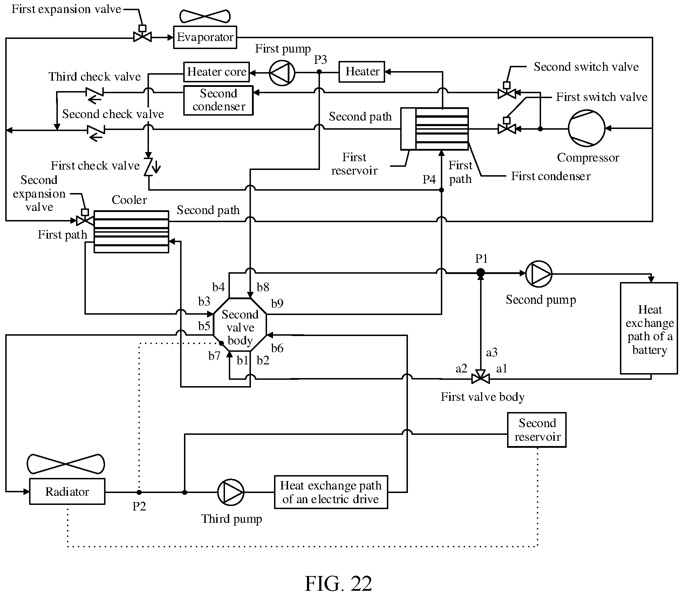

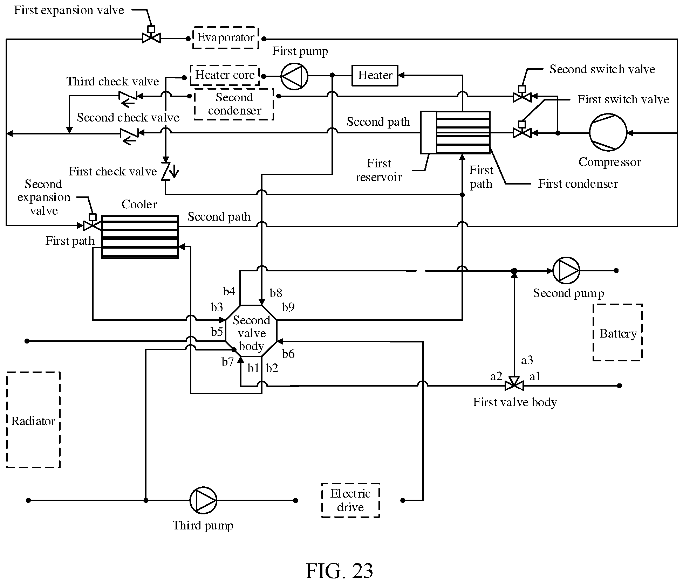

FIG. 22 is a diagram of a connection manner of another thermal management system 5 in a vehicle according to an embodiment of this application. FIG. 23 is a diagram of a structure of the thermal management system 5 shown in FIG. 22. Refer to FIG. 22 and FIG. 23 together. In this embodiment, the thermal management system includes a first switch valve, a second switch valve, a second check valve, and a third check valve in addition to the thermal management assembly, the first condenser, the first expansion valve, the second expansion valve, the cooler, the first pump, the second pump, and the third pump mentioned in the foregoing embodiment. For structures and arrangement manners of the thermal management assembly, the first condenser, the first expansion valve, the second expansion valve, the cooler, the first pump, the second pump, and the third pump, reference may be made to the embodiments shown in FIG. 2, FIG. 16, or FIG. 19. Details are not described herein again.

In addition, an air supply duct of a passenger compartment may also be provided with a second condenser, the second condenser has a heat exchange path, the thermal management system may heat, through the heat exchange path of the second condenser, air flowing over a surface of the second condenser, so as to achieve heating of the passenger compartment. In a specific implementation, the second condenser may be located downstream of an evaporator, that is, located on a side that is of the evaporator and that is close to an air outlet of the passenger compartment.

The first switch valve may be disposed between an outlet of a compressor and an inlet of a second path of the first condenser, and the second switch valve may be disposed between an outlet of the compressor and an inlet of the second condenser. The second check valve may be disposed between an outlet of the second path of the first condenser and a node P5, and the node P5 may be understood as a point at which an inlet of the first expansion valve and an inlet of the second expansion valve meet. In this case, an inlet of the second check valve is connected to the outlet of the second path of the first condenser, and an outlet of the second check valve is separately connected to the inlet of the first expansion valve and the inlet of the second expansion valve through the node P5, so that an outlet of a first path of the first condenser is unidirectionally connected to the inlet of the first expansion valve and/or the inlet of the second expansion valve. The third check valve may be disposed between an outlet of the heat exchange path of the second condenser and the node P5. An inlet of the third check valve is connected to the outlet of the heat exchange path of the second condenser, and an outlet of the third check valve is separately connected to the inlet of the first expansion valve and the inlet of the second expansion valve through the node P5, so that the outlet of the heat exchange path of the second condenser is unidirectionally connected to the inlet of the first expansion valve and/or the inlet of the second expansion valve.

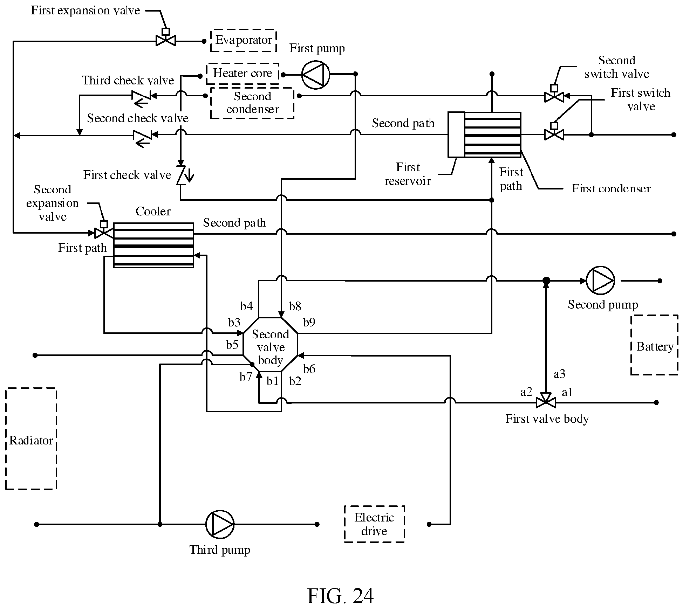

FIG. 24 is a diagram of a structure of the thermal management system 5 shown in FIG. 22. Refer to FIG. 24. In this embodiment, the thermal management system may include a thermal management assembly, a first condenser, a first expansion valve, a second expansion valve, a cooler, a first pump, a second pump, a third pump, a first switch valve, a second switch valve, a second check valve, and a third check valve. Structures and arrangement manners of the foregoing components are roughly the same as those in the embodiment shown in FIG. 23. Details of these components are not described herein again. Different from the foregoing embodiment, in this embodiment of this application, the thermal management system does not include a compressor, that is, the compressor may be disposed independently of the foregoing components. Decoupling of the compressor from the foregoing components of the thermal management system is beneficial to reducing arrangement difficulty of the thermal management system and the compressor in the vehicle.

In the embodiments shown in FIG. 22 to FIG. 24, in addition to the eleven circulation loops described in the foregoing embodiments, the thermal management system may include a twelfth circulation loop formed by connecting the compressor, the second condenser, the first expansion valve, and the evaporator, and a thirteenth circulation loop formed by connecting the compressor, the second condenser, the second expansion valve, and a second path of the cooler. For example, a heat exchange medium in each of the twelfth circulation loop and the thirteenth circulation loop may be a refrigerant, for example, R134a, R1234yf, or R744. One or more of these circulation loops are connected, so that the thermal management system can achieve a plurality of operating modes such as a simultaneous passenger compartment and battery cooling mode, a passenger compartment-only cooling mode, a battery-only cooling mode, a battery free cooling mode, an electric drive free cooling mode, a simultaneous passenger compartment and battery heating mode, a passenger compartment-only heating mode, a battery-only heating mode, and a heating and dehumidification mode. The following briefly describes an operating process of each of the operating modes.

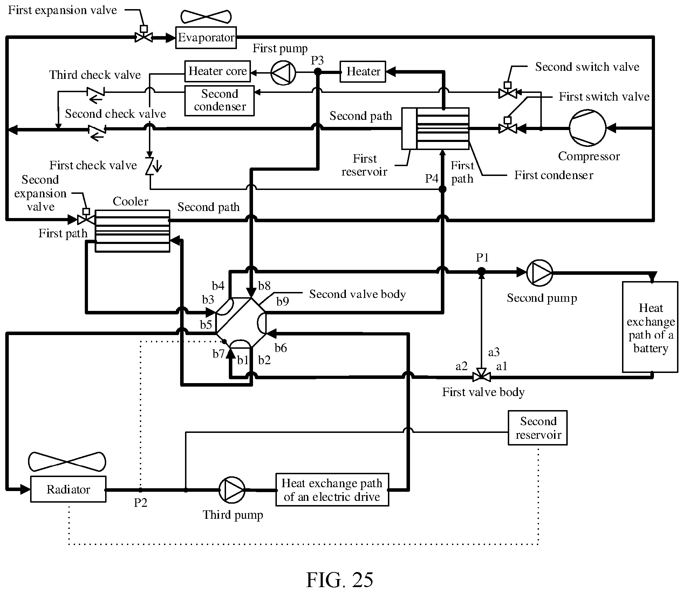

FIG. 25 is a diagram in which the thermal management system 5 shown in FIG. 22 operates in the simultaneous passenger compartment and battery cooling mode. Refer to FIG. 25. In the simultaneous passenger compartment and battery cooling mode, the compressor, the first switch valve, the first expansion valve, the second expansion valve, the second pump, and the third pump are turned on; and the second switch valve, the first pump, and a heater are turned off. When a first port a1 of a first valve body is connected to a second port a2 of the first valve body, a first connecting member of a second valve body is connected to a first port b1 of the second valve body and a second port b2 of the second valve body, a second connecting member connects a third port b3 of the second valve body to a fourth port b4 of the second valve body, a tenth connecting member connects a fifth port b5 of the second valve body to an eighth port b8 of the second valve body, and an eleventh connecting member connects a sixth port b6 of the second valve body to a ninth port b9 of the second valve body, a second circulation loop (a loop formed by connecting the compressor, the second path of the first condenser, the first expansion valve, and the evaporator), a third circulation loop (a loop formed by connecting the compressor, the second path of the first condenser, the second expansion valve, and the second path of the cooler), a fifth circulation loop (a loop formed by connecting a first path of the cooler, the second pump, and a heat exchange path of the battery), and an eleventh circulation loop (a loop formed by connecting the first path of the first condenser, the heater, the radiator, the third pump, and a heat exchange path of the electric drive) operate simultaneously. For operating processes of the second circulation loop, the third circulation loop, the fifth circulation loop, and the eleventh circulation loop, reference may be made to the related descriptions of the thermal management system in FIG. 2. Details are not described herein again.

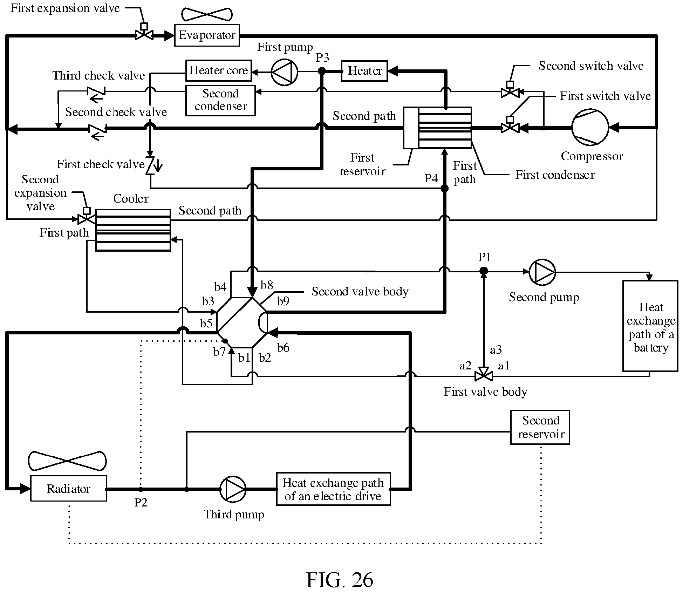

FIG. 26 is a diagram in which the thermal management system 5 shown in FIG. 22 operates in the passenger compartment-only cooling mode. Refer to FIG. 26. In the passenger compartment-only cooling mode, the compressor, the first switch valve, the first expansion valve, and the third pump are turned on; and the second switch valve, the second expansion valve, the first pump, the second pump, and a heater are turned off. When a tenth connecting member connects a fifth port b5 of a second valve body to an eighth port b8 of the second valve body, and an eleventh connecting member connects a sixth port b6 of the second valve body to a ninth port b9 of the second valve body, a second circulation loop (a loop formed by connecting the compressor, the second path of the first condenser, the first expansion valve, and the evaporator) and an eleventh circulation loop (a loop formed by connecting the first path of the first condenser, the heater, the radiator, the third pump, and a heat exchange path of the electric drive) operate simultaneously. For operating processes of the second circulation loop and the eleventh circulation loop, reference may be made to the related descriptions of the thermal management system in FIG. 2. Details are not described herein again.

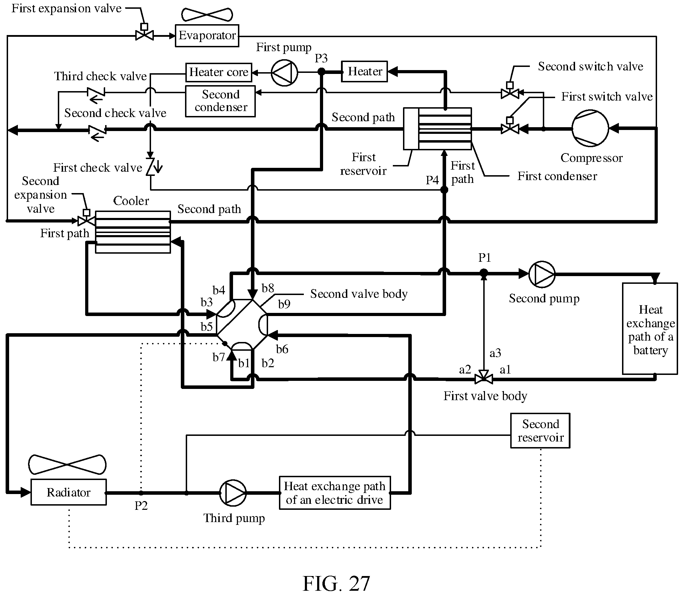

FIG. 27 is a diagram in which the thermal management system 5 shown in FIG. 22 operates in the battery-only cooling mode. Refer to FIG. 27. In the battery-only cooling mode, the compressor, the first switch valve, the second expansion valve, the second pump, and the third pump are turned on; and the second switch valve, the first expansion valve, the first pump, and a heater are turned off. When a first port a1 of a first valve body is connected to a third port a3 of the first valve body, a first connecting member of a second valve body connects a first port b1 of the second valve body to a second port b2 of the second valve body, a second connecting member connects a third port b3 of the second valve body to a fourth port b4 of the second valve body, a tenth connecting member connects a fifth port b5 of the second valve body to an eighth port b8 of the second valve body, and an eleventh connecting member connects a sixth port b6 of the second valve body to a ninth port b9 of the second valve body, a third circulation loop (a loop formed by connecting the compressor, the second path of the first condenser, the second expansion valve, and the second path of the cooler), a fifth circulation loop (a loop formed by connecting a first path of the cooler, the second pump, and a heat exchange path of the battery), and an eleventh circulation loop (a loop formed by connecting the first path of the first condenser, the heater, the radiator, the third pump, and a heat exchange path of the electric drive) operate simultaneously. For operating processes of the third circulation loop, the fifth circulation loop, and the eleventh circulation loop, reference may be made to the related descriptions of the thermal management system in FIG. 2. Details are not described herein again.

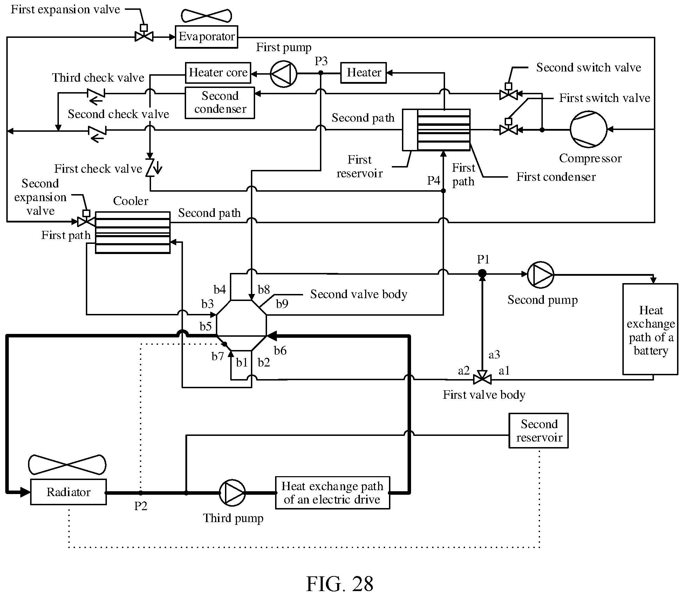

FIG. 28 is a diagram in which the thermal management system 5 shown in FIG. 22 operates in the battery free cooling mode. Refer to FIG. 28. In the battery free cooling mode, the compressor, the first switch valve, the second switch valve, the first expansion valve, and the second expansion valve are turned off; and the second pump and/or the third pump are turned on. When a first port a1 of a first valve body is connected to a second port a2 of the first valve body, a first connecting member of a second valve body connects a first port b1 of the second valve body to a second port b2 of the second valve body, a third connecting member connects a fifth port b5 of the second valve body to a third port b3 of the second valve body, and a seventh connecting member connects a sixth port b6 of the second valve body to a fourth port b4 of the second valve body, a ninth circulation loop (a loop formed by connecting the radiator, a heat exchange path of the electric drive, a heat exchange path of the battery, and a first path of a cooler) operates. For an operating process of the ninth circulation loop, reference may be made to the related descriptions of the thermal management system in FIG. 2. Details are not described herein again.

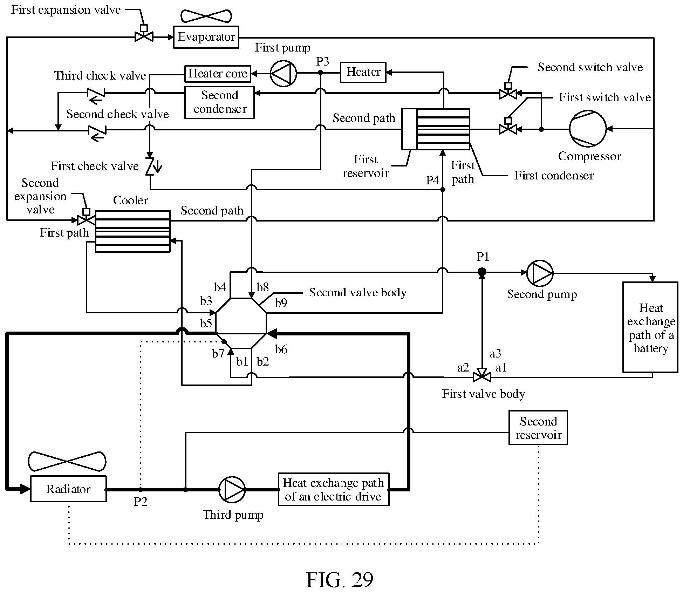

FIG. 29 is a diagram in which the thermal management system 5 shown in FIG. 22 operates in the electric drive free cooling mode. Refer to FIG. 29. In the electric drive free cooling mode, the compressor, the first switch valve, the second switch valve, the first expansion valve, the second expansion valve, the first pump, and the second pump are turned off; and the third pump is turned on. When a second connecting member of a second valve body connects a fifth port b5 of the second valve body to a sixth port b6 of the second valve body, a seventh circulation loop (a loop formed by connecting the radiator, the third pump, and a heat exchange path of the electric drive) operates. For an operating process of the seventh circulation loop, reference may be made to the related descriptions of the thermal management system in FIG. 2. Details are not described herein again.

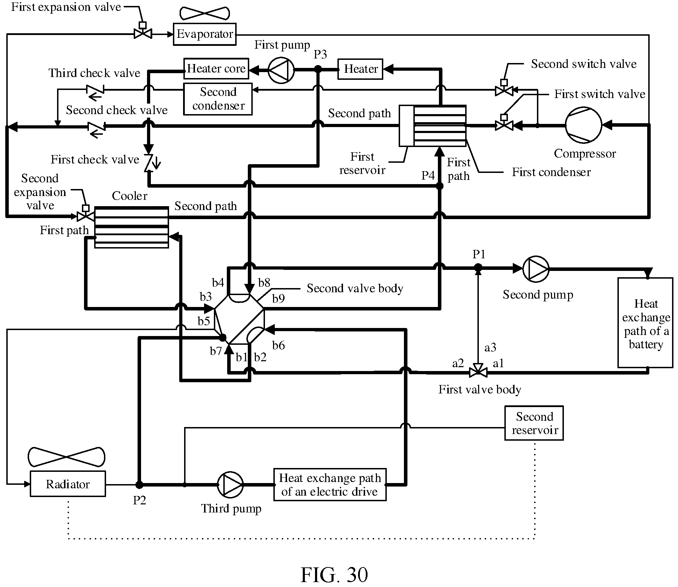

FIG. 30 is a diagram in which the thermal management system 5 shown in FIG. 22 operates in the simultaneous passenger compartment and battery heating mode. Refer to FIG. 30. In the simultaneous passenger compartment and battery heating mode, the compressor, the first switch valve, the second expansion valve, the first pump, the second pump, and the third pump are turned on; and the second switch valve and the first expansion valve are turned off. When a first valve port a1 of a first valve body is connected to a second port a2 of the first valve body, a fourth connecting member of a second valve body connects a sixth port b6 of the second valve body to a second port b2 of the second valve body, a sixth connecting member connects a third port b3 of the second valve body to a seventh port b7 of the second valve body, an eighth connecting member connects an eighth port b8 of the second valve body to a fourth port b4 of the second valve body, and a ninth connecting member connects a ninth port b9 of the second valve body to a first port b1 of the second valve body, a first circulation loop (a loop formed by connecting the first path of the first condenser, a heater, the first pump, and a heater core), a third circulation loop (a loop formed by connecting the compressor, the second path of the first condenser, the second expansion valve, and the second path of the cooler), an eighth circulation loop (a loop formed by connecting a first path of the cooler, the third pump, and a heat exchange path of the electric drive), and a tenth circulation loop (a loop formed by connecting the second path of the first condenser, the heater, the second pump, and a heat exchange path of a battery) operate simultaneously. For operating processes of the first circulation loop, the third circulation loop, the eighth circulation loop, and the tenth circulation loop, reference may be made to the related descriptions of the thermal management system in FIG. 2. Details are not described herein again.

In some possible implementations, in the simultaneous passenger compartment and battery heating mode, the heater may be turned on or off, which may be specifically determined based on heating requirements of the passenger compartment and the battery. This is not limited in this application. It is worth mentioning that, when the heater is in an on state, a heating temperature of the heater can be controlled by adjusting a power of the heater, so that temperatures of the passenger compartment and the battery can be more accurately regulated.

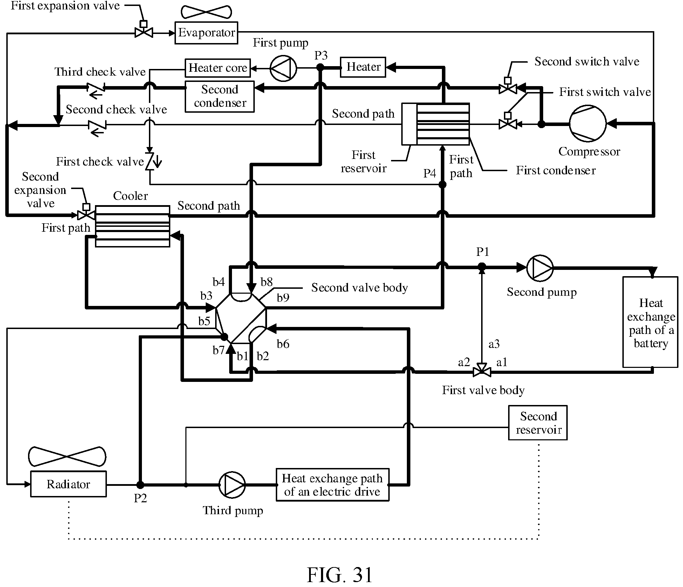

FIG. 31 is another diagram in which the thermal management system 5 shown in FIG. 22 operates in the simultaneous passenger compartment and battery heating mode. Refer to FIG. 31. In this embodiment, the compressor, the second switch valve, the second expansion valve, a heater, the second pump, and the third pump are turned on; and the first switch valve, the first expansion valve, and the first pump are turned off. When a first port a1 of a first valve body is connected to a third port a3 of the first valve body, a fourth connecting member of a second valve body connects a sixth port b6 of the second valve body to a second port b2 of the second valve body, a sixth connecting member connects a third port b3 of the second valve body to a seventh port b7 of the second valve body, an eighth connecting member connects an eighth port b8 of the second valve body to a fourth port b4 of the second valve body, and a ninth connecting member connects a ninth port b9 of the second valve body to a first port b1 of the second valve body, an eighth circulation loop (a loop formed by connecting a first path of the cooler, the third pump, and a heat exchange path of the electric drive), a tenth circulation loop (a loop formed by connecting the second path of the first condenser, the heater, the second pump, and a heat exchange path of the battery), and a thirteenth circulation loop (a loop formed by connecting the compressor, the second condenser, the second expansion valve, and the second path of the cooler) operate simultaneously. For an operating process of the eighth circulation loop, reference may be made to the related descriptions of the thermal management system in FIG. 2. Details are not described herein again.

In the tenth circulation loop, a coolant heated by the heater flows to a node P1 through the eighth port b8 of the second valve body and the fourth port b4 of the second valve body, and enters the heat exchange path of the battery under driving of the second pump. The coolant exchanges heat with the battery in the heat exchange path of the battery to transfer heat to the battery, then enters the first path of the first condenser through the first port b1 of the second valve body and the ninth port b9 of the second valve body, and finally returns, through the first path of the first condenser, to the heater for heating. In this process, the battery is heated by absorbing heat from the coolant. In addition, a heating temperature of the heater can be controlled by adjusting a power of the heater to implement accurate regulation of a battery temperature.

In the thirteenth circulation loop, a high-temperature and high-pressure gaseous refrigerant output by the compressor enters the heat exchange path of the second condenser, and exchanges heat with air in the air supply duct of the passenger compartment in the heat exchange path of the second condenser to become a low-temperature and high-pressure liquid refrigerant. The low-temperature and high-pressure liquid refrigerant is throttled and expanded by the second expansion valve, and then is rapidly cooled to become a low-temperature and low-pressure liquid refrigerant. The low-temperature and low-pressure liquid refrigerant enters the second path of the cooler for evaporation and heat exchange with a coolant in the first path of the cooler, and then becomes a high-temperature and low-pressure gaseous refrigerant. The high-temperature and low-pressure gaseous refrigerant returns to the compressor. In this way, a cycle is completed. In addition, after a temperature of the air in the air supply duct increases by exchanging heat with a high-temperature coolant in the heat exchange path of the second condenser, the air is supplied to the passenger compartment through the air outlet of the passenger compartment to achieve a heating effect of the passenger compartment.

In this embodiment, the thirteenth circulation loop may be used to heat the passenger compartment, so that thermal efficiency of heating the passenger compartment can be effectively improved, and the passenger compartment can be quickly heated, to further help improve ride experience of a user.

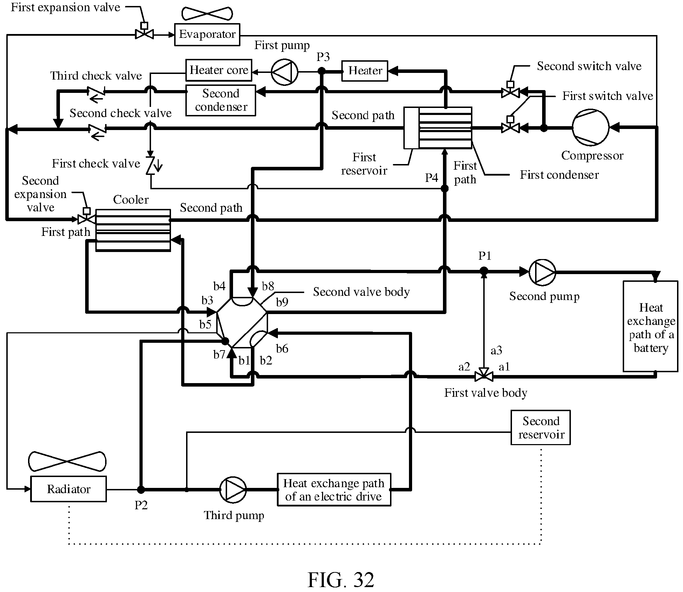

FIG. 32 is another diagram in which the thermal management system 5 shown in FIG. 22 operates in the simultaneous passenger compartment and battery heating mode. Refer to FIG. 32. In this embodiment, the compressor, the first switch valve, the second switch valve, the second expansion valve, the second pump, and the third pump are turned on; and the first expansion valve and a heater are turned off. When a first valve port a1 of a first valve body is connected to a second port a2 of the first valve body, a fourth connecting member of a second valve body connects a sixth port b6 of the second valve body to a second port b2 of the second valve body, a sixth connecting member connects a third port b3 of the second valve body to a seventh port b7 of the second valve body, an eighth connecting member connects an eighth port b8 of the second valve body to a fourth port b4 of the second valve body, and a ninth connecting member connects a ninth port b9 of the second valve body to a first port b1 of the second valve body, a third circulation loop (a loop formed by connecting the compressor, the second path of the first condenser, the second expansion valve, and the second path of the cooler), an eighth circulation loop (a loop formed by connecting a first path of the cooler, the third pump, and a heat exchange path of the electric drive), a tenth circulation loop (a loop formed by connecting the second path of the first condenser, the heater, the second pump, and a heat exchange path of the battery), and a thirteenth circulation loop (a loop formed by connecting the compressor, the second condenser, the second expansion valve, and the second path of the cooler) operate simultaneously. For operating processes of the third circulation loop, the eighth circulation loop, and the tenth circulation loop, reference may be made to the related descriptions of the thermal management system in FIG. 2. For an operating process of the thirteenth circulation loop, reference may be made to the related descriptions in the simultaneous passenger compartment and battery heating mode shown in FIG. 31. Details are not described herein again.

In the simultaneous passenger compartment and battery heating mode shown in FIG. 32, the thermal management system tends to be stable, the thirteenth circulation loop can provide abundant heat for the passenger compartment during operation, and the tenth circulation loop can also obtain abundant heat from the second path of the first condenser to heat the battery. Therefore, the heater can be turned off and energy consumption of the thermal management system can be reduced.

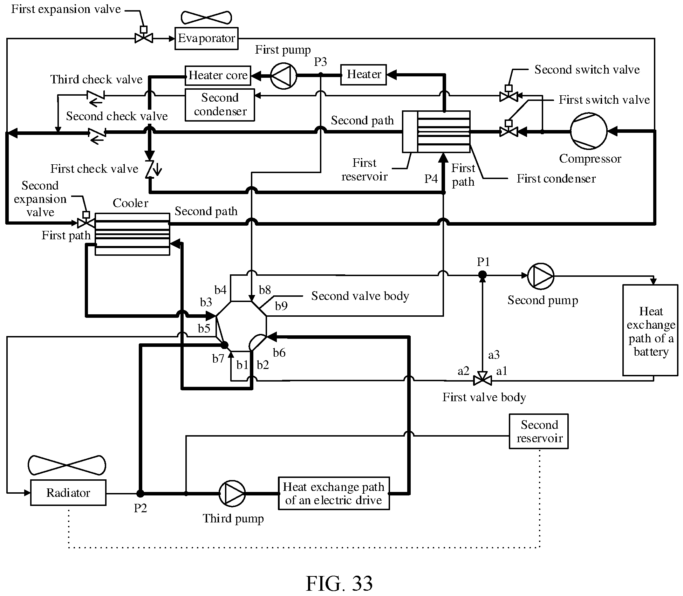

FIG. 33 is a diagram in which the thermal management system 5 shown in FIG. 22 operates in the passenger compartment-only heating mode. Refer to FIG. 33. In the passenger compartment-only heating mode, the compressor, the first switch valve, the second expansion valve, the first pump, and the third pump are turned on; and the second switch valve and the first expansion valve are turned off. When a fourth connecting member of a second valve body connects a sixth port b6 of the second valve body to a second port b2 of the second valve body, and a sixth connecting member connects a third port b3 of the second valve body to a seventh port b7 of the second valve body, a first circulation loop (a loop formed by connecting the first path of the first condenser, a heater, the first pump, and a heater core), a third circulation loop (a loop formed by connecting the compressor, the second path of the first condenser, the second expansion valve, and the second path of the cooler), and an eighth circulation loop (a loop formed by connecting a first path of the cooler, the third pump, and a heat exchange path of the electric drive) operate simultaneously. For operating processes of the first circulation loop, the third circulation loop, and the eighth circulation loop, reference may be made to the related descriptions of the thermal management system in FIG. 2. Details are not described herein again.

When the first circulation loop operates, the heater may be turned on or off, which may be specifically determined based on a temperature requirement of the passenger compartment. This is not limited in this application. It is worth mentioning that, when the heater is in an on state, a heating temperature of the heater can be controlled by adjusting a power of the heater, so that a temperature of the passenger compartment can be more accurately regulated.

Certainly, in some other implementation solutions, based on a heat dissipation requirement of the electric drive, a sixth circulation loop (a loop formed by connecting the first path of the first condenser, a heat exchange path of the radiator, the third pump, and the heat exchange path of the electric drive) may alternatively be used to dissipate heat of the electric drive. In this case, in the passenger compartment-only heating mode, the first circulation loop, the third circulation loop, and the sixth circulation loop operate simultaneously. For an operating process of the sixth circulation loop, reference may also be made to the related descriptions in the thermal management system in FIG. 2. Details are not described herein again.

In addition, in the two passenger compartment-only heating modes, a first port a1 of a first valve body and a third port a3 of the first valve body may be connected, and in this case, a fourth circulation loop (a loop formed by connecting a heat exchange path of a battery and the second pump) enters an operating state, the second pump drives a coolant to circulate through the fourth circulation loop, and the coolant may exchange a small amount of heat with an external environment through a pipeline, to meet a cooling requirement of the battery to a specific extent.

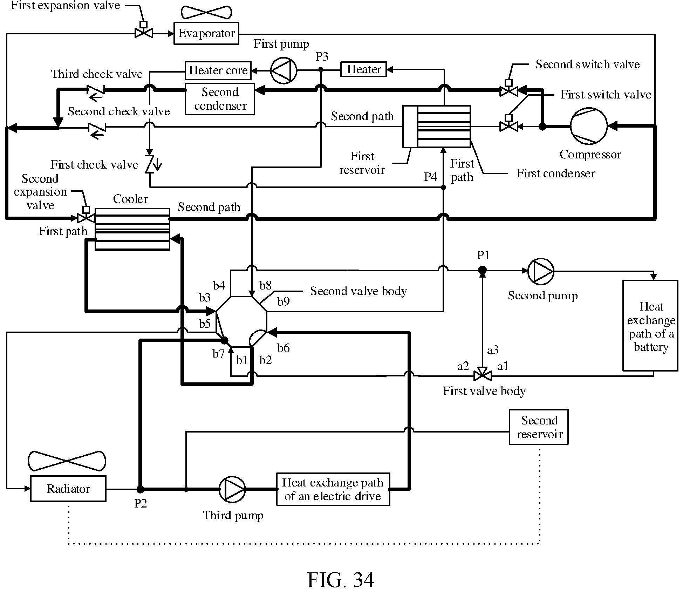

FIG. 34 is another diagram in which the thermal management system 5 shown in FIG. 22 operates in the passenger compartment-only heating mode. Refer to FIG. 34. In this embodiment, the compressor, the second switch valve, the second expansion valve, and the third pump are turned on; and the first switch valve, the first expansion valve, the first pump, and a heater are turned off. When a fourth connecting member of a second valve body connects a sixth port b6 of the second valve body to a second port b2 of the second valve body, and a sixth connecting member connects a third port b3 of the second valve body to a seventh port b7 of the second valve body, an eighth circulation loop (a loop formed by connecting a first path of the cooler, the third pump, and a heat exchange path of the electric drive) and a thirteenth circulation loop (a loop formed by connecting the compressor, the second condenser, the second expansion valve, and the second path of the cooler) operate simultaneously. For an operating process of the eighth circulation loop, reference may be made to the related descriptions of the thermal management system in FIG. 2. For an operating process of the thirteenth circulation loop, reference may be made to the related descriptions in the simultaneous passenger compartment and battery heating mode shown in FIG. 31. Details are not described herein again.

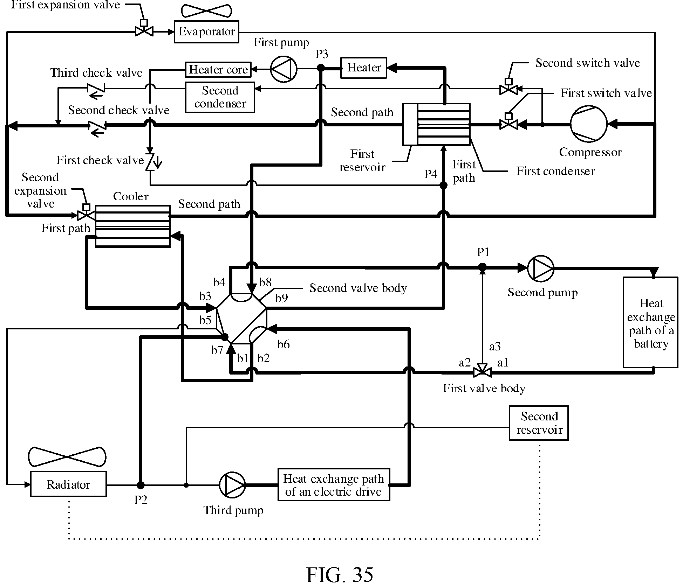

FIG. 35 is a diagram in which the thermal management system 5 shown in FIG. 22 operates in the battery-only heating mode. Refer to FIG. 35. In the battery-only heating mode, the compressor, the first switch valve, the second expansion valve, the second pump, and the third pump are turned on; and the second switch valve, the first expansion valve, and the first pump are turned off. When a first valve port a1 of a first valve body is connected to a second port a2 of the first valve body, a fourth connecting member of a second valve body connects a sixth port b6 of the second valve body to a second port b2 of the second valve body, a sixth connecting member connects a third port b3 of the second valve body to a seventh port b7 of the second valve body, an eighth connecting member connects an eighth port b8 of the second valve body to a fourth port b4 of the second valve body, and a ninth connecting member connects a ninth port b9 of the second valve body to a first port b1 of the second valve body, a third circulation loop (a loop formed by connecting the compressor, a second path of a condenser, the second expansion valve, and the second path of the cooler), an eighth circulation loop (a loop formed by connecting a first path of the cooler, the third pump, and a heat exchange path of the electric drive), and a tenth circulation loop (a loop formed by connecting the second path of the first condenser, a heater, the second pump, and a heat exchange path of the battery) operate simultaneously. For operating processes of the third circulation loop, the eighth circulation loop, and the tenth circulation loop, reference may be made to the related descriptions of the thermal management system in FIG. 2. Details are not described herein again.

Certainly, in some other implementation solutions, based on a heat dissipation requirement of the electric drive, a sixth circulation loop (a loop formed by connecting the first path of the first condenser, a heat exchange path of the radiator, the third pump, and the heat exchange path of the electric drive) may alternatively be used to dissipate heat of the electric drive. In this case, in the battery-only heating mode, the third circulation loop, the sixth circulation loop, and the tenth circulation loop operate simultaneously. For an operating process of the sixth circulation loop, reference may also be made to the related descriptions of the thermal management system in FIG. 2. Details are not described herein again.

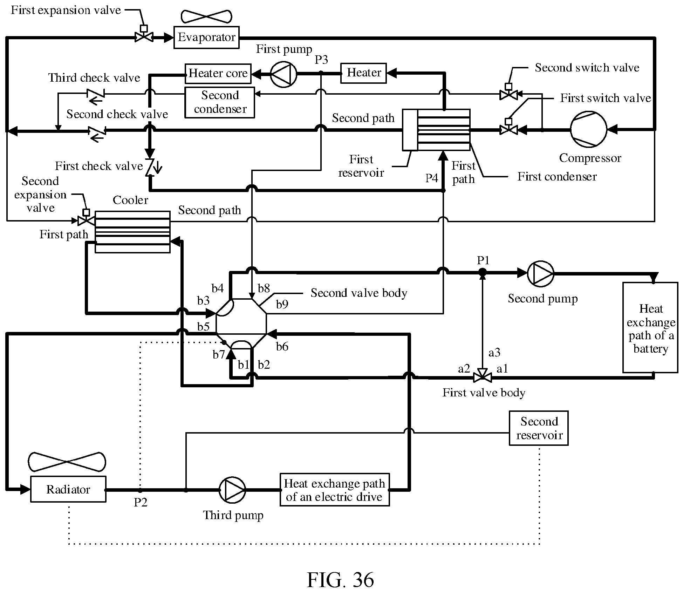

FIG. 36 is a diagram in which the thermal management system 5 shown in FIG. 22 operates in the heating and dehumidification mode. Refer to FIG. 36. In the heating and dehumidification mode, the compressor, the first switch valve, the first expansion valve, the second expansion valve, the first pump, and the second pump are turned on; and the second switch valve is turned off. When a first port a1 of a first valve body is connected to a second port a2 of the first valve body, a first connecting member of a second valve body connects a first port b1 of the second valve body to a second port b2 of the second valve body, and a second connecting member connects a third port b3 of the second valve body to a fourth port b4 of the second valve body, a first circulation loop (a loop formed by connecting the first path of the first condenser, a heater, the first pump, and a heater core), a second circulation loop (a loop formed by connecting the compressor, the second path of the first condenser, the first expansion valve, and the evaporator), a third circulation loop (a loop formed by connecting the compressor, the second path of the first condenser, the second expansion valve, and the second path of the cooler), and a fifth circulation loop (a loop formed by connecting a first path of the cooler, the second pump, and a heat exchange path of the battery) operate simultaneously. For operating processes of the first circulation loop, the second circulation loop, the third circulation loop, and the fifth circulation loop, reference may be made to the related descriptions of the thermal management system in FIG. 2. Details are not described herein again.

In addition, in the heating and dehumidification mode of the passenger compartment, the heater may be turned on or off, which may be specifically determined based on a temperature requirement of the passenger compartment. This is not limited in this application. It is worth mentioning that, when the heater is in an on state, a heating temperature of the heater can be controlled by adjusting a power of the heater, so that a temperature of the passenger compartment can be more accurately regulated.

In some possible implementation solutions, if the electric drive has a heat dissipation requirement, the third pump may be turned on, and a third connecting member of the second valve body connects a fifth port b5 of the second valve body to a sixth port b6 of the second valve body, so that a seventh circulation loop formed by connecting the radiator, the third pump, and a heat exchange path of the electric drive also enters an operating state. For an operating process of the seventh circulation loop, reference may also be made to the related descriptions of the thermal management system in FIG. 2. Details are not described herein again.

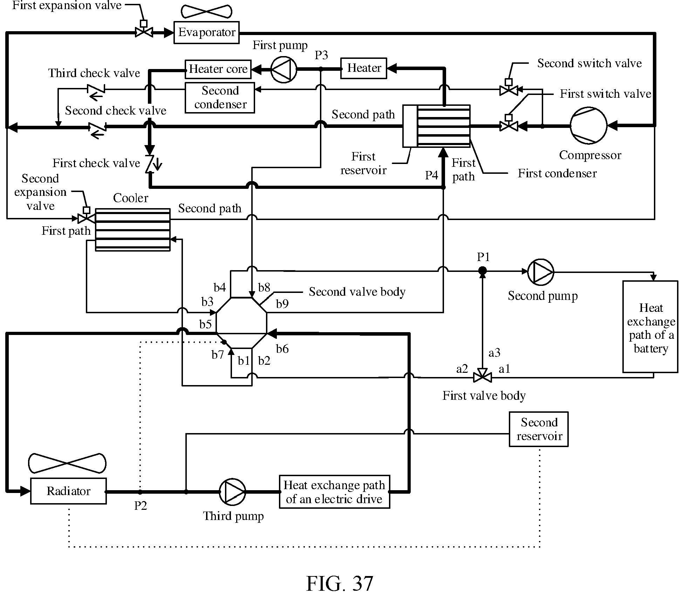

FIG. 37 is another diagram in which the thermal management system 5 shown in FIG. 22 operates in the heating and dehumidification mode. Refer to FIG. 37, in this embodiment, the compressor, the first switch valve, the first expansion valve, and the first pump are turned on; and the second switch valve and the second expansion valve are turned off. A first circulation loop is (a loop formed by connecting the first path of the first condenser, a heater, the first pump, and a heater core) and a second circulation loop (a loop formed by connecting the compressor, the second path of the first condenser, the first expansion valve, and the evaporator) operate simultaneously. For operating processes of the first circulation loop and the second circulation loop, reference may be made to the related descriptions of the thermal management system in FIG. 2. Details are not described herein again.

Similarly, in this solution, the heater may be turned on or off, which may be specifically determined based on a temperature requirement of the passenger compartment. This is not limited in this application. It is worth mentioning that, when the heater is in an on state, a heating temperature of the heater can be controlled by adjusting a power of the heater, so that a temperature of the passenger compartment can be more accurately regulated.

In addition, if the electric drive has a heat dissipation requirement, the third pump may be turned on, and a third connecting member of the second valve body connects a fifth port b5 of the second valve body to a sixth port b6 of the second valve body, so that a seventh circulation loop formed by connecting the radiator, the third pump, and a heat exchange path of the electric drive also enters an operating state. For an operating process of the seventh circulation loop, reference may also be made to the related descriptions of the thermal management system in FIG. 2. Details are not described herein again.

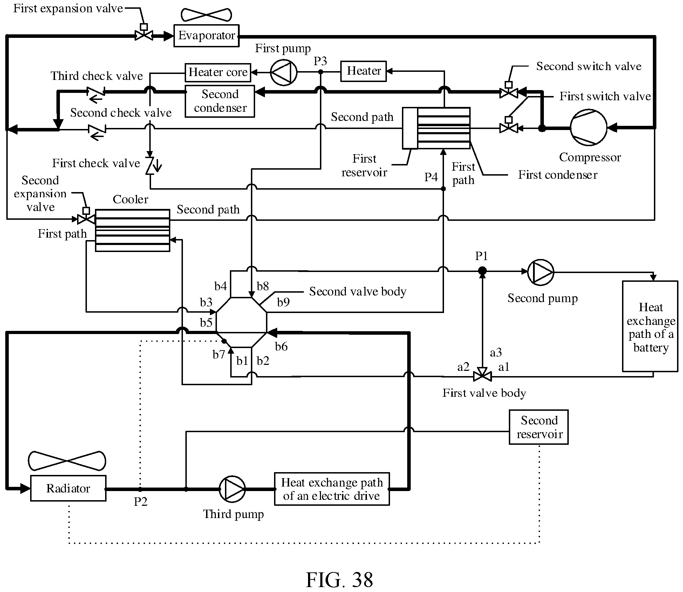

FIG. 38 is another diagram in which the thermal management system 5 shown in FIG. 22 operates in the heating and dehumidification mode. Refer to FIG. 38. In this embodiment, the compressor, the second switch valve, and the first expansion valve are turned on; the first switch valve and the second expansion valve are turned off; and a twelfth circulation loop (a loop formed by connecting the compressor, the second condenser, the first expansion valve, and the evaporator) operates.

In the twelfth circulation loop, a high-temperature and high-pressure gaseous refrigerant output by the compressor enters the heat exchange path of the second condenser, and exchanges heat with air in the air supply duct of the passenger compartment in the heat exchange path of the second condenser to become a low-temperature and high-pressure liquid refrigerant. The low-temperature and high-pressure liquid refrigerant is throttled and expanded by the first expansion valve, and then is rapidly cooled to become a low-temperature and low-pressure liquid refrigerant. The low-temperature and low-pressure liquid refrigerant enters a heat exchange path of the evaporator for evaporation and heat exchange with the air in the air supply duct of the passenger compartment, and then becomes a high-temperature and low-pressure gaseous refrigerant. The high-temperature and low-pressure gaseous refrigerant returns to the compressor. In this way, a cycle is completed.

As mentioned above, in the air supply duct, the evaporator is located upstream of the second condenser. When the twelfth circulation loop operates, the air in the air supply duct first cools down by exchanging heat with a low-temperature refrigerant in the heat exchange path of the evaporator, so that moisture in the air is condensed when cold, and discharged from a condensate pipe of the vehicle. Then the dried air exchanges heat with a high-temperature coolant in the heat exchange path of the second condenser downstream for heating, and is finally supplied to the passenger compartment through the air outlet of the passenger compartment. In other words, when the twelfth circulation loop operates, the air in the air supply duct can be first dehumidified and then heated, and a heating and dehumidification function of the passenger compartment can be finally realized.

In addition, if the electric drive has a heat dissipation requirement, the third pump may be turned on, and a third connecting member of the second valve body connects a fifth port b5 of the second valve body to a sixth port b6 of the second valve body, so that a seventh circulation loop formed by connecting the radiator, the third pump, and a heat exchange path of the electric drive also enters an operating state. For an operating process of the seventh circulation loop, reference may also be made to the related descriptions of the thermal management system in FIG. 2. Details are not described herein again.

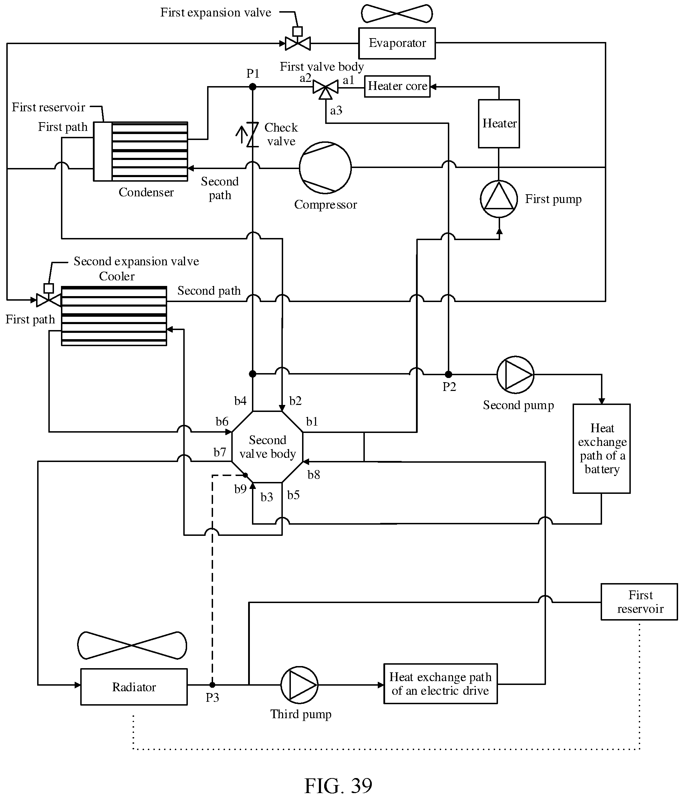

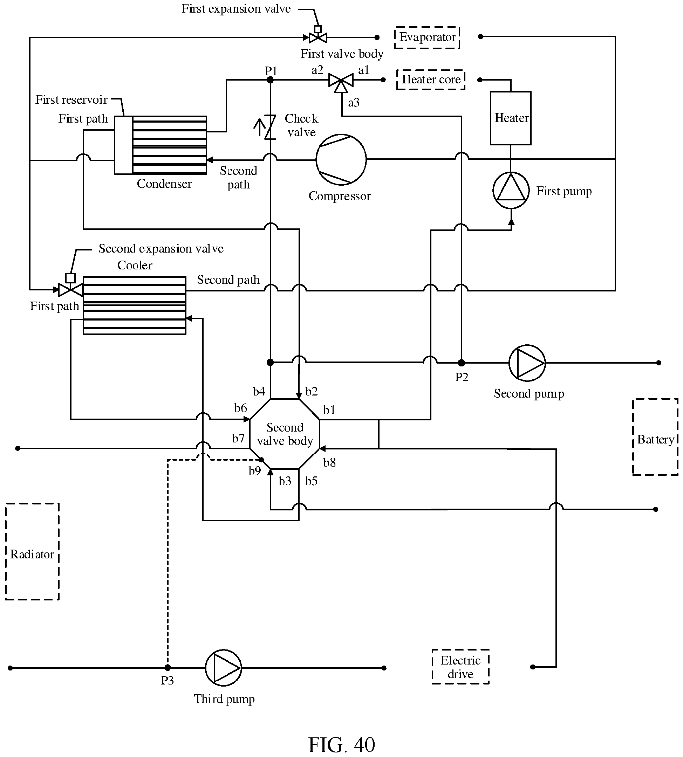

FIG. 39 is a diagram of a connection manner of another thermal management system 5 in a vehicle according to an embodiment of this application. FIG. 40 is a diagram of a structure of the thermal management system 5 shown in FIG. 39. Refer to FIG. 39 and FIG. 40 together. In this embodiment of this application, a thermal management system may include a thermal management assembly, a compressor, a condenser, a first expansion valve, a second expansion valve, a cooler, a first pump, a second pump, and a third pump. The condenser and the cooler each may be a dual-flow channel heat exchanger, for example, a plate heat exchanger. The condenser may include a first path and a second path, and the first path of the condenser and the second path of the condenser are isolated from each other and can perform heat exchange. The cooler may also include a first path and a second path, and the first path of the cooler and the second path of the cooler are isolated from each other and can perform heat exchange. The thermal management assembly can be configured to connect components of the thermal management system, an evaporator, a heater core, a heat exchange path of an electric drive, a heat exchange path of a battery, a radiator, and the like in the vehicle, so that the thermal management system achieves a plurality of operating modes, and meets cooling or heating requirements of a passenger compartment, the battery, and the electric drive.

In some possible implementations, an outlet of the compressor may be connected to an inlet of the second path of the condenser, an outlet of the second path of the condenser is connected to an inlet of a heat exchange path of the evaporator of the vehicle through the first expansion valve, and an outlet of the evaporator is connected to an inlet of the compressor. In this case, the compressor, the second path of the condenser, the first expansion valve, and the evaporator may be sequentially connected to form a first circulation loop. In addition, the outlet of the second path of the condenser may be connected to an inlet of the second path of the cooler through the second expansion valve, so that the outlet of the second path of the cooler may be connected to the inlet of the compressor. In this case, the compressor, the second path of the condenser, the second expansion valve, and the second path of the cooler may be sequentially connected to form a second circulation loop. For example, a heat exchange medium in each of the first circulation loop and the second circulation loop may be a refrigerant, for example, R134a, R1234yf, or R744.

In some embodiments, the thermal management system may further include a first reservoir, and the first reservoir may be disposed at the outlet of the second path of the condenser, and may be assembled with the condenser into an integrated structure. The first reservoir may be configured to store a redundant refrigerant in the first circulation loop or the second circulation loop, to meet requirements of the thermal management system for refrigerants in different operating modes, so as to keep refrigerants/a refrigerant in the first circulation loop and/or the second circulation loop always at a better flow rate, and improve operation reliability and stability of the thermal management system.

In a specific implementation, the thermal management assembly may include a first valve body and a second valve body. The first valve body may include a first port a1, a second port a2, and a third port a3, and a valve core is disposed in the first valve body. The valve core may be configured to connect the first port a1 of the first valve body to the second port a2 of the first valve body, or connect the first port a1 of the first valve body to the third port a3 of the first valve body, or simultaneously connect the first port a1 of the first valve body, the second port a2 of the first valve body, and the third port a3 of the first valve body. The second valve body may include a first port b1, a second port b2, a third port b3, and a fourth port b4. A first connecting member is disposed between the first port b1 of the second valve body and the second port b2 of the second valve body, and the first connecting member may be configured to connect the first port b1 of the second valve body to the second port b2 of the second valve body or disconnect the first port b1 of the second valve body from the second port b2 of the second valve body. A second connecting member is disposed between the third port b3 of the second valve body and the fourth port b4 of the second valve body, and the second connecting member may be configured to connect the third port b3 of the second valve body to the fourth port b4 of the second valve body or disconnect the third port b3 of the second valve body from the fourth port b4 of the second valve body.

In this embodiment of this application, the first port a1 of the first valve body may be connected to an outlet of a heat exchange path of the heater core, the second port a2 of the first valve body may be connected to an inlet of the first path of the condenser, and the third port a3 of the first valve body may be connected to an inlet of the heat exchange path of the battery. The first port b1 of the second valve body may be connected to an inlet of the heat exchange path of the heater core, the second port b2 of the second valve body may be connected to an outlet of the first path of the condenser, the third port b3 of the second valve body may be connected to an outlet of the heat exchange path of the battery, and the fourth port b4 of the second valve body may be connected to the second port a2 of the first valve body.

In addition, the fourth port b4 of the second valve body is connected to the inlet of the first path of the condenser based on a connection relationship between the fourth port b4 of the second valve body and the second port a2 of the first valve body. For example, the second port a2 of the first valve body and the fourth port b4 of the second valve body may meet at a node P1 through a pipeline, and the node P1 is connected to the inlet of the first path of the condenser. Similarly, the fourth port b4 of the second valve body and the inlet of the heat exchange path of the battery are also connected to each other based on a connection relationship between the fourth port b4 of the second valve body and the third port a3 of the first valve body. For example, the third port a3 of the first valve body and the fourth port b4 of the second valve body may meet at a node P2 through a pipeline, and the node P2 is connected to the inlet of the heat exchange path of the battery.

When the first port a1 of the first valve body is connected to the second port a2 of the first valve body, and the first connecting member connects the first port b1 of the second valve body to the second port b2 of the second valve body, the first path of the condenser and the heater core can be connected to form a third circulation loop. The first pump may be disposed in the third circulation loop, for example, may be disposed between the first port b1 of the second valve body and the inlet of the heat exchange path of the heater core, or may be disposed between the second port a2 of the first valve body and the inlet of the first path of the condenser, so as to drive a heat exchange medium to circulate through the third circulation loop. For example, the heat exchange medium in the third circulation loop may be a coolant, for example, a glycol aqueous solution.

When the first port a1 of the first valve body is connected to the third port a3 of the first valve body, the first connecting member connects the first port b1 of the second valve body to the second port b2 of the second valve body, and the second connecting member connects the third port b3 of the second valve body to the fourth port b4 of the second valve body, the outlet of the first path of the condenser is connected to the inlet of the heat exchange path of the heater core through the second port b2 of the second valve body and the first port b1 of the second valve body, the outlet of the heat exchange path of the heater core is connected to the inlet of the heat exchange path of the battery through the first port a1 of the first valve body and the third port a3 of the first valve body, and the outlet of the heat exchange path of the battery is connected to the inlet of the first path of the condenser through the third port b3 of the second valve body and the fourth port b4 of the second valve body. In this case, the first path of the condenser, the first pump, the heater core, and the heat exchange path of the battery may be sequentially connected to form a fourth circulation loop. In addition, the second pump may be disposed in the fourth circulation loop, for example, may be disposed between the node P2 and the inlet of the heat exchange path of the battery, or may be disposed between the outlet of the heat exchange path of the battery and the third port b3 of the second valve body. When the fourth circulation loop operates, both the first pump and the second pump may be in an on state, and the first pump and the second pump jointly drive a heat exchange medium to circulate through the fourth circulation loop, or one of the first pump and the second pump may be turned on to drive a heat exchange medium to circulate through in the fourth circulation loop.

When the second connecting member connects the third port b3 of the second valve body to the fourth port b4 of the second valve body, the inlet and the outlet of the heat exchange path of the battery may be connected to the fourth port b4 of the second valve body through the third port b3 of the second valve body to form a fifth circulation loop. It can be seen that the second pump is also located in the fifth circulation loop, to drive a heat exchange medium to circulate through the fifth circulation loop. For example, the heat exchange medium in the fifth circulation loop may be a coolant, for example, a glycol aqueous solution.

In addition, in order to prevent a coolant in the third circulation loop from flowing reversely to the fourth port b4 of the second valve body at the node P1, a check valve may be further disposed between the fourth port b4 of the second valve body and the node P1, an inlet of the check valve is connected to the fourth port b4 of the second valve body, and an outlet of the check valve is connected to the node P1. It may be understood that the outlet of the check valve is connected to the second port a2 of the first valve body, so that the fourth port b4 of the second valve body is unidirectionally connected to the second port a2 of the first valve body.

In addition, in some possible implementation solutions, the thermal management system may further include a heater, and the heater may be connected between the first port b1 of the second valve body and the inlet of the heat exchange path of the heater core. Further, when the first pump is disposed between the first port b1 of the second valve body and the inlet of the heat exchange path of the heater core, an inlet of the heater may be connected to an outlet of the first pump, and an outlet of the heater may be connected to the inlet of the heat exchange path of the heater core. It is easily understood that the heater exists in both the third circulation loop and the fourth circulation loop.

Continue to refer to FIG. 39 and FIG. 40. In some possible implementation solutions, the second valve body may further include a fifth port b5 and a sixth port b6. A third connecting member is disposed between the fifth port b5 of the second valve body and the third port b3 of the second valve body, and the third connecting member may be configured to connect the fifth port b5 of the second valve body to the third port b3 of the second valve body or disconnect the fifth port b5 of the second valve body from the third port b3 of the second valve body. A fourth connecting member may be disposed between the sixth port b6 of the second valve body and the fourth port b4 of the second valve body, and the fourth connecting member may be configured to connect the sixth port b6 of the second valve body to the fourth port b4 of the second valve body or disconnect the sixth port b6 of the second valve body from the fourth port b4 of the second valve body. In a specific implementation, the fifth port b5 of the second valve body and the sixth port b6 of the second valve body may be separately connected to the first path of the cooler. For example, the fifth port b5 of the second valve body may be connected to an inlet of the first path of the cooler, and the sixth port b6 of the second valve body may be connected to an outlet of the first path of the cooler.

When the third connecting member connects the fifth port b5 of the second valve body to the third port b3 of the second valve body, and the fourth connecting member connects the sixth port b6 of the second valve body to the fourth port b4 of the second valve body, the fifth port b5 of the second valve body may be connected to the outlet of the heat exchange path of the battery through the third port b3 of the second valve body, and the sixth port b6 of the second valve body may be connected to the inlet of the heat exchange path of the battery through the fourth port b4 of the second valve body. In this case, the first path of the cooler, the second pump, and the heat exchange path of the battery can be connected through corresponding ports of the second valve body to form a sixth circulation loop. The second pump may drive a heat exchange medium to circulate through the sixth circulation loop. For example, the heat exchange medium in the sixth circulation loop may be a coolant, for example, a glycol aqueous solution.

Continue to refer to FIG. 39 and FIG. 40. In some possible implementation solutions, the second valve body may further include a seventh port b7 and an eighth port b8. A fifth connecting member is disposed between the seventh port b7 of the second valve body and the sixth port b6 of the second valve body, and the fifth connecting member may be configured to connect the seventh port b7 of the second valve body to the sixth port b6 of the second valve body or disconnect the seventh port b7 of the second valve body from the sixth port b6 of the second valve body. A sixth connecting member is disposed between the eighth port b8 of the second valve body and the fifth port b5 of the second valve body, and the sixth connecting member may be configured to connect the eighth port b8 of the second valve body to the fifth port b5 of the second valve body or disconnect the eighth port b8 of the second valve body from the fifth port b5 of the second valve body. In a specific implementation, the seventh port b7 of the second valve body and the eighth port b8 of the second valve body may be separately connected to a first path assembly. Herein, the first path assembly may include a heat exchange path of the radiator, a heat exchange path of the electric drive, and a pipeline connected between an outlet of the heat exchange path of the radiator and an inlet of the heat exchange path of the electric drive. For example, the seventh port b7 of the second valve body may be connected to an inlet of the heat exchange path of the radiator, and the eighth port b8 of the second valve body may be connected to an outlet of the heat exchange path of the electric drive.

When the fifth connecting member connects the seventh port b7 of the second valve body to the sixth port b6 of the second valve body, and the sixth connecting member connects the eighth port b8 of the second valve body to the fifth port b5 of the second valve body, the seventh port b7 of the second valve body may be connected to the outlet of the first path of the cooler through the sixth port b6 of the second valve body, and the eighth port b8 of the second valve body may be connected to the inlet of the first path of the cooler through the fifth port b5 of the second valve body. In this case, the first path of the cooler, the radiator, and the heat exchange path of the electric drive can be connected through corresponding ports of the second valve body to form a seventh circulation loop. The third pump may be disposed in the seventh circulation loop. For example, the third pump may be connected between the outlet of the heat exchange path of the radiator and the inlet of the heat exchange path of the electric drive, to drive a heat exchange medium to circulate through the seventh circulation loop. For example, the heat exchange medium in the seventh circulation loop may be a coolant, for example, a glycol aqueous solution.

In some possible implementation solutions, a seventh connecting member may be further disposed between the seventh port b7 of the second valve body and the eighth port b8 of the second valve body, and the seventh connecting member may be configured to connect the seventh port b7 of the second valve body to the eighth port b8 of the second valve body or disconnect the seventh port b7 of the second valve body from the eighth port b8 of the second valve body. It is easily understood that, when the seventh connecting member connects the seventh port b7 of the second valve body to the eighth port b8 of the second valve body, the inlet of the heat exchange path of the radiator may be directly connected to the outlet of the heat exchange path of the electric drive. In this case, the radiator, the third pump, and the heat exchange path of the electric drive can be connected through corresponding ports of the second valve body to form an eighth circulation loop, and the third pump may drive a heat exchange medium to circulate through the eighth circulation loop. For example, the heat exchange medium in the eighth circulation loop may be a coolant, for example, a glycol aqueous solution.

Continue to refer to FIG. 39 and FIG. 40. A seventh connecting member may be further disposed between the fourth port b4 of the second valve body and the eighth port b8 of the second valve body, and the seventh connecting member may be configured to connect the fourth port b4 of the second valve body to the eighth port b8 of the second valve body or disconnect the fourth port b4 of the second valve body from the eighth port b8 of the second valve body. The fourth port b4 of the second valve body and the eighth port b8 of the second valve body may be configured to connect the heat exchange path of the electric drive to the heat exchange path of the battery.

When the third connecting member connects the fifth port b5 of the second valve body to the third port b3 of the second valve body, the fifth connecting member connects the seventh port b7 of the second valve body to the sixth port b6 of the second valve body, and the seventh connecting member connects the fourth port b4 of the second valve body to the eighth port b8 of the second valve body, the first path of the cooler, the radiator, the third pump, the heat exchange path of the electric drive, the second pump, and the heat exchange path of the battery can be connected through corresponding ports of the second valve body to form a ninth circulation loop. When the ninth circulation loop operates, both the second pump and the third pump may be in an on state, and the second pump and the third pump jointly drive a heat exchange medium to circulate through the ninth circulation loop, or one of the second pump and the third pump may be turned on to drive a heat exchange medium to circulate through the ninth circulation loop. For example, the heat exchange medium in the ninth circulation loop may be a coolant, for example, a glycol aqueous solution.

Continue to refer to FIG. 39 and FIG. 40. In some possible implementation solutions, the second valve body may further include a ninth port b9. An eighth connecting member may be disposed between the ninth port b9 of the second valve body and the sixth port b6 of the second valve body, and the eighth connecting member may be configured to connect the ninth port b9 of the second valve body to the sixth port b6 of the second valve body or disconnect the ninth port b9 of the second valve body from the sixth port b6 of the second valve body. The ninth port b9 of the second valve body and the eighth port b8 of the second valve body may be separately connected to the heat exchange path of the electric drive. As described above, the eighth port b8 of the second valve body may be connected to the outlet of the heat exchange path of the electric drive, so that the ninth port b9 of the second valve body can be connected to the inlet of the heat exchange path of the electric drive.

When the sixth connecting member connects the eighth port b8 of the second valve body to the fifth port b5 of the second valve body, and the eighth connecting member connects the ninth port b9 of the second valve body to the sixth port b6 of the second valve body, the ninth port b9 of the second connecting member may be connected to the outlet of the first path of the cooler through the sixth port b6 of the second valve body, and the eighth port b8 of the second valve body may be connected to the inlet of the first path of the cooler through the fifth port b5 of the second valve body. In this case, the first path of the cooler and the heat exchange path of the electric drive may be connected to form a tenth circulation loop. For example, a heat exchange medium in the tenth circulation loop may be a coolant, for example, a glycol aqueous solution.

In some possible implementation solutions, an inlet of the third pump may be connected to the outlet of the heat exchange path of the radiator and the ninth port b9 of the second valve body. In other words, the third pump may also be located in the tenth circulation loop, to drive the heat exchange medium to circulate through the tenth circulation loop. For example, the ninth port b9 of the second valve body and the outlet of the heat exchange path of the radiator may meet at a node P3 through a pipeline, the node P3 is connected to the inlet of the heat exchange path of the electric drive, and the third pump is disposed between the node P3 and the heat exchange path of the electric drive.

Continue to refer to FIG. 39 and FIG. 40. In some possible implementation solutions, a ninth connecting member may be further disposed between the second port b2 of the second valve body and the seventh port b7 of the second valve body, and the ninth connecting member may be configured to connect the second port b2 of the second valve body to the seventh port b7 of the second valve body or disconnect the second port b2 of the second valve body from the seventh port b7 of the second valve body. A tenth connecting member may be further disposed between the second port b2 of the second valve body and the ninth port b9 of the second valve body, and the tenth connecting member may be configured to connect the second port b2 of the second valve body to the ninth port b9 of the second valve body or disconnect the second port b2 of the second valve body from the ninth port b9 of the second valve body. An eleventh connecting member may be further disposed between the first port b1 of the second valve body and the eighth port b8 of the second valve body, and the eleventh connecting member may be configured to connect the first port b1 of the second valve body to the eighth port b8 of the second valve body or disconnect the first port b1 of the second valve body from the eighth port b8 of the second valve body.

When the first port b1 of the first valve body is connected to the second port b2 of the first valve body, the ninth connecting member connects the second port b2 of the second valve body to the seventh port b7 of the second valve body. When the eleventh connecting member connects the first port b1 of the second valve body to the eighth port b8 of the second valve body, the outlet of the first path of the condenser is connected to the heat exchange path of the radiator through the second port b2 of the second valve body and the seventh port b7 of the second valve body, and the heat exchange path of the electric drive is connected to an inlet of the first pump through the eighth port b8 of the second valve body and the first port b1 of the second valve body. In this case, the first path of the condenser, the radiator, the third pump, the heat exchange path of the electric drive, the first pump, the heater, and the heater core are connected to form an eleventh circulation loop, and the first pump and the third pump may drive a heat exchange medium to circulate through the eleventh circulation loop. When the eleventh circulation loop operates, both the first pump and the third pump may be in an on state, and the first pump and the third pump jointly drive the heat exchange medium to circulate through the eleventh circulation loop, or one of the first pump and the third pump may be turned on to drive the heat exchange medium to circulate through in the eleventh circulation loop.

When the first port b1 of the first valve body is connected to the second port b2 of the first valve body, the tenth connecting member connects the second port b2 of the second valve body to the ninth port b9 of the second valve body. When the eleventh connecting member connects the first port b1 of the second valve body to the eighth port b8 of the second valve body, the outlet of the first path of the condenser is connected to the node P3 through the second port b2 of the second valve body and the ninth port b9 of the second valve body. In this case, the first path of the condenser, the third pump, the heat exchange path of the electric drive, the first pump, the heater, and the heater core are connected to form a twelfth circulation loop. Similarly, when the twelfth circulation loop operates, both the first pump and the third pump may be in an on state, and the first pump and the third pump jointly drive a heat exchange medium to circulate through the twelfth circulation loop, or one of the first pump and the third pump may be turned on to drive a heat exchange medium to circulate through the twelfth circulation loop.

In some possible implementation solutions, a second reservoir may be further disposed in the vehicle, and the second reservoir may be connected to any one of the third circulation loop, the fourth circulation loop, the fifth circulation loop, the sixth circulation loop, the seventh circulation loop, the eighth circulation loop, the ninth circulation loop, the tenth circulation loop, the eleventh circulation loop, and the twelfth circulation loop through a pipeline to store an excess coolant in each loop or supplement a coolant for each loop, so as to meet requirements of the thermal management system for coolants in different operating modes, keep a coolant in each loop always at a better flow rate, and improve operation reliability and stability of the thermal management system.

For example, as shown in FIG. 39, a liquid outlet of the second reservoir may be connected to a pipeline between the heat exchange path of the radiator and the inlet of the third pump, or may be directly connected to the heat exchange path of the radiator.

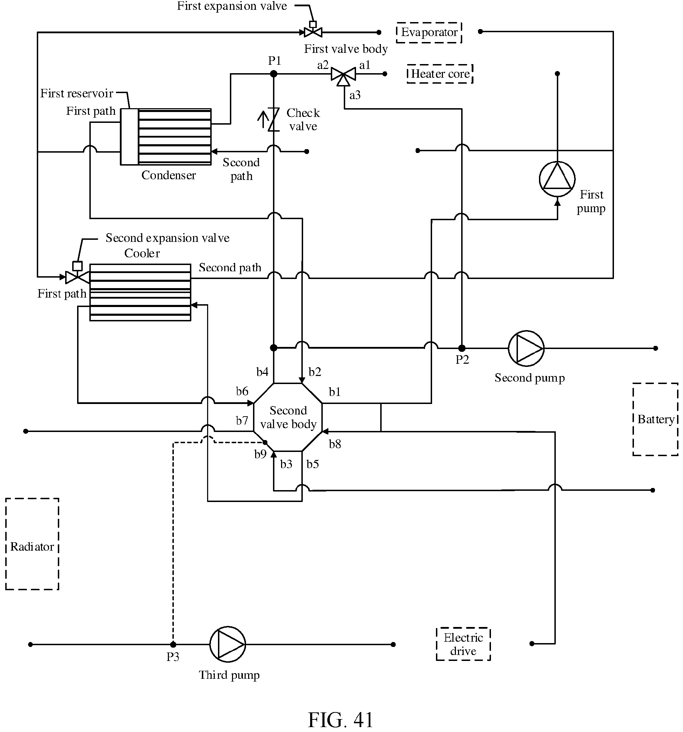

FIG. 41 is a diagram of a structure of the thermal management system 5 shown in FIG. 39. Refer to FIG. 41. In this embodiment, the thermal management system may include a thermal management assembly, a first condenser, a first expansion valve, a second expansion valve, a cooler, a first pump, a second pump, and a third pump. Structures and arrangement manners of the foregoing components are roughly the same as those in the foregoing embodiments. Connection states of ports of the first valve body and the second valve body may also be set with reference to the foregoing embodiment. Details of these components are not described herein again. Different from the foregoing embodiment, in this embodiment of this application, the thermal management system does not include a compressor, that is, the compressor may be disposed independently of the foregoing components. Decoupling of the compressor from the foregoing components of the thermal management system is beneficial to reducing arrangement difficulty of the thermal management system and the compressor in the vehicle. In addition, the thermal management system in this embodiment may alternatively not include a heater. Therefore, the heater may also be disposed independently of the foregoing components. This is beneficial to further reducing arrangement difficulty of the thermal management system and the compressor in the vehicle.

The embodiments shown in FIG. 39 to FIG. 41 describe a connection relationship between ports of the first valve body and the second valve body in the thermal management system. According to a quantity of ports of the first valve body and the second valve body, in a specific implementation, the first valve body may be a three-way valve, and the second valve body may be a nine-way valve. Further, the first valve body may be an electric three-way valve, to control a connection relationship and a flow rate of the ports of the first valve body. Similarly, the second valve body may be an electric nine-way valve, to control a connection relationship between the ports of the second valve body. In addition, in some possible implementation solutions, connecting members of the second valve body may be an integrated structure or may be independent of each other in structure; or a plurality of connecting members may be divided into several groups, and one or more connecting members in each group are an integrated structure.

In embodiments of this application, connection states of the ports of the first valve body and the second valve body are adjusted, so that one or more circulation loops of the thermal management system can be connected and the thermal management system can achieve a plurality of operating modes. For example, these operating modes include, but are not limited to, a simultaneous passenger compartment and battery cooling mode, a passenger compartment-only cooling mode, a battery-only cooling mode, a battery free cooling mode, an electric drive free cooling mode, a simultaneous passenger compartment and battery heating mode, a passenger compartment-only heating mode, a battery-only heating mode, and a heating and dehumidification mode. The following describes an operating process of each of the operating modes in detail.

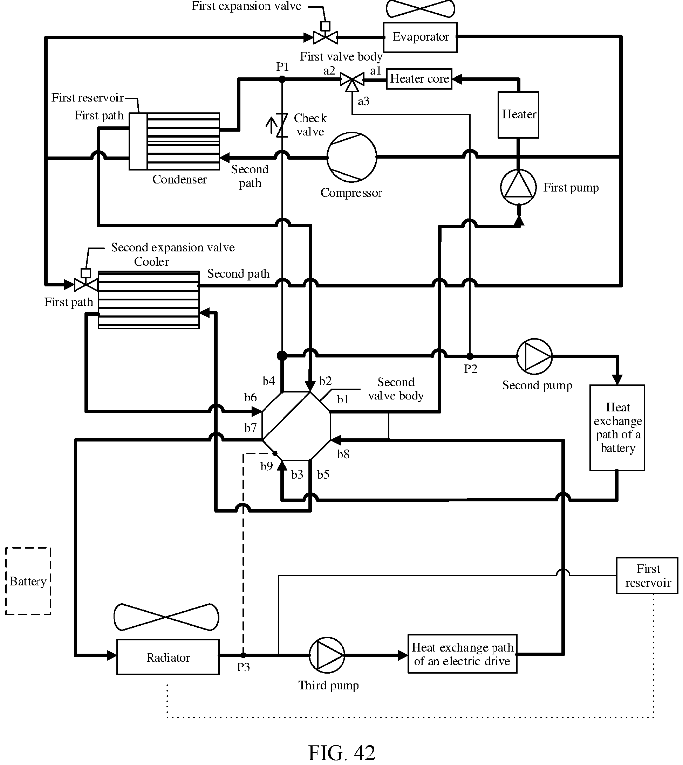

FIG. 42 is a diagram in which the thermal management system 5 shown in FIG. 39 operates in a simultaneous passenger compartment and battery cooling mode. Refer to FIG. 42. The simultaneous passenger compartment and battery cooling mode is applicable to a scenario in which the passenger compartment and the battery need to be cooled simultaneously under a high temperature condition in summer. In this mode, the compressor, the first expansion valve, the second expansion valve, the first pump and/or the third pump, and the second pump are turned on; and the heater is turned off. When the first port a1 of the first valve body is connected to the second port a2 of the first valve body, the third connecting member of the second valve body connects the fifth port b5 of the second valve body to the third port b3 of the second valve body, the fourth connecting member connects the sixth port b6 of the second valve body to the fourth port b4 of the second valve body, the ninth connecting member connects the second port b2 of the second valve body to the seventh port b7 of the second valve body, and the eleventh connecting member connects the first port b1 of the second valve body to the eighth port b8 of the second valve body, the first circulation loop (a loop formed by connecting the compressor, the second path of the condenser, the first expansion valve, and the evaporator), the second circulation loop (a loop formed by connecting the compressor, the second path of the condenser, the second expansion valve, and the second path of the cooler), the sixth circulation loop (a loop formed by connecting the first path of the cooler, the second pump, and the heat exchange path of the battery), and the eleventh circulation loop (a loop formed by connecting the first path of the condenser, the radiator, the third pump, the heat exchange path of the electric drive, the first pump, the heater, and the heater core) operate simultaneously.

In the first circulation loop, a high-temperature and high-pressure gaseous refrigerant output by the compressor enters the second path of the condenser, and condenses and exchanges heat with a coolant in the first path of the condenser to become a low-temperature and high-pressure liquid refrigerant. The low-temperature and high-pressure liquid refrigerant is throttled and expanded by the first expansion valve, and then is rapidly cooled to become a low-temperature and low-pressure liquid refrigerant. The low-temperature and low-pressure liquid refrigerant enters the heat exchange path of the evaporator for evaporation and heat exchange with air in an air supply duct of the passenger compartment, and then becomes a high-temperature and low-pressure gaseous refrigerant. The high-temperature and low-pressure gaseous refrigerant returns to the compressor. In this way, a cycle is completed. In addition, after the air in the air supply duct cools down by exchanging heat with a low-temperature refrigerant in the heat exchange path of the evaporator, the air is supplied to the passenger compartment through an air outlet of the passenger compartment to achieve a cooling effect of the passenger compartment.

In the second circulation loop, a high-temperature and high-pressure gaseous refrigerant output by the compressor enters the second path of the condenser, and condenses and exchanges heat with a coolant in the first path of the condenser to become a low-temperature and high-pressure liquid refrigerant. The low-temperature and high-pressure liquid refrigerant is throttled and expanded by the second expansion valve, and then is rapidly cooled to become a low-temperature and low-pressure liquid refrigerant. The low-temperature and low-pressure liquid refrigerant enters the second path of the cooler for evaporation and heat exchange with a coolant in the first path of the cooler, and then becomes a high-temperature and low-pressure gaseous refrigerant. The high-temperature and low-pressure gaseous refrigerant returns to the compressor. In this way, a cycle is completed.

The sixth circulation loop also operates synchronously when the third circulation loop operates. In the sixth circulation loop, after a coolant in the first path of the cooler cools down by exchanging heat with a low-temperature refrigerant in the second path of the cooler, the coolant enters the heat exchange path of the battery under driving of the second pump, exchanges heat with the battery, and then returns to the first path of the cooler. The battery is cooled by transferring heat to the coolant.

In the eleventh circulation loop, at least one of the first pump and the third pump is turned on to drive a coolant to circulate through the eleventh circulation loop. A temperature of a coolant in the first path of the condenser increases after the coolant exchanges heat with a refrigerant in the second path of the condenser. Then the coolant flows to the inlet of the heat exchange path of the radiator through the second port b2 of the second valve body and the seventh port b7 of the second valve body, cools down by exchanging heat with air flowing over a surface of the radiator in the heat exchange path of the radiator, enters the heat exchange path of the electric drive, performs primary heat exchange with the electric drive, reaches the heater through the eighth port b8 of the second valve body and the first port b1 of the second valve body, passes through the heater and the heater core, returns to the first path of the condenser, and exchanges heat with a high-temperature refrigerant in the second path of the condenser. In this way, a cycle is completed. In this process, the electric drive can implement heat dissipation and cooling by transferring heat to the coolant, and the coolant is still in a low temperature range although the temperature of the coolant increases by exchanging heat with the electric drive. Therefore, a cooling capacity can be further transferred to refrigerants/a refrigerant in the first circulation loop and/or the second circulation loop through the condenser.

It should be noted that a flow-steering member in the air supply duct is in a first guide state in an operation process of the eleventh circulation loop, so that air flows at the air inlet side of the air supply duct pass through the evaporator, and are supplied to the air outlet of the passenger compartment by bypassing the heater core. The heater core and the heater are equivalent to a circulation pipe, and neither of them performs a heat exchange function.

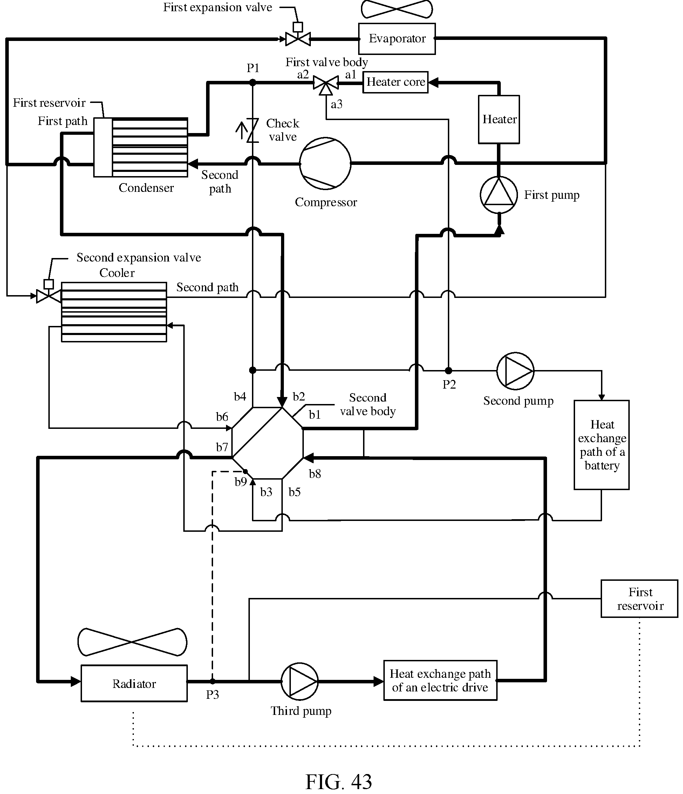

FIG. 43 is a diagram in which the thermal management system 5 shown in FIG. 39 operates in the passenger compartment-only cooling mode. Refer to FIG. 43. The passenger compartment-only cooling mode is applicable to a scenario in which the battery has no cooling requirement but the passenger compartment has a cooling requirement. In this mode, the compressor, the first expansion valve, the first pump and/or the third pump are turned on; and the second expansion valve, the second pump, and the heater are turned off. When the first port a1 of the first valve body is connected to the second port a2 of the first valve body, the ninth connecting member of the second valve body connects the second port b2 of the second valve body to the seventh port b7 of the second valve body, and the eleventh connecting member connects the first port b1 of the second valve body to the eighth port b8 of the second valve body, the first circulation loop (a loop formed by connecting the compressor, the second path of the condenser, the first expansion valve, and the evaporator) and the eleventh circulation loop (a loop formed by connecting the first path of the condenser, the radiator, the third pump, the heat exchange path of the electric drive, the first pump, the heater, and the heater core) operate simultaneously. For operating processes of the first circulation loop and the eleventh circulation loop, reference may be made to the related descriptions in the simultaneous passenger compartment and battery cooling mode. Details are not described herein again.

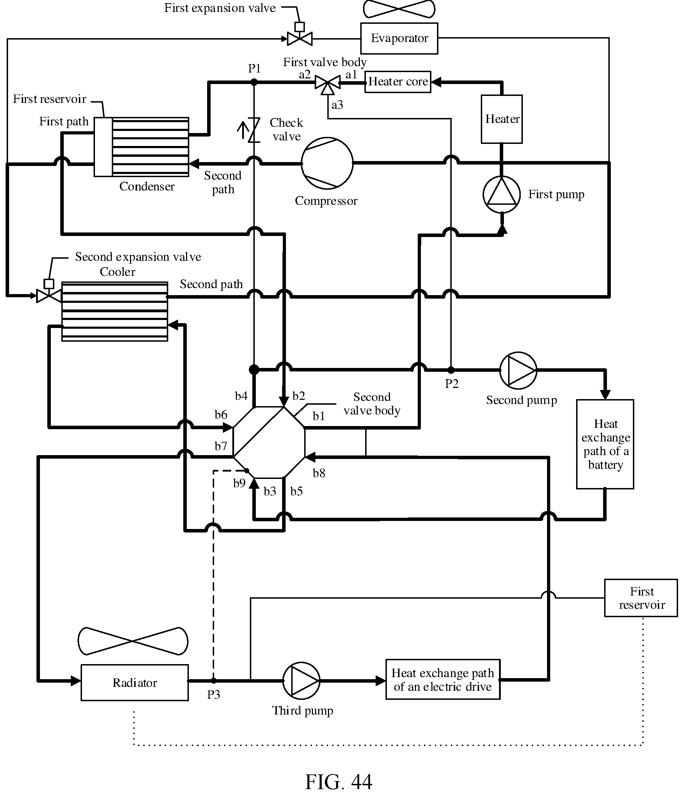

FIG. 44 is a diagram in which the thermal management system 5 shown in FIG. 39 operates in the battery-only cooling mode. Refer to FIG. 44. The battery-only cooling mode is applicable to a scenario in which the passenger compartment has no cooling requirement but the battery has a cooling requirement, for example, in a case of fast charging of the battery. In this mode, the compressor, the second expansion valve, the first pump and/or the third pump, and the second pump are turned on; and the first expansion valve and the heater are turned off. When the first port a1 of the first valve body is connected to the second port a2 of the first valve body, the third connecting member of the second valve body connects the fifth port b5 of the second valve body to the third port b3 of the second valve body, the fourth connecting member connects the sixth port b6 of the second valve body to the fourth port b4 of the second valve body, the ninth connecting member connects the second port b2 of the second valve body to the seventh port b7 of the second valve body, and the eleventh connecting member connects the first port b1 of the second valve body to the eighth port b8 of the second valve body, the second circulation loop (a loop formed by connecting the compressor, the second path of the condenser, the second expansion valve, and the second path of the cooler), the sixth circulation loop (a loop formed by connecting the first path of the cooler, the second pump, and the heat exchange path of the battery), and the eleventh circulation loop (a loop formed by connecting the first path of the condenser, the radiator, the third pump, the heat exchange path of the electric drive, the first pump, the heater, and the heater core) operate simultaneously. For operating processes of the first circulation loop, the sixth circulation loop, and the eleventh circulation loop, reference may be made to the related descriptions in the simultaneous passenger compartment and battery cooling mode. Details are not described herein again.

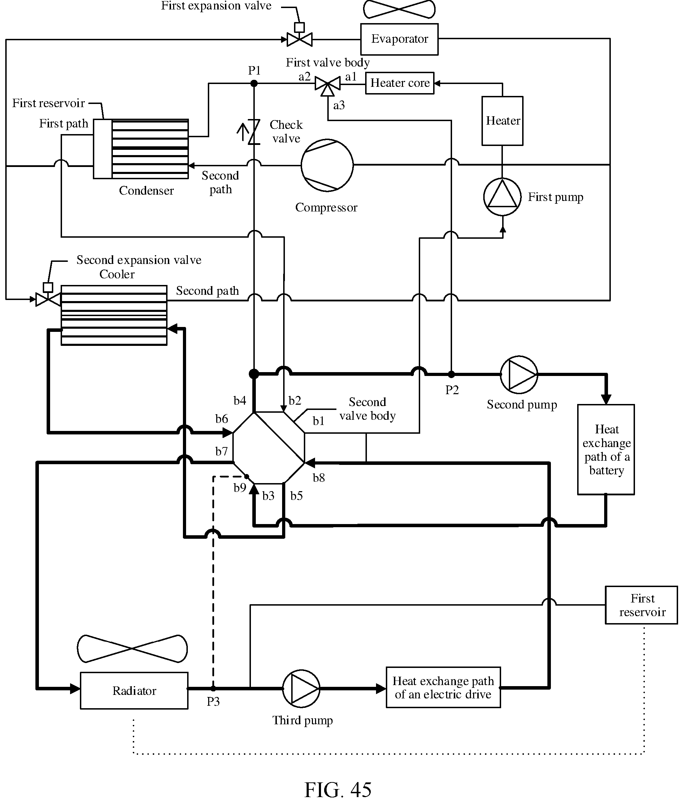

FIG. 45 is a diagram in which the thermal management system 5 shown in FIG. 39 operates in the battery free cooling mode. Refer to FIG. 45. The battery free cooling mode is applicable to a scenario in which the passenger compartment has no cooling or heating requirement, the battery has a cooling requirement, and the electric drive has a heat dissipation requirement. In this mode, the compressor, the first expansion valve, the second expansion valve, and the heater are turned off; and the second pump and/or the third pump are turned on. When the third connecting member of the second valve body connects the fifth port b5 of the second valve body to the third port b3 of the second valve body, the fifth connecting member connects the seventh port b7 of the second valve body to the sixth port b6 of the second valve body, and the seventh connecting member connects the fourth port b4 of the second valve body to the eighth port b8 of the second valve body, the ninth circulation loop (a loop formed by connecting the radiator, the third pump, the heat exchange path of the electric drive, the first pump, the heat exchange path of the battery, and the first path of the cooler) operates.

In the ninth circulation loop, at least one of the second pump and the third pump is turned on to drive a coolant to circulate through the ninth circulation loop. A low-temperature coolant output through the heat exchange path of the radiator enters the heat exchange path of electric drive, exchanges heat with the electric drive, and takes away heat generated by the electric drive. Then the coolant enters the heat exchange path of the battery through the eighth port b8 of the second valve body and the fourth port b4 of the second valve body, further exchanges heat with the battery, and takes away the heat generated by the battery. The coolant undergoing heat exchange and temperature rise enters the first path of the cooler through the third port b3 of the second valve body and the fifth port b5 of the second valve body, finally returns to the heat exchange path of the radiator through the first path of the cooler, the sixth port b6 of the second valve body, and the seventh port b7 of the second valve body, cools down by exchanging heat with air flowing over a surface of the radiator, and then enters the heat exchange path of the electric drive again. In this process, the electric drive and the battery implement heat dissipation and cooling by transferring heat to the coolant. In addition, the first path of the cooler may be considered as a flow duct in this loop and does not perform a heat exchange function.

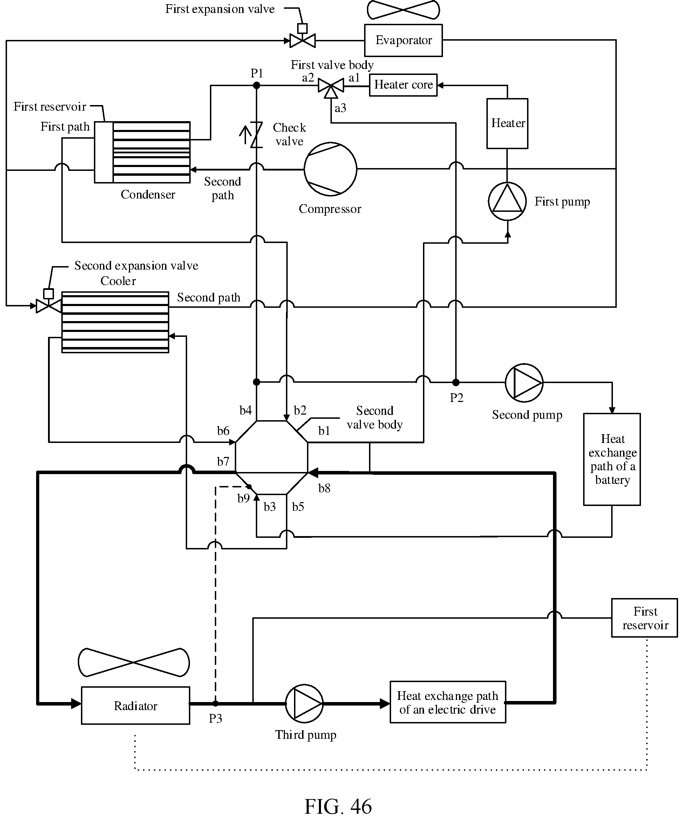

FIG. 46 is a diagram in which the thermal management system 5 shown in FIG. 39 operates in the electric drive free cooling mode. Refer to FIG. 46. The electric drive free cooling mode is applicable to a scenario in which neither the passenger compartment nor the battery has a cooling or heating requirement, and the electric drive has a heat dissipation requirement. In this mode, the compressor, the first expansion valve, the second expansion valve, the first pump, the second pump, and the heater are turned off; and the third pump is turned on. When the seventh connecting member of the second valve body connects the seventh port b7 of the second valve body to the eighth port b8 of the second valve body, the eighth circulation loop (a loop formed by connecting the radiator, the third pump, and the heat exchange path of the electric drive) operates.

In the eighth circulation loop, a high-temperature coolant enters the heat exchange path of the radiator, cools down by exchanging heat with air flowing over a surface of the radiator, enters the heat exchange path of the electric drive under driving of the third pump, exchanges heat with the electric drive, and returns to the heat exchange path of the radiator through the eighth port b8 of the second valve body and the seventh port b7 of the second valve body. In this way, a cycle is completed. In this process, the electric drive can implement heat dissipation and cooling by transferring heat to the coolant.

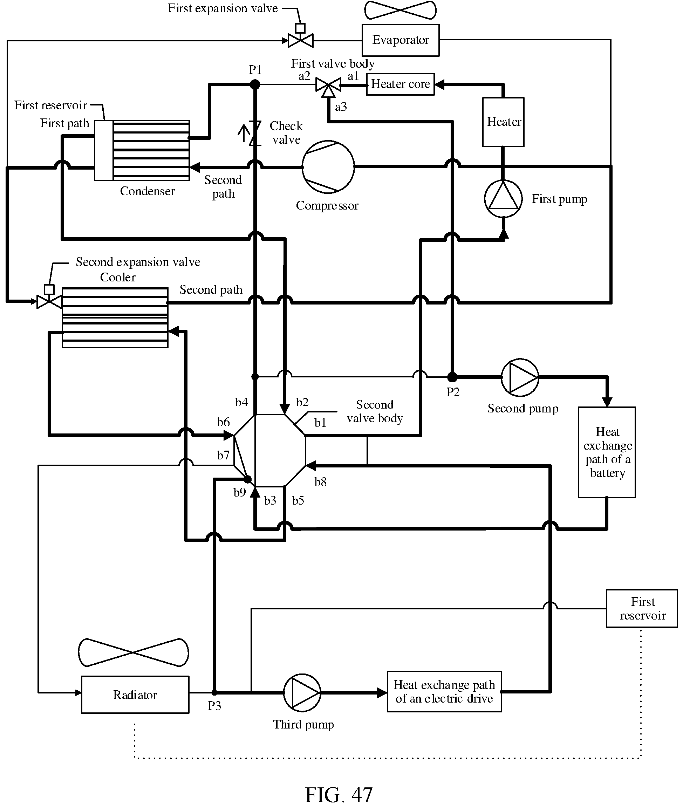

FIG. 47 is a diagram in which the thermal management system 5 shown in FIG. 39 operates in the simultaneous passenger compartment and battery heating mode. Refer to FIG. 47. The simultaneous passenger compartment and battery heating mode is applicable to a scenario in which both the passenger compartment and the battery have a heating requirement and the electric drive has a heat dissipation requirement. In this mode, the compressor, the second expansion valve, the first pump and/or the second pump, and the third pump are turned on; and the first expansion valve is turned off. When the first valve port a1 of the first valve body is connected to the third port a3 of the first valve body, the first connecting member of the second valve body connects the first port b1 of the second valve body to the second port b2 of the second valve body, the second connecting member connects the third port b3 of the second valve body to the fourth port b4 of the second valve body, the sixth connecting member connects the eighth port b8 of the second valve body to the fifth port b5 of the second valve body, and the eighth connecting member connects the ninth port b9 of the second valve body to the sixth port b6 of the second valve body, the second circulation loop (a loop formed by connecting the compressor, the second path of the condenser, the second expansion valve, and the second path of the cooler), the fourth circulation loop (a loop formed by connecting the first path of the condenser, the first pump, the heater, the heater core, the second pump, and the heat exchange path of the battery), and the tenth circulation loop (a loop formed by connecting the first path of the cooler, the third pump, and the heat exchange path of the electric drive) operate simultaneously. For an operating process of the second circulation loop, reference may be made to the related descriptions in the simultaneous passenger compartment and battery cooling mode. Details are not described herein again.

In the fourth circulation loop, a temperature of a coolant in the first path of the condenser increases after the coolant exchanges heat with a refrigerant in the second path of the condenser. Then the coolant enters the first pump through the second port b2 of the second valve body and the first port b1 of the second valve body, enters the heat exchange path of the heater core through the heater under driving of the first pump, cools down by exchanging heat with air in the air supply duct of the passenger compartment in the heat exchange path of the heater core, enters the second pump through the first port a1 of the first valve body and the third port a3 of the first valve body, enters the heat exchange path of the battery under driving of the second pump, exchanges heat with the battery in the heat exchange path of the battery, transfers heat to the battery, finally reaches the node P1 through the third port b3 of the second valve body and the fourth port b4 of the second valve body, and returns to the first path of the condenser through the node P1. In this way, a cycle is completed. In this process, after a temperature of the air in the air supply duct increases by exchanging heat with a high-temperature coolant in the heat exchange path of the heater core, the air is supplied to the passenger compartment through the air outlet of the passenger compartment to achieve a heating effect of the passenger compartment. The coolant is still in a high temperature range although the temperature of the coolant decreases by exchanging heat with the air in the air supply duct in the heater core. Therefore, heat can be further transferred to the battery through the heat exchange path of the battery, so that a temperature of the battery can increase through absorption of the heat of the coolant.

In the tenth circulation loop, a temperature of a coolant in the first path of the cooler decreases after the coolant exchanges heat with a refrigerant in the second path of the cooler. Then the coolant flows to the node P3 through the sixth port b6 of the second valve body and the ninth port b9 of the second valve body, enters the heat exchange path of the electric drive under driving of the third pump, exchanges heat with the electric drive and takes away heat generated by the electric drive, and then returns to the first path of the cooler through the eighth port b8 of the second valve body and the fifth port b5 of the second valve body. In this process, the electric drive implements heat dissipation and cooling by transferring heat to the coolant.

In some possible implementation solutions, in the simultaneous passenger compartment and battery heating mode, the heater may be turned on or off, which may be specifically determined based on heating requirements of the passenger compartment and the battery. For example, when the heating requirements of the passenger compartment and the battery are low, the heater may be in an off state. In this case, heat required by the passenger compartment and the battery is all provided by the condenser, and the heater is equivalent to a flow pipe and does not perform a heating function. When the heating requirements of the passenger compartment and the battery are high, the heater may be in an on state. The temperature of the coolant in the first path of the condenser increases after the coolant exchanges heat with a refrigerant in the second path of the condenser. Then the coolant is further heated in the heater, and sequentially enters the heat exchange path of the heater core and the heat exchange path of the battery for heat exchange.

In addition, heating temperatures of the passenger compartment and the battery can be regulated by using the heater, and a flow rate of a coolant in the fourth circulation loop can be controlled by adjusting powers of the first pump and the second pump. In this way, a temperature of the coolant in the fourth circulation loop can be regulated, to further control the heating temperatures of the passenger compartment and the battery.

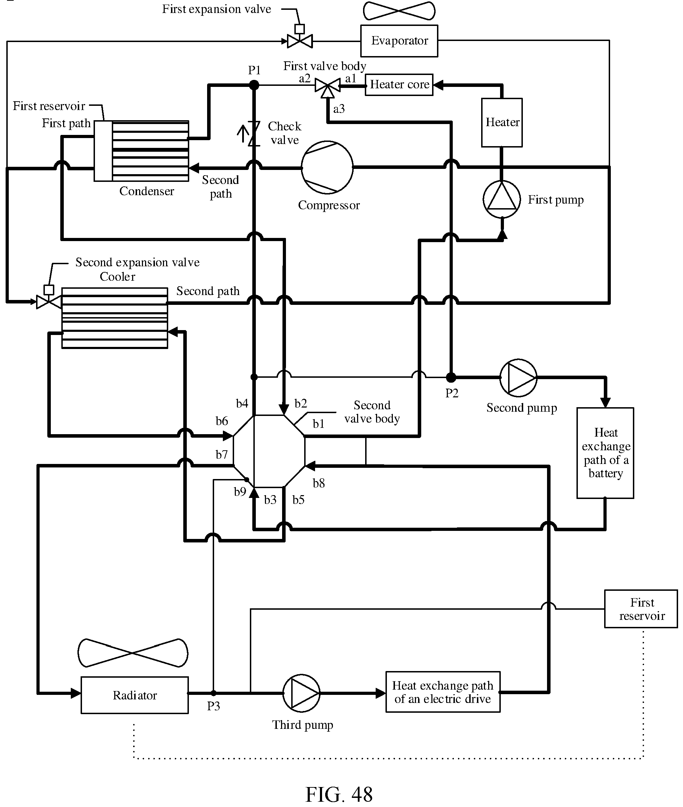

FIG. 48 is another diagram in which the thermal management system 5 shown in FIG. 39 operates in the simultaneous passenger compartment and battery heating mode. Refer to FIG. 48. In this embodiment, the compressor, the second expansion valve, the first pump, the second pump, and the third pump are turned on; and the first expansion valve is turned off. When the first valve port a1 of the first valve body is connected to the third port a3 of the first valve body, the first connecting member of the second valve body connects the first port b1 of the second valve body to the second port b2 of the second valve body, the second connecting member connects the third port b3 of the second valve body to the fourth port b4 of the second valve body, the fifth connecting member connects the seventh port b7 of the second valve body to the sixth port b6 of the second valve body, and the sixth connecting member connects the eighth port b8 of the second valve body to the fifth port b5 of the second valve body, a second circulation loop (a loop formed by connecting the compressor, the second path of the condenser, the second expansion valve, and the second path of the cooler), the fourth circulation loop (a loop formed by connecting the first path of the condenser, the first pump, the heater, the heater core, the second pump, and the heat exchange path of the battery), and the seventh circulation loop (a loop formed by connecting the first path of the cooler, the radiator, and the heat exchange path of the electric drive) operate simultaneously. For operating processes of the second circulation loop and the fourth circulation loop, reference may be made to the related descriptions in the simultaneous passenger compartment and battery heating mode. Details are not described herein again.

In the seventh circulation loop, a temperature of a coolant in the first path of the cooler decreases after the coolant exchanges heat with a refrigerant in the second path of the cooler. Then the coolant enters the heat exchange path of the radiator through the sixth port b6 of the second valve body and the seventh port b7 of the second valve body, further cools down by exchanging heat with air flowing over a surface of the radiator in the heat exchange path of the radiator, then enters the heat exchange path of the electric drive under driving of the third pump, exchanges heat with the electric drive and takes away the heat generated by the electric drive, and then returns to the first path of the cooler through the eighth port b8 of the second valve body and the fifth port b5 of the second valve body. In this process, the electric drive implements heat dissipation and cooling by transferring heat to the coolant.

It can be seen that, compared with a solution shown in FIG. 47, in this solution, a heating loop of the passenger compartment and the battery is not changed. A difference is that the tenth circulation loop is used to dissipate heat of the electric drive in the solution shown in FIG. 47, while the seventh circulation loop is used to dissipate heat of the electric drive in this solution. The radiator is introduced, so that a temperature of a coolant at the inlet of the heat exchange path of the electric drive can be further reduced, to achieve a better heat dissipation effect. In an actual application, the solution provided in FIG. 47 or FIG. 48 may be selected based on a heat dissipation requirement of the electric drive. Details are not described herein again.

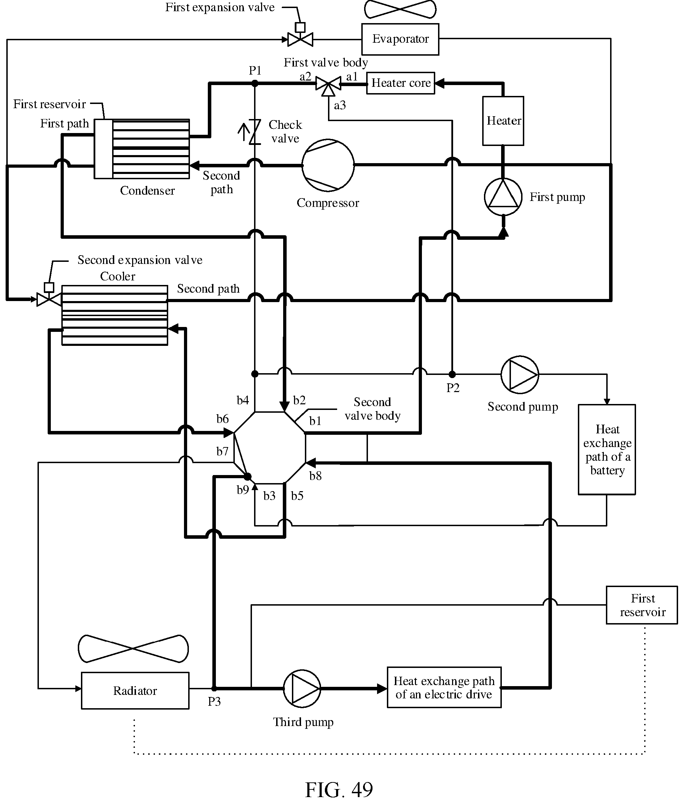

FIG. 49 is a diagram in which the thermal management system 5 shown in FIG. 39 operates in the passenger compartment-only heating mode. Refer to FIG. 49. The passenger compartment-only heating mode is applicable to a scenario in which the passenger compartment has a heating requirement and the electric drive has a heat dissipation requirement. The compressor, the second expansion valve, the first pump, and the third pump are turned on; and the first expansion valve is turned off. When the first port a1 of the first valve body is connected to the second port a2 of the first valve body, the first connecting member of the second valve body connects the first port b1 of the second valve body to the second port b2 of the second valve body, the sixth connecting member connects the eighth port b8 of the second valve body to the fifth port b5 of the second valve body, and the eighth connecting member connects the ninth port b9 of the second valve body to the sixth port b6 of the second valve body, the second circulation loop (a loop formed by connecting the compressor, the second path of the condenser, the second expansion valve, and the second path of the cooler), the third circulation loop (a loop formed by connecting the first path of the condenser, the first pump, the heater, and the heater core), and the tenth circulation loop (a loop formed by connecting the first path of the cooler, the third pump, and the heat exchange path of the electric drive) operate simultaneously. For operating processes of the second circulation loop and the tenth circulation loop, reference may be made to the related descriptions in the simultaneous passenger compartment and battery heating mode. Details are not described herein again.

In the third circulation loop, a temperature of a coolant in the first path of the condenser increases after the coolant exchanges heat with a refrigerant in the second path of the condenser. The coolant enters the first pump through the second port b2 of the second valve body and the first port b1 of the second valve body, enters the heat exchange path of the heater core through the heater under driving of the first pump, cools down by exchanging heat with air in the air supply duct of the passenger compartment in the heat exchange path of the heater core, and returns to the first path of the first condenser through the first port a1 of the first valve body and the second port a2 of the first valve body. In this way, a cycle is completed. In addition, after a temperature of the air in the air supply duct increases by exchanging heat with a high-temperature coolant in the heat exchange path of the heater core, the air is supplied to the passenger compartment through the air outlet of the passenger compartment to achieve a heating effect of the passenger compartment.

When the third circulation loop operates, the heater may be turned on or off, which may be specifically determined based on a temperature requirement of the passenger compartment. This is not limited in this application. It is worth mentioning that, when the heater is in an on state, a heating temperature of the heater can be controlled by adjusting a power of the heater, so that a temperature of the passenger compartment can be more accurately regulated.

In some other implementation solutions, based on a heat dissipation requirement of the electric drive, the seventh circulation loop (a loop formed by connecting the first path of the cooler, the radiator, and the heat exchange path of the electric drive) may alternatively be used to dissipate heat of the electric drive. In this case, in the passenger compartment-only heating mode, the second circulation loop, the third circulation loop, and the seventh circulation loop operate simultaneously. For an operating process of the seventh circulation loop, reference may also be made to the related descriptions in the simultaneous passenger compartment and battery heating mode. Details are not described herein again.

In addition, in the two passenger compartment-only heating modes, the second connecting member of the second valve body may connect the third port b3 of the second valve body to the fourth port b4 of the second valve body, and in this case, the fifth circulation loop (a loop formed by connecting the heat exchange path of the battery and the second pump) enters an operating state, the second pump drives a coolant to circulate through the fifth circulation loop, and the coolant may exchange a small amount of heat with an external environment through a pipeline, to meet a cooling requirement of the battery to a specific extent.

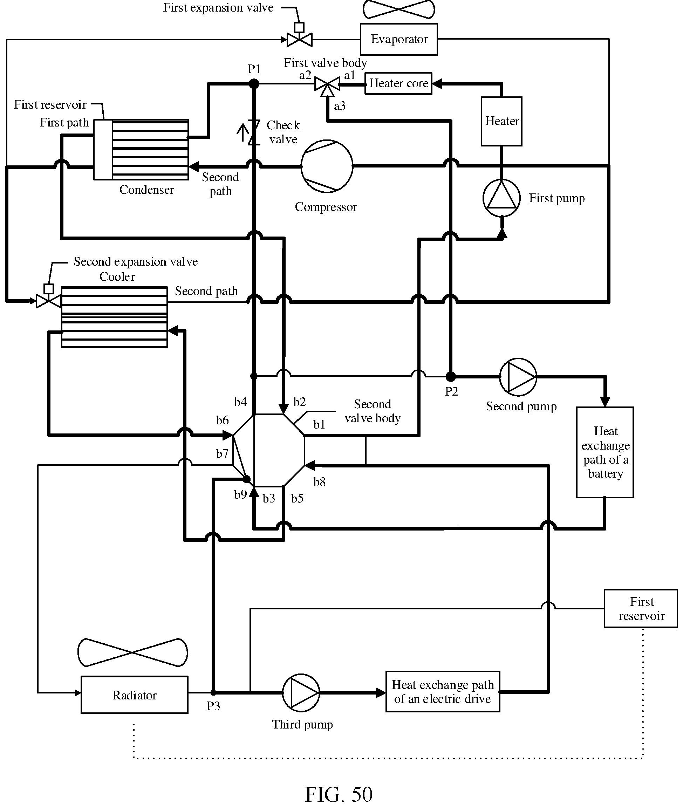

FIG. 50 is a diagram in which the thermal management system 5 shown in FIG. 39 operates in the battery-only heating mode. Refer to FIG. 50. The battery-only heating mode is applicable to a scenario in which the passenger compartment has no cooling or heating requirement, the battery has a heating requirement, and the electric drive has a heat dissipation requirement. In this mode, the compressor, the second expansion valve, the first pump and/or the second pump, and the third pump are turned on; and the first expansion valve is turned off. When the first valve port a1 of the first valve body is connected to the third port a3 of the first valve body, the first connecting member of the second valve body connects the first port b1 of the second valve body to the second port b2 of the second valve body, the second connecting member connects the third port b3 of the second valve body to the fourth port b4 of the second valve body, the sixth connecting member connects the eighth port b8 of the second valve body to the fifth port b5 of the second valve body, and the eighth connecting member connects the ninth port b9 of the second valve body to the sixth port b6 of the second valve body, the second circulation loop (a loop formed by connecting the compressor, the second path of the condenser, the second expansion valve, and the second path of the cooler), the fourth circulation loop (a loop formed by connecting the first path of the condenser, the first pump, the heater, the heater core, the second pump, and the heat exchange path of the battery), and the tenth circulation loop (a loop formed by connecting the first path of the cooler, the third pump, and the heat exchange path of the electric drive) operate simultaneously. For operating processes of the second circulation loop, the fourth circulation loop, and the tenth circulation loop, reference may be made to the related descriptions in the simultaneous passenger compartment and battery heating mode. Details are not described herein again.

It is worth mentioning that, in the battery-only heating mode, in an operation process of the fourth circulation loop, a fan in the air supply duct may be in a closed state, and a flow-steering member may be switched to a first guiding state, so as to reduce heat exchange of a coolant in the heater core. In this case, the heater core is equivalent to a circulation pipe and does not perform a heat exchange function.

In some other implementation solutions, based on a heat dissipation requirement of the electric drive, the seventh circulation loop (a loop formed by connecting the first path of the cooler, the radiator, and the heat exchange path of the electric drive) may alternatively be used to dissipate heat of the electric drive. In this case, in the passenger compartment-only heating mode, the second circulation loop, the third circulation loop, and the seventh circulation loop operate simultaneously. For an operating process of the seventh circulation loop, reference may also be made to the related descriptions in the simultaneous passenger compartment and battery heating mode. Details are not described herein again.

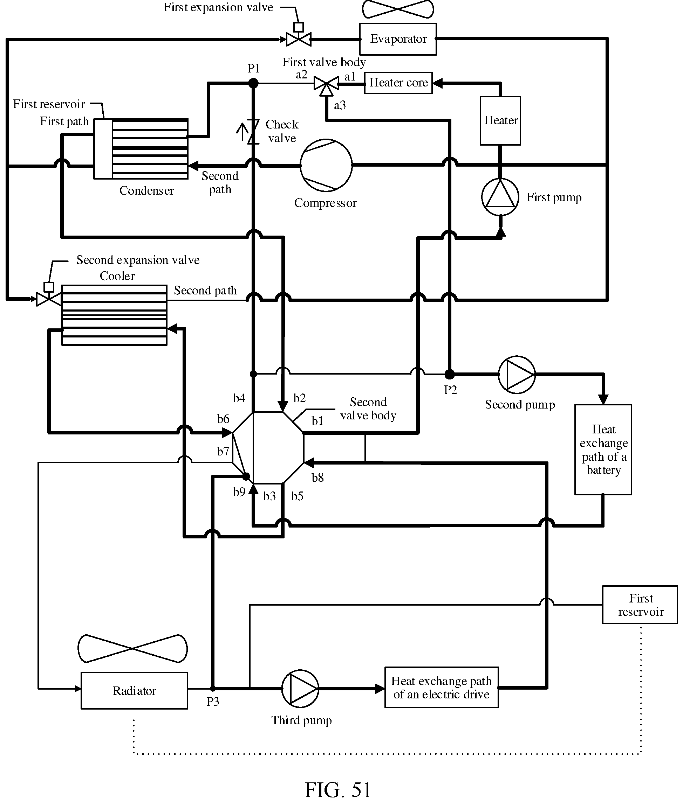

FIG. 51 is a diagram in which the thermal management system 5 shown in FIG. 39 operates in the heating and dehumidification mode. Refer to FIG. 51. The heating and dehumidification mode is applicable to a scenario in which the passenger compartment has heating and dehumidification requirements and the battery has a cooling requirement, for example, in spring and autumn, during long-term driving in winter, and during charging or idling in winter. In this mode, the compressor, the first expansion valve, the second expansion valve, the first pump, and the second pump are turned on. When the first port a1 of the first valve body is connected to the second port a2 of the first valve body, the first connecting member of the second valve body connects the first port b1 of the second valve body to the second port b2 of the second valve body, the third connecting member connects the fifth port b5 of the second valve body to the third port b3 of the second valve body, and the fourth connecting member connects the sixth port b6 of the second valve body to the fourth port b4 of the second valve body, the first circulation loop (a loop formed by connecting the compressor, the second path of the condenser, the first expansion valve, and the evaporator), the second circulation loop (a loop formed by connecting the condenser, the second path of the compressor, the second expansion valve, and the second path of the cooler), the third circulation loop (a loop formed by connecting the first path of the condenser, the first pump, the heater, and the heater core), and the sixth circulation loop (a loop formed by connecting the first path of the cooler, the second pump, and the heat exchange path of the battery) operate simultaneously. For operating processes of the first circulation loop, the second circulation loop, the third circulation loop, and the sixth circulation loop, reference may be made to the related descriptions in the simultaneous passenger compartment and battery cooling mode and the simultaneous passenger compartment and battery heating mode. Details are not described herein again.

As mentioned above, in the air supply duct, the evaporator is located upstream of the heater core. When the first circulation loop and the third circulation loop operate, air in the air supply duct first cools down by exchanging heat with a low-temperature refrigerant in the heat exchange path of the evaporator, so that moisture in the air is condensed when cold, and discharged from a condensate pipe of the vehicle. Then the dried air exchanges heat with a high-temperature coolant in the heat exchange path of the heater core downstream for heating, and is finally supplied to the passenger compartment through the air outlet of the passenger compartment. In other words, when the first circulation loop and the third circulation loop operate simultaneously, the air in the air supply duct can be first dehumidified and then heated, and a heating and dehumidification function of the passenger compartment can be finally realized.

In addition, in the heating and dehumidification mode of the passenger compartment, the heater may be turned on or off, which may be specifically determined based on a temperature requirement of the passenger compartment. This is not limited in this application. It is worth mentioning that, when the heater is in an on state, a heating temperature of the heater can be controlled by adjusting a power of the heater, so that a temperature of the passenger compartment can be more accurately regulated.

In some possible implementation solutions, in the heating and dehumidification mode of the passenger compartment, if the electric drive has a heat dissipation requirement, the third pump may be turned on, and the seventh connecting member of the second valve body connects the seventh port b7 of the second valve body to the eighth port b8 of the second valve body, so that the eighth circulation loop formed by connecting the radiator, the third pump, and the heat exchange path of the electric drive also enters an operating state. For an operating process of the eighth circulation loop, reference may be made to the related descriptions in the electric drive free cooling mode. Details are not described herein again.

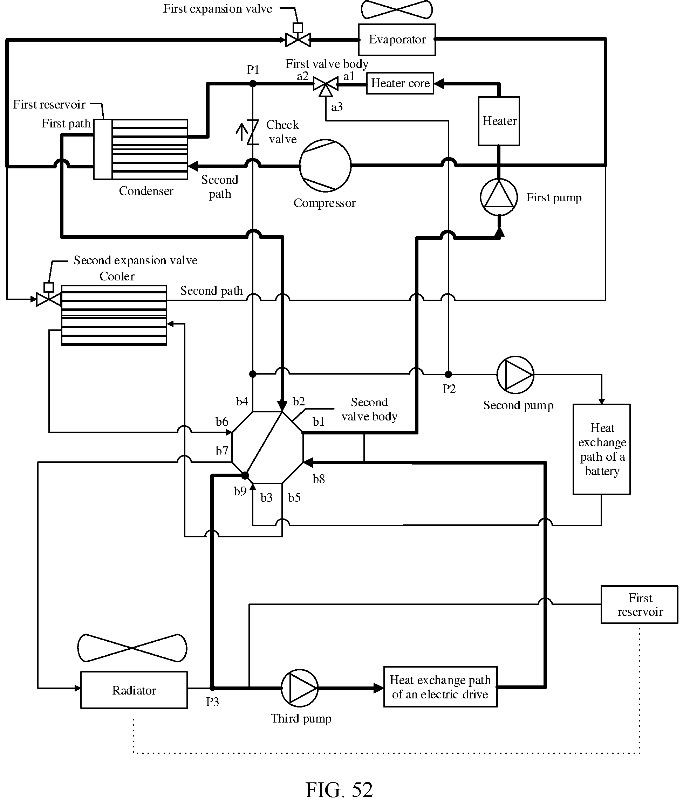

FIG. 52 is another diagram in which the thermal management system 5 shown in FIG. 39 operates in the heating and dehumidification mode. Refer to FIG. 52. This implementation solution is applicable to a scenario in which the passenger compartment has a heating and dehumidification requirement, and the battery has no cooling or heating requirement. In this mode, the compressor, the first expansion valve, the first pump and/or the third pump are turned on; and the second expansion valve and the second pump are turned off. When the first port a1 of the first valve body is connected to the second port a2 of the first valve body, the tenth connecting member of the second valve body connects the second port b2 of the second valve body to the ninth port b9 of the second valve body, and the eleventh connecting member connects the first port b1 of the second valve body to the eighth port b8 of the second valve body, the first circulation loop (a loop formed by connecting the compressor, the second path of the condenser, the first expansion valve, and the evaporator) and the twelfth circulation loop (a loop formed by connecting the first path of the condenser, the third pump, the heat exchange path of the electric drive, the first pump, the heater, and the heater core) operate simultaneously.

In the twelfth circulation loop, at least one of the first pump and the third pump is turned on to drive a coolant to circulate through the twelfth circulation loop. A temperature of a coolant in the first path of the condenser increases after the coolant exchanges heat with a refrigerant in the second path of the condenser. Then the coolant flows to the heat exchange path of the electric drive through the second port b2 of the second valve body and the ninth port b9 of the second valve body. The temperature of the coolant increases after the coolant exchanges heat with the electric drive in the heat exchange path of the electric drive. Then, the coolant reaches the heater through the eighth port b8 of the second valve body and the first port b1 of the second valve body, returns to the first path of the condenser through the heater and the heater core, and exchanges heat with a high-temperature refrigerant in the second path of the condenser. In this way, a cycle is completed. In this process, the temperature of the coolant increases after the coolant exchanges, in the first path of the condenser, heat with the refrigerant in the second path of the condenser for the first time. Then the coolant enters the heat exchange path of the electric drive. Because the temperature of the coolant in the heat exchange path of the electric drive is lower than a temperature of the electric drive, the coolant can further exchange heat with the electric drive in the heat exchange path of the electric drive. In this case, the electric drive implements heat dissipation and cooling by transferring heat to the coolant, and the temperature of the coolant further increases by absorbing heat from the electric drive. It can be seen that, based on the twelfth circulation loop, waste heat generated during operation of the electric drive can be fully used, to reduce energy waste of the vehicle.

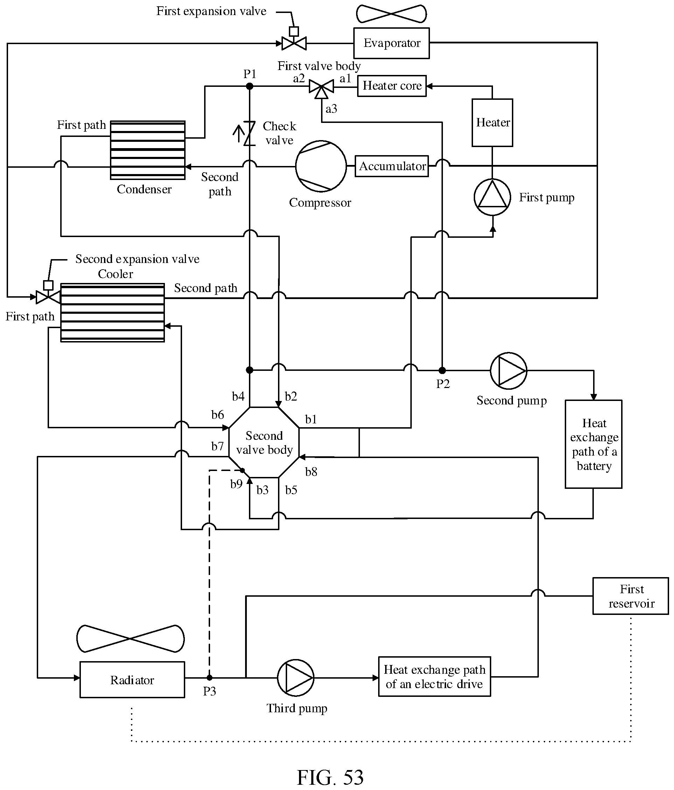

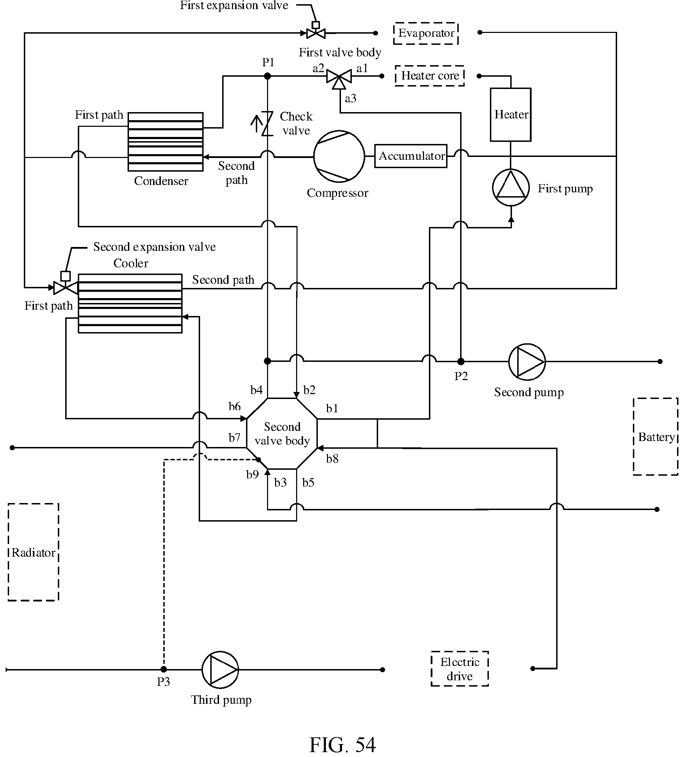

FIG. 53 is a diagram of a connection manner of another thermal management system 5 in a vehicle according to an embodiment of this application. FIG. 54 is a diagram of a structure of the thermal management system 5 shown in FIG. 53. Refer to FIG. 53 and FIG. 54 together. In this embodiment, the thermal management system may include a thermal management assembly, a compressor, a first condenser, a first expansion valve, a second expansion valve, a cooler, a first pump, a second pump, a third pump, and the like. For structures and arrangement manners of the foregoing components, reference may be made to the embodiment shown in FIG. 39. Therefore, details of these components are not described herein again.

Different from the embodiment shown in FIG. 39, in this embodiment of this application, the thermal management system further includes an accumulator. The accumulator can be disposed at an inlet of the compressor to separate a liquid refrigerant at the inlet of the compressor, so as to reduce content of a liquid refrigerant entering the compressor; and can also store an excess refrigerant to meet requirements of the thermal management system for refrigerants in different operating modes, so as to keep refrigerants/a refrigerant in a first circulation loop and/or a second circulation loop always at a better flow rate, and improve operation reliability and stability of the thermal management system.

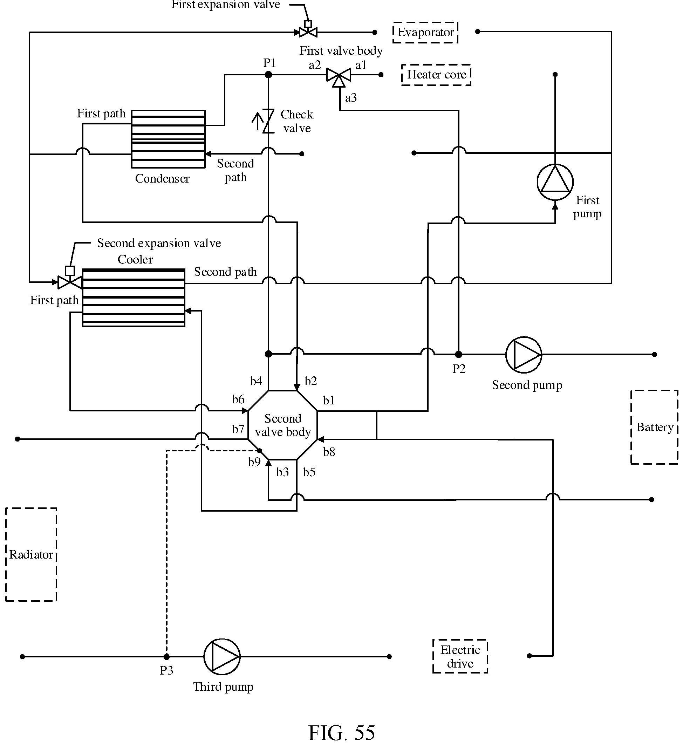

FIG. 55 is a diagram of another structure of the thermal management system 5 shown in FIG. 53. Refer to FIG. 55. In this embodiment, the thermal management system may include a thermal management assembly, a first condenser, a first expansion valve, a second expansion valve, a cooler, a first pump, a second pump, a third pump, and the like. Structures and arrangement manners of the foregoing components are basically the same as those in the embodiment shown in FIG. 54. Details of these components are not described herein again. A difference is that the thermal management system in this embodiment of this application does not include a compressor, that is, the compressor may be disposed independently of the foregoing components. Decoupling of the compressor from the foregoing components of the thermal management system is beneficial to reducing arrangement difficulty of the thermal management system and the compressor in the vehicle.

In the embodiments shown in FIG. 53 to FIG. 55, the thermal management system also has eleven circulation loops in the embodiment shown in FIG. 39, and one or more circulation loops of the thermal management system can be connected by adjusting connection states of ports of the first valve body and the second valve body, so that the thermal management system achieves a plurality of operating modes such as a simultaneous passenger compartment and battery cooling mode, a passenger compartment-only cooling mode, a battery-only cooling mode, a battery free cooling mode, an electric drive free cooling mode, a simultaneous passenger compartment and battery heating mode, a passenger compartment-only heating mode, a battery-only heating mode, and a heating and dehumidification mode. For a specific operating process of each operating mode, reference may be made to the descriptions in the foregoing embodiments. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A thermal management assembly, comprising a first valve body and a second valve body, wherein the first valve body comprises a first port, a second port, and a third port; the second valve body comprises a first port, a second port, a third port, and a fourth port; a valve core is disposed in the first valve body, and the valve core is configured to: connect the first port of the first valve body to the second port of the first valve body and/or connect the first port of the first valve body to the third port of the first valve body; a first connecting member is disposed between the first port of the second valve body and the second port of the second valve body, and the first connecting member is configured to connect the first port of the second valve body to the second port of the second valve body or disconnect the first port of the second valve body from the second port of the second valve body; and a second connecting member is disposed between the third port of the second valve body and the fourth port of the second valve body, and the second connecting member is configured to connect the third port of the second valve body to the fourth port of the second valve body or disconnect the third port of the second valve body from the fourth port of the second valve body; and
the first port of the first valve body and the third port of the first valve body are separately connected to a heat exchange path of a battery, the second port of the first valve body is connected to the first port of the second valve body, the second port of the second valve body and the third port of the second valve body are separately connected to a first path of a cooler, and the fourth port of the second valve body is connected to the third port of the first valve body.

2. The thermal management assembly according to claim 1, wherein the second valve body further comprises a fifth port and a sixth port; a third connecting member is disposed between the fifth port of the second valve body and the third port of the second valve body, and the third connecting member is configured to connect the fifth port of the second valve body to the third port of the second valve body or disconnect the fifth port of the second valve body from the third port of the second valve body; and a fourth connecting member is disposed between the sixth port of the second valve body and the second port of the second valve body, and the fourth connecting member is configured to connect the sixth port of the second valve body to the second port of the second valve body or disconnect the sixth port of the second valve body from the second port of the second valve body; and
the fifth port of the second valve body and the sixth port of the second valve body are separately connected to a first path assembly formed by connecting a heat exchange path of a radiator and a heat exchange path of an electric drive.

3. The thermal management assembly according to claim 2, wherein a fifth connecting member is disposed between the fifth port of the second valve body and the sixth port of the second valve body, and the fifth connecting member is configured to connect the fifth port of the second valve body to the sixth port of the second valve body or disconnect the fifth port of the second valve body from the sixth port of the second valve body.

4. The thermal management assembly according to claim 2 or 3, wherein the second valve body further comprises a seventh port; and a sixth connecting member is disposed between the seventh port of the second valve body and the third port of the second valve body, and the sixth connecting member is configured to connect the seventh port of the second valve body to the third port of the second valve body or disconnect the seventh port of the second valve body from the third port of the second valve body; and
the sixth port of the second valve body and the seventh port of the second valve body are separately connected to the heat exchange path of the electric drive.

5. The thermal management assembly according to any one of claims 2 to 4, wherein a seventh connecting member is disposed between the fourth port of the second valve body and the sixth port of the second valve body, and the seventh connecting member is configured to connect the fourth port of the second valve body to the sixth port of the second valve body or disconnect the fourth port of the second valve body from the sixth port of the second valve body; and
the sixth port of the second valve body and the fourth port of the second valve body are configured to connect the heat exchange path of the electric drive to the third port of the first valve body.

6. The thermal management assembly according to any one of claims 1 to 5, wherein the second valve body further comprises an eighth port and a ninth port; an eighth connecting member is disposed between the eighth port of the second valve body and the fourth port of the second valve body, and the eighth connecting member is configured to connect the eighth port of the second valve body to the fourth port of the second valve body or disconnect the eighth port of the second valve body from the fourth port of the second valve body; and a ninth connecting member is disposed between the ninth port of the second valve body and the first port of the second valve body, and the ninth connecting member is configured to connect the ninth port of the second valve body to the first port of the second valve body or disconnect the ninth port of the second valve body from the first port of the second valve body; and
the eighth port of the second valve body and the ninth port of the second valve body are separately connected to a first path of a first condenser.

7. The thermal management assembly according to any one of claims 1 to 6, wherein the first valve body is disposed between an outlet of the heat exchange path of the battery and the first port of the second valve body, the first port of the first valve body is connected to the outlet of the heat exchange path of the battery, the second port of the first valve body is connected to the first port of the second valve body, and the third port of the first valve body is connected to an inlet of the heat exchange path of the battery.

8. The thermal management assembly according to any one of claims 1 to 6, wherein the first valve body is disposed between an inlet of the heat exchange path of the battery and the fourth port of the second valve body, the first port of the first valve body is connected to the inlet of the heat exchange path of the battery, the second port of the first valve body is connected to the fourth port of the second valve body, and the third port of the first valve body is connected to an outlet of the heat exchange path of the battery.

9. The thermal management assembly according to any one of claims 1 to 8, wherein the first connecting member and the second connecting member are an integrated structure; or the first connecting member and the second connecting member are independent of each other in structure.

10. The thermal management assembly according to any one of claims 1 to 9, wherein the first valve body is an electric three-way valve.

11. A thermal management system, comprising a compressor, a first condenser, a first expansion valve, a second expansion valve, a cooler, a first pump, a second pump, a third pump, and the thermal management assembly according to any one of claims 1 to 10, wherein the first condenser has a first path and a second path that are separated from each other, and the cooler has a first path and a second path that are separated from each other; and
an inlet of the first path of the first condenser is connected to an outlet of a heat exchange path of a heater core, and an outlet of the first path of the first condenser is connected to an inlet of the heat exchange path of the heater core; an inlet of the second path of the first condenser is connected to an outlet of the compressor, and an outlet of the second path of the first condenser is separately connected to an inlet of the first expansion valve and an inlet of the second expansion valve; an outlet of the first expansion valve is connected to an inlet of the compressor through an evaporator, and an outlet of the second expansion valve is connected to the inlet of the compressor through the second path of the cooler; and an inlet of the second path of the cooler is connected to a second port of a second valve body, and an outlet of the second path of the cooler is connected to a third port of the second valve body;
the first pump is connected to the heat exchange path of the heater core;
the second pump is connected to a heat exchange path of a battery; and
the third pump is connected to a heat exchange path of an electric drive.

12. A thermal management system, comprising a first condenser, a first expansion valve, a second expansion valve, a cooler, a first pump, a second pump, a third pump, and the thermal management assembly according to any one of claims 1 to 10, wherein the first condenser has a first path and a second path that are separated from each other, and the cooler has a first path and a second path that are separated from each other; and
an outlet of the first path of the first cooler is connected to an inlet of a heat exchange path of a heater core, and an inlet of the first path of the first cooler is connected to an outlet of the heat exchange path of the heater core; an inlet of the second path of the first condenser is connected to an outlet of a compressor, and an outlet of the second path of the first condenser is separately connected to an inlet of the first expansion valve and an inlet of the second expansion valve; and an outlet of the first expansion valve is connected to an inlet of the compressor through an evaporator, and an outlet of the second expansion valve is connected to the inlet of the compressor through the second path of the cooler;
the first pump is connected to the heat exchange path of the heater core;
the second pump is connected to a heat exchange path of a battery; and
the third pump is connected to a heat exchange path of an electric drive.

13. The thermal management system according to claim 11 or 12, wherein the thermal management system further comprises a heater, an inlet of the heater is connected to the outlet of the first path of the first condenser, and an outlet of the heater is connected to the inlet of the heat exchange path of the heater core.

14. The thermal management system according to claim 13, wherein when the second valve body further comprises an eighth port and a ninth port, the outlet of the heater is further connected to the eighth port of the second valve body, and the inlet of the first path of the first condenser is further connected to the ninth port of the second valve body.

15. The thermal management system according to claim 14, wherein the first pump is disposed between the outlet of the heater and the inlet of the heat exchange path of the heater core.

16. The thermal management system according to claim 14 or 15, wherein the thermal management system further comprises a first check valve, an inlet of the first check valve is connected to the outlet of the heat exchange path of the heater core, and an outlet of the first check valve is connected to the inlet of the first path of the first condenser.

17. The thermal management system according to any one of claims 11 to 16, wherein the second pump is disposed between a third port of a first valve body and an inlet of the heat exchange path of the battery; or the second pump is disposed between an outlet of the heat exchange path of the battery and a first port of a first valve body.

18. The thermal management system according to any one of claims 11 to 17, wherein the thermal management system further comprises a first switch valve, a second switch valve, a second check valve, and a third check valve;
the first switch valve is disposed between the outlet of the compressor and the inlet of the second path of the first condenser;
the second switch valve is disposed between the outlet of the compressor and an inlet of a heat exchange path of a second condenser;
an inlet of the second check valve is connected to the outlet of the second path of the first condenser, and an outlet of the second check valve is separately connected to the inlet of the first expansion valve and the inlet of the second expansion valve; and
an inlet of the third check valve is connected to an outlet of the heat exchange path of the second condenser, and an outlet of the second check valve is separately connected to the inlet of the first expansion valve and the inlet of the second expansion valve.

19. The thermal management system according to any one of claims 11 to 18, wherein the thermal management system further comprises a first reservoir, and the first reservoir is disposed at the outlet of the second path of the first condenser.

20. The thermal management system according to any one of claims 11 to 18, wherein the thermal management system further comprises an accumulator, and the accumulator is disposed at the inlet of the compressor.

21. A thermal management assembly, comprising a first valve body and a second valve body, wherein a valve core is disposed in the first valve body, and the valve core is configured to: connect a first port of the first valve body to a second port of the first valve body and/or connect the first port of the first valve body to a third port of the first valve body; a first connecting member is disposed between a first port of the second valve body and a second port of the second valve body, and the first connecting member is configured to connect the first port of the second valve body to the second port of the second valve body or disconnect the first port of the second valve body from the second port of the second valve body; and a second connecting member is disposed between a third port of the second valve body and a fourth port of the second valve body, and the second connecting member is configured to connect the third port of the second valve body to the fourth port of the second valve body or disconnect the third port of the second valve body from the fourth port of the second valve body;
the first port of the first valve body is connected to an outlet of a heat exchange path of a heater core, the second port of the first valve body is connected to an inlet of a first path of a condenser, and the third port of the first valve body is connected to an inlet of a heat exchange path of a battery; and
the first port of the second valve body is connected to an inlet of the heat exchange path of the heater core, the second port of the second valve body is connected to an outlet of the first path of the condenser, the third port of the second valve body is connected to an outlet of the heat exchange path of the battery, and the fourth port of the second valve body is separately connected to the second port of the first valve body and the third port of the first valve body.

22. The thermal management assembly according to claim 21, wherein the second valve body further comprises a fifth port and a sixth port; a third connecting member is disposed between the fifth port of the second valve body and the third port of the second valve body, and the third connecting member is configured to connect the fifth port of the second valve body to the third port of the second valve body or disconnect the fifth port of the second valve body from the third port of the second valve body; and a fourth connecting member is disposed between the sixth port of the second valve body and the fourth port of the second valve body, and the fourth connecting member is configured to connect the sixth port of the second valve body to the fourth port of the second valve body or disconnect the sixth port of the second valve body from the fourth port of the second valve body; and
the fifth port of the second valve body and the sixth port of the second valve body are separately connected to a first path of a cooler.

23. The thermal management assembly according to claim 22, wherein the second valve body further comprises a seventh port and an eighth port; a fifth connecting member is disposed between the seventh port of the second valve body and the sixth port of the second valve body, and the fifth connecting member is configured to connect the seventh port of the second valve body to the sixth port of the second valve body or disconnect the seventh port of the second valve body from the sixth port of the second valve body; and a sixth connecting member is disposed between the eighth port of the second valve body and the fifth port of the second valve body, and the sixth connecting member is configured to connect the eighth port of the second valve body to the fifth port of the second valve body or disconnect the eighth port of the second valve body from the fifth port of the second valve body; and
the seventh port of the second valve body and the eighth port of the second valve body are separately connected to a first path assembly formed by connecting a heat exchange path of a radiator and a heat exchange path of an electric drive.

24. The thermal management assembly according to claim 23, wherein a seventh connecting member is disposed between the seventh port of the second valve body and the eighth port of the second valve body, and the seventh connecting member is configured to connect the seventh port of the second valve body to the eighth port of the second valve body or disconnect the seventh port of the second valve body from the eighth port of the second valve body.

25. The thermal management assembly according to claim 23 or 24, wherein a seventh connecting member is disposed between the fourth port of the second valve body and the eighth port of the second valve body, and the seventh connecting member is configured to connect the fourth port of the second valve body to the eighth port of the second valve body or disconnect the fourth port of the second valve body from the eighth port of the second valve body; and
the fourth port of the second valve body and the eighth port of the second valve body are configured to connect the heat exchange path of the electric drive to the heat exchange path of the battery.

26. The thermal management assembly according to any one of claims 23 to 25, wherein the second valve body further comprises a ninth port, an eighth connecting member is disposed between the ninth port of the second valve body and the sixth port of the second valve body, and the eighth connecting member is configured to connect the ninth port of the second valve body to the sixth port of the second valve body or disconnect the ninth port of the second valve body from the sixth port of the second valve body; and
the ninth port of the second valve body and the eighth port of the second valve body are separately connected to the heat exchange path of the electric drive.

27. The thermal management assembly according to any one of claims 21 to 26, wherein the first connecting member and the second connecting member are an integrated structure; or the first connecting member and the second connecting member are independent of each other in structure.

28. The thermal management assembly according to any one of claims 21 to 27, wherein the first valve body is an electric three-way valve.

29. A thermal management system, comprising a compressor, a condenser, a first expansion valve, a second expansion valve, a cooler, a first pump, a second pump, a third pump, and the thermal management assembly according to any one of claims 21 to 28, wherein the condenser has a first path and a second path that are separated from each other, and the cooler has a first path and a second path that are separated from each other; and
an inlet of the first path of the condenser is connected to a second port of a first valve body, and an outlet of the first path of the condenser is connected to a second port of a second valve body; an inlet of the second path of the condenser is connected to an outlet of the compressor, and an outlet of the second path of the condenser is separately connected to an inlet of the first expansion valve and an inlet of the second expansion valve; an outlet of the first expansion valve is connected to an inlet of the compressor through an evaporator, and an outlet of the second expansion valve is connected to the inlet of the compressor through the second path of the cooler;
the first pump is connected to a heat exchange path of a heater core;
the second pump is connected to a heat exchange path of a battery; and
the third pump is connected to a heat exchange path of an electric drive.

30. A thermal management system, comprising a condenser, a first expansion valve, a second expansion valve, a cooler, a first pump, a second pump, a third pump, and the thermal management assembly according to any one of claims 21 to 28, wherein the condenser has a first path and a second path that are separated from each other, and the cooler has a first path and a second path that are separated from each other; and
an inlet of the first path of the condenser is connected to a second port of a first valve body, and an outlet of the first path of the condenser is connected to a second port of a second valve body; an inlet of the second path of the condenser is connected to an outlet of a compressor, and an outlet of the second path of the condenser is separately connected to an inlet of the first expansion valve and an inlet of the second expansion valve; an outlet of the first expansion valve is connected to an inlet of the compressor through an evaporator, and an outlet of the second expansion valve is connected to the inlet of the compressor through the second path of the cooler;
the first pump is connected to a heat exchange path of a heater core;
the second pump is connected to a heat exchange path of a battery; and
the third pump is connected to a heat exchange path of an electric drive.

31. The thermal management system according to claim 29 or 30, wherein the thermal management system further comprises a heater, an inlet of the heater is connected to a first port of the second valve body, and an outlet of the heater is connected to an inlet of the heat exchange path of the heater core.

32. The thermal management system according to any one of claims 29 to 31, wherein the thermal management system further comprises a check valve, an inlet of the check valve is connected to a fourth port of the second valve body, and an outlet of the check valve is connected to the second port of the first valve body.

33. The thermal management system according to any one of claims 29 to 32, wherein the first pump is disposed between the first port of the second valve body and the inlet of the heat exchange path of the heater core; or the first pump is disposed between the second port of the first valve body and the inlet of the first path of the condenser.

34. The thermal management system according to any one of claims 29 to 33, wherein the second pump is disposed between the fourth port of the second valve body and an inlet of the heat exchange path of the battery; or the second pump is disposed between an outlet of the heat exchange path of the battery and a third port of the second valve body.

35. The thermal management system according to any one of claims 29 to 33, wherein when the second valve body comprises a seventh port and an eighth port, the seventh port of the second valve body is connected to an inlet of a radiator, an inlet of the third pump is connected to an outlet of the radiator, an outlet of the third pump is connected to an inlet of the heat exchange path of the electric drive, and the eighth port of the second valve body is connected to an outlet of the heat exchange path of the electric drive.

36. The thermal management system according to claim 35, wherein when the second valve body comprises a ninth port, the ninth port of the second valve body is connected to the inlet of the third pump.

37. The thermal management system according to any one of claims 29 to 36, wherein the thermal management system further comprises a first reservoir, and the first reservoir is disposed at the outlet of the second path of the condenser.

38. The thermal management system according to any one of claims 29 to 36, wherein the thermal management system further comprises an accumulator, and the accumulator is disposed at the inlet of the compressor.

39. A vehicle, comprising a passenger compartment, a battery, an electric drive, and the thermal management system according to any one of claims 11 to 20, or comprising the thermal management system according to any one of claims 29 to 38, wherein the thermal management system is used to perform thermal management on the passenger compartment, the battery, and the electric drive.
